# EUROPEAN PATENT APPLICATION

(11) **EP 4 792 661 A1**
(43) Date of publication of application: **19.08.2026**
(21) Application number: 24877212.1
(22) Date of filing: 09.10.2024
(51) Int. Cl.: A23L 27/10, A23C 9/13, A23L 27/00, A23L 27/20

(54) **FOOD COMPOSITION AND METHOD FOR PRODUCING SAME**

(30) Priority: 11.10.2023 JP 2023175723
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: MORI, Shoya, Handa-shi, Aichi 475-8585 (JP); IWAMURA, Sakura, Handa-shi, Aichi 475-8585 (JP); TSUJI, Motonori, Misato-shi, Saitama 341-0037 (JP)
(74) Representative: Hasegawa, Kan
(86) International application number: PCT/JP2024/036180
(87) International publication number: WO 2025/079617

(57) **Abstract**

Provided is a technique for suppressing a sour taste felt on the tongue when a food composition containing an acid is orally ingested. A food composition satisfying the following requirements (a) and (b): (a) an acidity is 0.02 w/w% or more; and (b) the following requirements (i) and/or (ii): (i) a ratio of a content of isochlorogenic acid (ppm by mass) to the acidity (w/w%) is 0.5 or more; and/or (ii) a ratio of a content of xanthohumol D (ppb by mass) to the acidity (w/w%) is 0.00001 or more.

## Description

### Technical Field

The present invention relates to a food composition, a method for producing the same, and the like.

### Background Art

Organic acids such as acetic acid, lactic acid, and citric acid are ingested through various food compositions, supplements, and the like as seasoning components, for the purpose of bacteriostatic action thereof, and the like, and with an expectation of an action useful for health.

However, in a case where the organic acid as described above is contained in a food or beverage, the food or beverage has a sharp acid smell or sour taste, which may make them undesirable to consume.

Therefore, techniques have been developed to facilitate oral intake of organic acids. For example, PTL 1 discloses a method for suppressing an acetic acid smell of an acetic acid-containing food or beverage, characterized by adding hexanal as a technique for suppressing an acid smell of acetic acid. Further, PTL 2 discloses an acid stimulation inhibitor containing cardamonin as an active ingredient. Further, PTL 3 discloses a technique for suppressing a sour taste caused by organic acids produced by lactic acid bacterium fermentation in yoghurt during low-temperature storage, using an extract obtained from dried tomato with an aqueous solution at 15 to 120°C.

### Citation List

### Patent Literature

PTL 1: JP 2010-124696 A
PTL 2: JP 2022-133939 A
PTL 3: JP 2012-90586 A

However, in the technique described in PTL 1, although suppression of the acetic acid smell can be achieved, it is not sufficient to suppress a sour taste of acetic acid, lactic acid, citric acid, or the like, and the technique cannot be generally used for various foods and beverages. Further, although the technique described in PTL 2 is useful as a technique for suppressing throat irritation when acetic acid is ingested, since such throat irritation is a characteristic specific to acetic acid, the technique cannot be generally used for various foods and beverages. Further, the technique described in PTL 3 is a technique for suppressing the sour taste generated when yoghurt is stored, and cannot be generally used for various foods and beverages.

In view of these, the present inventors have considered that a technique, which can solve the problem common to various organic acids during ingestion, can be generally adopted, and therefore have studied the problem that occurs when organic acids are orally ingested. As a result, the present inventors have conceived that a sour taste is felt on the tongue when a food composition containing an acid is ingested, regardless of the type of the acid, and this is important as a factor contributing to avoidance of the ingestion of the acid. Therefore, the present inventors decided to study a technique capable of suppressing the sour taste felt on the tongue.

### Summary of Invention

### Technical Problem

In other words, an object of the present invention is to provide a technique for suppressing a sour taste felt on the tongue when a food composition containing an acid is orally ingested.

### Solution to Problem

As a result of intensive studies, the present inventors have found that isochlorogenic acid and xanthohumol D can suppress a sour taste felt on the tongue, and have completed the present invention. In other words, the present invention includes the following aspects.

Item 1. A food composition satisfying the following requirements (a) and (b):
(a) an acidity is 0.02 w/w% or more, 0.03 w/w% or more, 0.04 w/w% or more, 0.05 w/w% or more, 0.06 w/w% or more, 0.07 w/w% or more, 0.08 w/w% or more, 0.09 w/w% or more, 0.10 w/w% or more, 0.15 w/w% or more, 0.17 w/w% or more, 0.20 w/w% or more, 0.25 w/w% or more, 0.27 w/w% or more, 0.30 w/w% or more, 0.35 w/w% or more, 0.40 w/w% or more, 0.45 w/w% or more, 0.50 w/w% or more, 0.55 w/w% or more, 0.60 w/w% or more, 0.70 w/w% or more, 0.80 w/w% or more, 0.90 w/w% or more, 1.00 w/w% or more, 1.10 w/w% or more, 1.20 w/w% or more, 1.30 w/w% or more, 1.40 w/w% or more, 1.50 w/w% or more, 1.60 w/w% or more, 1.70 w/w% or more, 1.80 w/w% or more, 1.90 w/w% or more, 2.00 w/w% or more, 2.10 w/w% or more, 2.20 w/w% or more, 2.30 w/w% or more, 2.40 w/w% or more, 2.50 w/w% or more, 2.60 w/w% or more, 2.70 w/w% or more, 2.80 w/w% or more, 2.90 w/w% or more, 3.00 w/w% or more, 4.00 w/w% or more, 5.00 w/w% or more, 6.00 w/w% or more, 7.00 w/w% or more, 8.00 w/w% or more, 9.00 w/w% or more, 10.00 w/w% or more, 11.00 w/w% or more, or 12.00 w/w% or more, and has an upper limit of, for example, 30.0 w/w% or less, 28.0 w/w% or less, 25.0 w/w% or less, 22.0 w/w% or less, 20.0 w/w% or less, 18.0 w/w% or less, 16.0 w/w% or less, 15.5 w/w% or less, 15.1 w/w% or less, 14.9 w/w% or less, 14.5 w/w% or less, 14.3 w/w% or less, 14.0 w/w% or less, 13.5 w/w% or less, 13.3 w/w% or less, 13.0 w/w% or less, 12.5 w/w% or less, 12.0 w/w% or less, 11.5 w/w% or less, 11.0 w/w% or less, 10.5 w/w% or less, 10.3 w/w% or less, 10.0 w/w% or less, 9.8 w/w% or less, 9.6 w/w% or less, 9.4 w/w% or less, 9.2 w/w% or less, 9.0 w/w% or less, 8.5 w/w% or less, 8.2 w/w% or less, 8.0 w/w% or less, 7.5 w/w% or less, 7.0 w/w% or less, 6.7 w/w% or less, 6.4 w/w% or less, 6.2 w/w% or less, 6.0 w/w% or less, 5.55 w/w% or less, 5.30 w/w% or less, 5.25 w/w% or less, 5.15 w/w% or less, 5.10 w/w% or less, 5.05 w/w% or less, 5.00 w/w% or less, 4.80 w/w% or less, 4.60 w/w% or less, 4.40 w/w% or less, 4.20 w/w% or less, 4.00 w/w% or less, 3.80 w/w% or less, 3.60 w/w% or less, 3.40 w/w% or less, 3.20 w/w% or less, 3.00 w/w% or less, 2.80 w/w% or less, 2.60 w/w% or less, 2.40 w/w% or less, 2.20 w/w% or less, 2.00 w/w% or less, 1.80 w/w% or less, 1.60 w/w% or less, 1.40 w/w% or less, 1.20 w/w% or less, 1.00 w/w% or less, 0.80 w/w% or less, 0.60 w/w% or less, or 0.40 w/w% or less, with a range of, for example, 0.02 to 30.0 w/w%, 0.05 to 25.0 w/w%, 0.08 to 22.0 w/w%, 0.10 to 20.0 w/w%, 0.12 to 18.0 w/w%, 0.14 to 17.5 w/w%, or 0.16 to 16.5 w/w%; and
(b) the following requirements (i) and/or (ii):
   (i) a ratio of the content of isochlorogenic acid (ppm by mass) to the acidity (w/w%) is 0.5 or more, 0.7 or more, 1.0 or more, 2.0 or more, 2.5 or more, 3.0 or more, 4.0 or more, 5.0 or more, 6.0 or more, 6.5 or more, 7.0 or more, 8.0 or more, 9.0 or more, 10 or more, 20 or more, 30 or more, 40 or more, 50 or more, 60 or more, 70 or more, 80 or more, 90 or more, 100 or more, 150 or more, 200 or more, 250 or more, 300 or more, 350 or more, 400 or more, 450 or more, 500 or more, 550 or more, 600 or more, 650 or more, 700 or more, 750 or more, 800 or more, 850 or more, 900 or more, 1,000 or more, 1,100 or more, 1,200 or more, 1,300 or more, 1,400 or more, or 1,500 or more, and has an upper limit of, for example, 50,000 or less, 45,000 or less, 40,000 or less, 35,000 or less, 30,000 or less, 25,000 or less, 20,000 or less, 18,000 or less, 16,000 or less, 14,000 or less, 12,000 or less, 10,000 or less, 9,000 or less, 8,000 or less, 7,000 or less, 6,000 or less, 5,000 or less, 4,000 or less, 3,000 or less, 2,000 or less, 1,500 or less, 1,300 or less, 1,000 or less, 900 or less, 800 or less, 700 or less, 600 or less, 500 or less, 400 or less, 300 or less, 200 or less, 150 or less, 130 or less, 100 or less, 90 or less, 80 or less, 70 or less, 60 or less, 50 or less, 40 or less, 30 or less, 20 or less, 10 or less, or 8 or less, with a range of, for example, 0.5 to 50,000, 2.0 to 40,000, or 5 to 3,000; and/or
   (ii) the ratio of the content of xanthohumol D (ppb by mass) to the acidity (w/w%) is 0.00001 or more, 0.00002 or more, 0.00004 or more, 0.00006 or more, 0.00008 or more, 0.0001 or more, 0.0002 or more, 0.0004 or more, 0.0006 or more, 0.0008 or more, 0.001 or more, 0.002 or more, 0.01 or more, 0.02 or more, 0.04 or more, 0.06 or more, 0.08 or more, 0.10 or more, 0.12 or more, 0.14 or more, 0.16 or more, 0.18 or more, 0.20 or more, 0.25 or more, 0.28 or more, 0.32 or more, 0.34 or more, 0.36 or more, 0.38 or more, 0.40 or more, 0.50 or more, 0.60 or more, 0.70 or more, 0.80 or more, 0.90 or more, 1.0 or more, 1.2 or more, 1.4 or more, 1.6 or more, 1.8 or more, 2.0 or more, 2.2 or more, 2.4 or more, 2.6 or more, 2.8 or more, 3.0 or more, 4.0 or more, 6.0 or more, 8.0 or more, 10 or more, 12 or more, 14 or more, 16 or more, 18 or more, 20 or more, 22 or more, 24 or more, 26 or more, 28 or more, 30 or more, 40 or more, 60 or more, 80 or more, 100 or more, 150 or more, 180 or more, 200 or more, 240 or more, 280 or more, or 400 or more, and has an upper limit of, for example, 5,000 or less, 4,000 or less, 3,000 or less, 2,000 or less, 1,000 or less, 900 or less, 800 or less, 700 or less, 600 or less, 500 or less, 450 or less, 400 or less, 350 or less, 300 or less, 250 or less, 200 or less, 180 or less, 160 or less, 140 or less, 120 or less, 100 or less, 80 or less, 70 or less, 60 or less, 50 or less, 40 or less, 30 or less, 20 or less, or 10 or less, with a range of, for example, 0.00001 to 5,000, 0.002 to 5,000, 0.01 to 2,000, or 0.4 to 500.

Item 2. The food composition according to item 1, in which the ratio of the content of isochlorogenic acid (ppm by mass) to the acidity (w/w%) is 50,000 or less, 45,000 or less, 40,000 or less, 35,000 or less, 30,000 or less, 25,000 or less, 20,000 or less, 18,000 or less, 16,000 or less, 14,000 or less, 12,000 or less, 10,000 or less, 9,000 or less, 8,000 or less, 7,000 or less, 6,000 or less, 5,000 or less, 4,000 or less, 3,000 or less, 2,000 or less, 1,500 or less, 1,300 or less, 1,000 or less, 900 or less, 800 or less, 700 or less, 600 or less, 500 or less, 400 or less, 300 or less, 200 or less, 150 or less, 130 or less, 100 or less, 90 or less, 80 or less, 70 or less, 60 or less, 50 or less, 40 or less, 30 or less, 20 or less, 10 or less, or 8 or less.

Item 3. The food composition according to item 1 or 2, in which the ratio of the content of xanthohumol D (ppb by mass) to the acidity (w/w%) is 1,000 or less, 900 or less, 800 or less, 700 or less, 600 or less, 500 or less, 450 or less, 400 or less, 350 or less, 300 or less, 250 or less, 200 or less, 180 or less, 160 or less, 140 or less, 120 or less, 100 or less, 80 or less, 70 or less, 60 or less, 50 or less, 40 or less, 30 or less, 20 or less, or 10 or less.

Item 4. The food composition according to any one of items 1 to 3, in which the content of isochlorogenic acid is 3 to 70,000 ppm by mass, 5 to 50,000 ppm by mass, or 10 to 30,000 ppm by mass, and has an upper limit of, for example, 50,000 ppm by mass or less, 40,000 ppm by mass or less, 30,000 ppm by mass or less, 25,000 ppm by mass or less, 20,000 ppm by mass or less, 15,000 ppm by mass or less, 10,000 ppm by mass or less, 8,000 ppm by mass or less, 6,000 ppm by mass or less, 4,000 ppm by mass or less, 2,000 ppm by mass or less, 1,000 ppm by mass or less, 900 ppm by mass or less, 800 ppm by mass or less, 750 ppm by mass or less, 700 ppm by mass or less, 650 ppm by mass or less, 600 ppm by mass or less, 550 ppm by mass or less, 500 ppm by mass or less, 450 ppm by mass or less, 400 ppm by mass or less, 350 ppm by mass or less, 300 ppm by mass or less, 250 ppm by mass or less, 200 ppm by mass or less, 180 ppm by mass or less, 160 ppm by mass or less, 140 ppm by mass or less, 120 ppm by mass or less, 100 ppm by mass or less, 80 ppm by mass or less, 60 ppm by mass or less, 50 ppm by mass or less, 40 ppm by mass or less, 30 ppm by mass or less, 20 ppm by mass or less, or 10 ppm by mass or less, and has a lower limit of, for example, 5 ppm by mass or more, 6 ppm by mass or more, 7 ppm by mass or more, 8 ppm by mass or more, 9 ppm by mass or more, 10 ppm by mass or more, 12 ppm by mass or more, 14 ppm by mass or more, 16 ppm by mass or more, 18 ppm by mass or more, 20 ppm by mass or more, 25 ppm by mass or more, 30 ppm by mass or more, 35 ppm by mass or more, 40 ppm by mass or more, 45 ppm by mass or more, 50 ppm by mass or more, 55 ppm by mass or more, 60 ppm by mass or more, 65 ppm by mass or more, 70 ppm by mass or more, 75 ppm by mass or more, 80 ppm by mass or more, 85 ppm by mass or more, 90 ppm by mass or more, 95 ppm by mass or more, 100 ppm by mass or more, 120 ppm by mass or more, 140 ppm by mass or more, 160 ppm by mass or more, 180 ppm by mass or more, 200 ppm by mass or more, 220 ppm by mass or more, 240 ppm by mass or more, 260 ppm by mass or more, 280 ppm by mass or more, 300 ppm by mass or more, 320 ppm by mass or more, 340 ppm by mass or more, 360 ppm by mass or more, 380 ppm by mass or more, 400 ppm by mass or more, 420 ppm by mass or more, 440 ppm by mass or more, 460 ppm by mass or more, 480 ppm by mass or more, 500 ppm by mass or more, 520 ppm by mass or more, 530 ppm by mass or more, 540 ppm by mass or more, 560 ppm by mass or more, 580 ppm by mass or more, 600 ppm by mass or more, 800 ppm by mass or more, 1,000 ppm by mass or more, 1,200 ppm by mass or more, 1,400 ppm by mass or more, 1,600 ppm by mass or more, 1,800 ppm by mass or more, 2,000 ppm by mass or more, 2,500 ppm by mass or more, 3,000 ppm by mass or more, 3,500 ppm by mass or more, 4,000 ppm by mass or more, 4,500 ppm by mass or more, 5,000 ppm by mass or more, 6,000 ppm by mass or more, 7,000 ppm by mass or more, 8,000 ppm by mass or more, 9,000 ppm by mass or more, 10,000 ppm by mass or more, 15,000 ppm by mass or more, 20,000 ppm by mass or more, 25,000 ppm by mass or more, 30,000 ppm by mass or more, 35,000 ppm by mass or more, 40,000 ppm by mass or more, 45,000 ppm by mass or more, or 50,000 ppm by mass or more.

Item 5. The food composition according to any one of items 1 to 4, in which the content of xanthohumol D is 0.0001 to 10,000 ppb by mass, 0.001 to 5,000 ppb by mass, or 1 to 2,000 ppb by mass, and has an upper limit of, for example, 10,000 ppb by mass or less, 9,000 ppb by mass or less, 8,000 ppb by mass or less, 7,000 ppb by mass or less, 6,000 ppb by mass or less, 5,000 ppb by mass or less, 4,800 ppb by mass or less, 4,600 ppb by mass or less, 4,400 ppb by mass or less, 4,200 ppb by mass or less, 4,000 ppb by mass or less, 3,800 ppb by mass or less, 3,600 ppb by mass or less, 3,400 ppb by mass or less, 3,200 ppb by mass or less, 3,000 ppb by mass or less, 2,800 ppb by mass or less, 2,600 ppb by mass or less, 2,400 ppb by mass or less, 2,200 ppb by mass or less, 2,000 ppb by mass or less, 1,800 ppb by mass or less, 1,600 ppb by mass or less, 1,500 ppb by mass or less, 1,400 ppb by mass or less, 1,300 ppb by mass or less, 1,200 ppb by mass or less, 1,100 ppb by mass or less, 1,000 ppb by mass or less, 900 ppb by mass or less, 800 ppb by mass or less, 700 ppb by mass or less, 600 ppb by mass or less, 500 ppb by mass or less, 400 ppb by mass or less, 300 ppb by mass or less, 200 ppb by mass or less, 100 ppb by mass or less, 90 ppb by mass or less, 80 ppb by mass or less, 70 ppb by mass or less, 60 ppb by mass or less, 50 ppb by mass or less, 40 ppb by mass or less, 35 ppb by mass or less, 30 ppb by mass or less, or 20 ppb by mass or less, and has a lower limit of, for example, 0.0003 ppb by mass or more, 0.0006 ppb by mass or more, 0.001 ppb by mass or more, 0.003 ppb by mass or more, 0.006 ppb by mass or more, 0.0001 ppb by mass or more, 0.01 ppb by mass or more, 0.03 ppb by mass or more, 0.06 ppb by mass or more, 0.09 ppb by mass or more, 0.12 ppb by mass or more, 0.15 ppb by mass or more, 0.18 ppb by mass or more, 0.21 ppb by mass or more, 0.24 ppb by mass or more, 0.27 ppb by mass or more, 0.3 ppb by mass or more, 0.4 ppb by mass or more, 0.5 ppb by mass or more, 0.6 ppb by mass or more, 0.7 ppb by mass or more, 0.8 ppb by mass or more, 0.9 ppb by mass or more, 1.0 ppb by mass or more, 1.2 ppb by mass or more, 1.4 ppb by mass or more, 1.6 ppb by mass or more, 1.8 ppb by mass or more, 2.0 ppb by mass or more, 2.4 ppb by mass or more, 2.8 ppb by mass or more, 3.2 ppb by mass or more, 3.6 ppb by mass or more, 4.0 ppb by mass or more, 4.5 ppb by mass or more, 5.0 ppb by mass or more, 5.5 ppb by mass or more, 6.0 ppb by mass or more, 6.5 ppb by mass or more, 7.0 ppb by mass or more, 7.5 ppb by mass or more, 8.0 ppb by mass or more, 8.5 ppb by mass or more, 9.0 ppb by mass or more, 9.5 ppb by mass or more, 10 ppb by mass or more, 11 ppb by mass or more, 12 ppb by mass or more, 13 ppb by mass or more, 14 ppb by mass or more, 15 ppb by mass or more, 16 ppb by mass or more, 18 ppb by mass or more, 20 ppb by mass or more, 24 ppb by mass or more, 28 ppb by mass or more, 32 ppb by mass or more, 36 ppb by mass or more, 40 ppb by mass or more, 45 ppb by mass or more, 50 ppb by mass or more, 60 ppb by mass or more, 70 ppb by mass or more, 80 ppb by mass or more, 90 ppb by mass or more, 100 ppb by mass or more, 120 ppb by mass or more, 140 ppb by mass or more, 160 ppb by mass or more, 180 ppb by mass or more, 200 ppb by mass or more, 250 ppb by mass or more, 300 ppb by mass or more, 350 ppb by mass or more, 400 ppb by mass or more, 450 ppb by mass or more, 500 ppb by mass or more, 600 ppb by mass or more, 700 ppb by mass or more, 800 ppb by mass or more, or 900 ppb by mass or more.

Item 6. The food composition according to any one of items 1 to 5, in which the acidity is 20 w/w% or less, 18.0 w/w% or less, 16.0 w/w% or less, 15.5 w/w% or less, 15.1 w/w% or less, 14.9 w/w% or less, 14.5 w/w% or less, 14.3 w/w% or less, 14.0 w/w% or less, 13.5 w/w% or less, 13.3 w/w% or less, 13.0 w/w% or less, 12.5 w/w% or less, 12.0 w/w% or less, 11.5 w/w% or less, 11.0 w/w% or less, 10.5 w/w% or less, 10.3 w/w% or less, 10.0 w/w% or less, 9.8 w/w% or less, 9.6 w/w% or less, 9.4 w/w% or less, 9.2 w/w% or less, 9.0 w/w% or less, 8.5 w/w% or less, 8.2 w/w% or less, 8.0 w/w% or less, 7.5 w/w% or less, 7.0 w/w% or less, 6.7 w/w% or less, 6.4 w/w% or less, 6.2 w/w% or less, 6.0 w/w% or less, 5.55 w/w% or less, 5.30 w/w% or less, 5.25 w/w% or less, 5.15 w/w% or less, 5.10 w/w% or less, 5.05 w/w% or less, 5.00 w/w% or less, 4.80 w/w% or less, 4.60 w/w% or less, 4.40 w/w% or less, 4.20 w/w% or less, 4.00 w/w% or less, 3.80 w/w% or less, 3.60 w/w% or less, 3.40 w/w% or less, 3.20 w/w% or less, 3.00 w/w% or less, 2.80 w/w% or less, 2.60 w/w% or less, 2.40 w/w% or less, 2.20 w/w% or less, 2.00 w/w% or less, 1.80 w/w% or less, 1.60 w/w% or less, 1.40 w/w% or less, 1.20 w/w% or less, 1.00 w/w% or less, 0.80 w/w% or less, 0.60 w/w% or less, or 0.40 w/w% or less.

Item 7. The food composition according to any one of items 1 to 6, in which the pH at 20°C and 1 atm is 4.6 or less, 4.4 or less, 4.2 or less, 4.0 or less, 3.8 or less, 3.6 or less, 3.4 or less, 3.2 or less, 3.1 or less, or 2.9 or less, and has a lower limit of, for example, 1.6 or more, 1.7 or more, 1.8 or more, 1.9 or more, 2.0 or more, 2.05 or more, 2.10 or more, 2.15 or more, 2.2 or more, 2.3 or more, or 2.4 or more, with a range of, for example, 1.6 to 4.6, 1.7 to 3.8, 1.8 to 3.5, 1.9 to 3.4, 1.95 to 3.35, 2.00 to 3.30, or 2.05 to 3.30, or 2.10 to 3.10.

Item 8. The food composition according to any one of items 1 to 7, containing at least one organic acid selected from the group consisting of acetic acid, citric acid, lactic acid, malic acid, gluconic acid, tartaric acid, formic acid, propionic acid, butyric acid, valeric acid, isovaleric acid, caproic acid, and fumaric acid.

Item 9. The food composition according to any one of items 1 to 8, satisfying at least one requirement selected from the group consisting of the following requirements (c) to (e):
Requirement (c): the ratio of the content of acetic acid (w/w%) to the acidity (w/w%) in the food composition is 0.1 or more, 0.2 or more, 0.3 or more, 0.4 or more, 0.5 or more, 0.6 or more, 0.7 or more, 0.8 or more, or 0.9 or more, and has an upper limit of, for example, 0.99 or less, 0.95 or less, 0.8 or less, 0.7 or less, 0.6 or less, 0.5 or less, 0.4 or less, or 0.3 or less, with a range of, for example, 0.1 to 1;
Requirement (d): the ratio of the content of lactic acid (w/w%) to the acidity (w/w%) in the food composition is 0.1 or more, 0.2 or more, 0.3 or more, 0,4 or more, 0.5 or more, 0.6 or more, 0.7 or more, 0.8 or more, or 0.9 or more, and has an upper limit of, for example, 0.99 or less, 0.95 or less, 0.8 or less, 0.7 or less, 0.6 or less, 0.5 or less, 0.4 or less, or 0.3 or less, with a range of, for example, 0.1 to 1; and
Requirement (e): the ratio of the content of citric acid (w/w%) to the acidity (w/w%) in the food composition is 0.1 or more, 0.2 or more, 0.3 or more, 0,4 or more, 0.5 or more, 0.6 or more, 0.7 or more, 0.8 or more, or 0.9 or more, and has an upper limit of, for example, 0.99 or less, 0.95 or less, 0.8 or less, 0.7 or less, 0.6 or less, 0.5 or less, 0.4 or less, or 0.3 or less, with a range of, for example, 0.1 to 1.

Item 10. The food composition of any one of items 1 to 9, containing an extract of herbs.

Item 11. The food composition according to any one of items 1 to 10, in which the herb is at least one selected from the group consisting of hop, rosemary, chamomile, chrysanthemum, wormwood, and laurel.

Item 12. The food composition according to any one of items 1 to 11, in which, in a case where the food composition is measured by liquid chromatography mass spectrometry (an analytical method X), the ratio of a peak area of cohumulone to a peak area of xanthohumol D is 17 or less, 16 or less, 14 or less, 13 or less, 12 or less, 11 or less, 10 or less, 9 or less, 8 or less, 7 or less, 6 or less, 5 or less, 4 or less, 3 or less, 2 or less, or 1 or less, and has a lower limit of, for example, 0 or more, 0.02 or more, 0.04 or more, 0.06 or more, 0.08 or more, or 0.1 or more, with a range of, for example, 0 to 17, 0 to 16, 0 to 14, 0 to 8, or 0 to 5.

Item 13. The food composition according to any one of items 1 to 12, in which, in a case where the food composition is measured by liquid chromatography mass spectrometry (the analytical method X), the ratio of the peak area of gallic acid to the peak area of xanthohumol D is 24 or less, 23 or less, 22 or less, 21 or less, 20 or less, 18 or less, 16 or less, 14 or less, 13 or less, 12 or less, 11 or less, 10 or less, 9 or less, 8 or less, 7 or less, 6 or less, 5 or less, 4 or less, 3 or less, 2 or less, or 1 or less, and has a lower limit of, for example, 0 or more, 0.02 or more, 0.04 or more, 0.06 or more, 0.08 or more, or 0.1 or more, with a range of, for example, 0 to 24, 0 to 22, 0 to 20, 0 to 10, or 0 to 5.

Item 14. The food composition according to any one of items 1 to 13, in which, in a case where the food composition is measured by liquid chromatography mass spectrometry (the analytical method X), the ratio of the sum of the peak area of cohumulone and the peak area of gallic acid to the peak area of xanthohumol D is 42 or less, 40 or less, 38 or less, 36 or less, 34 or less, 32 or less, 30 or less, 28 or less, 26 or less, 24 or less, 22 or less, 20 or less, 18 or less, 16 or less, 14 or less, 12 or less, 10 or less, 9 or less, 8 or less, 7 or less, 6 or less, 5 or less, 4 or less, 3 or less, 2 or less, or 1 or less, and has a lower limit of, for example, 0 or more, 0.02 or more, 0.04 or more, 0.06 or more, 0.08 or more, or 0.1 or more, 0.2 or more, 0.3 or more, 0.4 or more, 0.5 or more, 0.6 or more, 0.7 or more, 0.8 or more, 0.9 or more, or 1.0 or more, with a range of, for example, 0 to 42, 0 to 40, 0 to 30, 0 to 15, 0 to 10, 0 to 8, or 0 to 5.

Item 15. The food composition according to any one of items 1 to 14, in which, in a case where the food composition is measured by liquid chromatography mass spectrometry (an analytical method X'), the ratio of the peak area of a component Z having a peak at m/z 603.17097 ± 0.02 eluted at around a retention time of 3.2 min, to the peak area of isochlorogenic acid in a case where the food composition is measured by liquid chromatography mass spectrometry (the analytical method X'), is 10 or less, 9 or less, 8 or less, 7 or less, 6 or less, 5 or less, 4 or less, 3 or less, 2 or less, 1 or less, or 0.1 or less, and has a lower limit of, for example, 0.0001 or more, 0.001 or more, or 0.01 or more, with a range of, for example, 0.0001 to 10.

Item 16. The food composition according to any one of items 1 to 15, containing fruit juice.

Item 17. The food composition according to any one of items 1 to 16, containing brewed vinegar.

Item 18. A method for producing a food composition, including adding isochlorogenic acid and/or xanthohumol D, so as to satisfy the following requirement (b) in a food composition in which the acidity is 0.02 w/w% or more, 0.03 w/w% or more, 0.04 w/w% or more, 0.05 w/w% or more, 0.06 w/w% or more, 0.07 w/w% or more, 0.08 w/w% or more, 0.09 w/w% or more, 0.10 w/w% or more, 0.15 w/w% or more, 0.17 w/w% or more, 0.20 w/w% or more, 0.25 w/w% or more, 0.27 w/w% or more, 0.30 w/w% or more, 0.35 w/w% or more, 0.40 w/w% or more, 0.45 w/w% or more, 0.50 w/w% or more, 0.55 w/w% or more, 0.60 w/w% or more, 0.70 w/w% or more, 0.80 w/w% or more, 0.90 w/w% or more, 1.00 w/w% or more, 1.10 w/w% or more, 1.20 w/w% or more, 1.30 w/w% or more, 1.40 w/w% or more, 1.50 w/w% or more, 1.60 w/w% or more, 1.70 w/w% or more, 1.80 w/w% or more, 1.90 w/w% or more, 2.00 w/w% or more, 2.10 w/w% or more, 2.20 w/w% or more, 2.30 w/w% or more, 2.40 w/w% or more, 2.50 w/w% or more, 2.60 w/w% or more, 2.70 w/w% or more, 2.80 w/w% or more, 2.90 w/w% or more, 3.00 w/w% or more, 4.00 w/w% or more, 5.00 w/w% or more, 6.00 w/w% or more, 7.00 w/w% or more, 8.00 w/w% or more, 9.00 w/w% or more, 10.00 w/w% or more, 11.00 w/w% or more, or 12.00 w/w% or more, and has an upper limit of, for example, 30.0 w/w% or less, 28.0 w/w% or less, 25.0 w/w% or less, 22.0 w/w% or less, 20.0 w/w% or less, 18.0 w/w% or less, 16.0 w/w% or less, 15.5 w/w% or less, 15.1 w/w% or less, 14.9 w/w% or less, 14.5 w/w% or less, 14.3 w/w% or less, 14.0 w/w% or less, 13.5 w/w% or less, 13.3 w/w% or less, 13.0 w/w% or less, 12.5 w/w% or less, 12.0 w/w% or less, 11.5 w/w% or less, 11.0 w/w% or less, 10.5 w/w% or less, 10.3 w/w% or less, 10.0 w/w% or less, 9.8 w/w% or less, 9.6 w/w% or less, 9.4 w/w% or less, 9.2 w/w% or less, 9.0 w/w% or less, 8.5 w/w% or less, 8.2 w/w% or less, 8.0 w/w% or less, 7.5 w/w% or less, 7.0 w/w% or less, 6.7 w/w% or less, 6.4 w/w% or less, 6.2 w/w% or less, 6.0 w/w% or less, 5.55 w/w% or less, 5.30 w/w% or less, 5.25 w/w% or less, 5.15 w/w% or less, 5.10 w/w% or less, 5.05 w/w% or less, 5.00 w/w% or less, 4.80 w/w% or less, 4.60 w/w% or less, 4.40 w/w% or less, 4.20 w/w% or less, 4.00 w/w% or less, 3.80 w/w% or less, 3.60 w/w% or less, 3.40 w/w% or less, 3.20 w/w% or less, 3.00 w/w% or less, 2.80 w/w% or less, 2.60 w/w% or less, 2.40 w/w% or less, 2.20 w/w% or less, 2.00 w/w% or less, 1.80 w/w% or less, 1.60 w/w% or less, 1.40 w/w% or less, 1.20 w/w% or less, 1.00 w/w% or less, 0.80 w/w% or less, 0.60 w/w% or less, or 0.40 w/w% or less, with a range of, for example, 0.02 to 30.0 w/w%, 0.05 to 25.0 w/w%, 0.08 to 22.0 w/w%, 0.10 to 20.0 w/w%, 0.12 to 18.0 w/w%, 0.14 to 17.5 w/w%, or 0.16 to 16.5 w/w%:
(b) the following requirements (i) and/or (ii):
(i) the ratio of the content of isochlorogenic acid (ppm by mass) to the acidity (w/w%) is 0.5 or more, 0.7 or more, 1.0 or more, 2.0 or more, more preferably 2.5 or more, 3.0 or more, 4.0 or more, 5.0 or more, 6.0 or more, 6.5 or more, 7.0 or more, 8.0 or more, 9.0 or more, 10 or more, 20 or more, 30 or more, 40 or more, 50 or more, or more, 60 or more, 70 or more, 80 or more, 90 or more, 100 or more, 150 or more, 200 or more, 250 or more, 300 or more, 350 or more, 400 or more, 450 or more, 500 or more, 550 or more, 600 or more, 650 or more, 700 or more, 750 or more, 800 or more, 850 or more, 900 or more, 1,000 or more, 1,100 or more, 1,200 or more, 1,300 or more, 1,400 or more, or 1,500 or more, and has an upper limit of, for example, 50,000 or less, 45,000 or less, 40,000 or less, 35,000 or less, 30,000 or less, 25,000 or less, 20,000 or less, 18,000 or less, 16,000 or less, 14,000 or less, 12,000 or less, 10,000 or less, 9,000 or less, 8,000 or less, 7,000 or less, 6,000 or less, 5,000 or less, 4,000 or less, 3,000 or less, 2,000 or less, 1,500 or less, 1,300 or less, 1,000 or less, 900 or less, 800 or less, 700 or less, 600 or less, 500 or less, 400 or less, 300 or less, 200 or less, 150 or less, 130 or less, 100 or less, 90 or less, 80 or less, 70 or less, 60 or less, 50 or less, 40 or less, 30 or less, 20 or less, 10 or less, or 8 or less, with a range of, for example, 0.5 to 50,000, 2.0 to 40,000, or 5 to 3,000; and/or
(ii) the ratio of the content of xanthohumol D (ppb by mass) to the acidity (w/w%) is 0.00001 or more, 0.00002 or more, 0.00004 or more, 0.00006 or more, 0.00008 or more, 0.0001 or more, 0.0002 or more, 0.0004 or more, 0.0006 or more, 0.0008 or more, 0.001 or more, 0.002 or more, 0.01 or more, 0.02 or more, 0.04 or more, 0.06 or more, 0.08 or more, 0.10 or more, 0.12 or more, 0.14 or more, 0.16 or more, 0.18 or more, 0.20 or more, 0.25 or more, 0.28 or more, 0.32 or more, 0.34 or more, 0.36 or more, 0.38 or more, 0.40 or more, 0.50 or more, 0.60 or more, 0.70 or more, 0.80 or more, 0.90 or more, 1.0 or more, 1.2 or more, 1.4 or more, 1.6 or more, 1.8 or more, 2.0 or more, 2.2 or more, 2.4 or more, 2.6 or more, 2.8 or more, 3.0 or more, 4.0 or more, 6.0 or more, 8.0 or more, 10 or more, 12 or more, 14 or more, 16 or more, 18 or more, 20 or more, 22 or more, 24 or more, 26 or more, 28 or more, 30 or more, 40 or more, 60 or more, 80 or more, 100 or more, 150 or more, 180 or more, 200 or more, 240 or more, 280 or more, or 400 or more, and has an upper limit of, for example, 5,000 or less, 4,000 or less, 3,000 or less, 2,000 or less, 1,000 or less, 900 or less, 800 or less, 700 or less, 600 or less, 500 or less, 450 or less, 400 or less, 350 or less, 300 or less, 250 or less, 200 or less, 180 or less, 160 or less, 140 or less, 120 or less, 100 or less, 80 or less, 70 or less, 60 or less, 50 or less, 40 or less, 30 or less, 20 or less, or 10 or less, with a range of, for example, 0.00001 to 5,000, 0.002 to 5,000, 0.01 to 2,000, or 0.4 to 500.

Item 19. A method for producing a food composition, including the following steps (A) to (C):
(A) a step of preparing a solvent in which the acidity is 0.2 w/w% or more, 0.3 w/w% or more, 0.5 w/w% or more, 1.0 w/w% or more, 1.5 w/w% or more, 2.0 w/w% or more, 3.0 w/w% or more, 4.0 w/w% or more, 4.3 w/w% or more, 5.0 w/w% or more, 6.0 w/w% or more, 7.0 w/w% or more, 8.0 w/w% or more, 10.0 w/w% or more, 11.0 w/w% or more, 12.0 w/w% or more, 13.0 w/w% or more, 14.0 w/w% or more, 15.0 w/w% or more, or 17.0 w/w% or more, and has an upper limit of, for example, 25.0 w/w% or less, 22.0 w/w% or less, 21.0 w/w% or less, 20.0 w/w% or less, 18.0 w/w% or less, 16.0 w/w% or less, 14.0 w/w% or less, 12.0 w/w% or less, 10.0 w/w% or less, 9.0 w/w% or less, 8.0 w/w% or less, 6.0 w/w% or less, or 4.0 w/w% or less, with a range of, for example, 0.2 to 30 w/w%;
(B) a step of adding at least one herb containing isochlorogenic acid and/or xanthohumol D to the solvent obtained in the step (A); and
(C) a step of removing the herb after keeping a mixture of the solvent and plant for 0.5 to 72 hours, starting from a point of time when the step (B) was performed, (with a lower limit of, for example, 1 hour or more, 2 hours or more, 3 hours or more, 4 hours or more, 6 hours or more, 8 hours or more, 10 hours or more, 12 hours or more, 14 hours or more, 16 hours or more, 18 hours or more, 20 hours or more, 22 hours or more, 24 hours or more, 26 hours or more, 28 hours or more, 32 hours or more, 40 hours or more, 48 hours or more, 54 hours or more, 60 hours or more, 64 hours or more, 72 hours or more, or 80 hours or more, and an upper limit of, for example, 70 hours or less, 64 hours or less, 60 hours or less, 54 hours or less, 48 hours or less, 40 hours or less, 36 hours or less, 32 hours or less, 28 hours or less, 24 hours or less, 18 hours or less, 14 hours or less, 12 hours or less, or 10 hours or less) at a temperature of higher than 0°C and 70°C or lower (with a lower limit of, for example, 4°C or higher, 8°C or higher, 12°C or higher, 16°C or higher, 20°C or higher, 24°C or higher, 30°C or higher, 36°C or higher, 40°C or higher, 46°C or higher, 48°C or higher, 50°C or higher, 52°C or higher, 54°C or higher, 56°C or higher, or 60°C or higher, and an upper limit of, for example, 80°C or lower, 75°C or lower, 70°C or lower, 66°C or lower, 62°C or lower, 60°C or lower, 54°C or lower, 50°C or lower, 48°C or lower, 44°C or lower, 40°C or lower, 36°C or lower, 34°C or lower, 30°C or lower, 24°C or lower, 20°C or lower, 16°C or lower, 14°C or lower, 10°C or lower, 8°C or lower, 7°C or lower, or 6°C or lower).

Item 20. The production method according to item 19 or 20, in which the ratio of the content of acetic acid (w/w%) to the acidity (w/w%) in the solvent is 0.1 or more, 0.2 or more, 0.2 or more, 0.3 or more, 0.4 or more, 0.5 or more, 0.6 or more, 0.7 or more, 0.8 or more, or 0.9 or more, and has an upper limit of, for example, 1 or less, or 0.95 or less, with a range of, for example, 0.1 to 1, and furthermore, the lower limit of the content of acetic acid is, for example, 0.20 w/w% or more, 0.25 w/w% or more, 0.27 w/w% or more, 0.30 w/w% or more, 0.35 w/w% or more, 0.40 w/w% or more, 0.45 w/w% or more, 0.50 w/w% or more, 0.55 w/w% or more, 0.60 w/w% or more, 0.70 w/w% or more, 0.80 w/w% or more, 0.90 w/w% or more, 1.00 w/w% or more, 1.10 w/w% or more, 1.20 w/w% or more, 1.30 w/w% or more, 1.40 w/w% or more, 1.50 w/w% or more, 1.60 w/w% or more, 1.70 w/w% or more, 1.80 w/w% or more, 1.90 w/w% or more, 2.00 w/w% or more, 2.10 w/w% or more, 2.20 w/w% or more, 2.30 w/w% or more, 2.40 w/w% or more, 2.50 w/w% or more, 2.60 w/w% or more, 2.70 w/w% or more, 2.80 w/w% or more, 2.90 w/w% or more, 3.00 w/w% or more, 4.00 w/w% or more, 5.00 w/w% or more, 6.00 w/w% or more, 7.00 w/w% or more, 8.00 w/w% or more, 9.00 w/w% or more, 10.00 w/w% or more, 11.00 w/w% or more, or 12.00 w/w% or more, and the upper limit thereof is, for example, 30.0 w/w% or less, 28.0 w/w% or less, 25.0 w/w% or less, 22.0 w/w% or less, 20.0 w/w% or less, 18.0 w/w% or less, 16.0 w/w% or less, 15.5 w/w% or less, 15.1 w/w% or less, 14.9 w/w% or less, 14.5 w/w% or less, 14.3 w/w% or less, 14.0 w/w% or less, 13.5 w/w% or less, 13.3 w/w% or less, 13.0 w/w% or less, 12.5 w/w% or less, 12.0 w/w% or less, 11.5 w/w% or less, 11.0 w/w% or less, 10.5 w/w% or less, 10.3 w/w% or less, or 10.0 w/w% or less, and the range thereof is, for example, 0.2 to 30 w/w%, 1.0 to 25 w/w%, 3.0 to 22 w/w%, or 5.0 to 18 w/w%.

Item 21. The production method according to item 19 or 20, further including the following step (D):
(D) a step of preparing a food composition by adding and incorporating the composition obtained in the step (C).

Item 22. The production method according to item 19 or 20, being a method for producing the food composition according to any one of items 1 to 17

Item 23. A method for making a sour taste of a food composition a moderate sour taste and/or a mild sour taste by preparing a food composition so as to satisfy the following requirements (a) and (b):
(a) an acidity is 0.02 w/w% or more, 0.03 w/w% or more, 0.04 w/w% or more, 0.05 w/w% or more, 0.06 w/w% or more, 0.07 w/w% or more, 0.08 w/w% or more, 0.09 w/w% or more, 0.10 w/w% or more, 0.15 w/w% or more, 0.17 w/w% or more, 0.20 w/w% or more, 0.25 w/w% or more, 0.27 w/w% or more, 0.30 w/w% or more, 0.35 w/w% or more, 0.40 w/w% or more, 0.45 w/w% or more, 0.50 w/w% or more, 0.55 w/w% or more, 0.60 w/w% or more, 0.70 w/w% or more, 0.80 w/w% or more, 0.90 w/w% or more, 1.00 w/w% or more, 1.10 w/w% or more, 1.20 w/w% or more, 1.30 w/w% or more, 1.40 w/w% or more, 1.50 w/w% or more, 1.60 w/w% or more, 1.70 w/w% or more, 1.80 w/w% or more, 1.90 w/w% or more, 2.00 w/w% or more, 2.10 w/w% or more, 2.20 w/w% or more, 2.30 w/w% or more, 2.40 w/w% or more, 2.50 w/w% or more, 2.60 w/w% or more, 2.70 w/w% or more, 2.80 w/w% or more, 2.90 w/w% or more, 3.00 w/w% or more, 4.00 w/w% or more, 5.00 w/w% or more, 6.00 w/w% or more, 7.00 w/w% or more, 8.00 w/w% or more, 9.00 w/w% or more, 10.00 w/w% or more, 11.00 w/w% or more, or 12.00 w/w% or more, and has an upper limit of, for example, 30.0 w/w% or less, 28.0 w/w% or less, 25.0 w/w% or less, 22.0 w/w% or less, 20.0 w/w% or less, 18.0 w/w% or less, 16.0 w/w% or less, 15.5 w/w% or less, 15.1 w/w% or less, 14.9 w/w% or less, 14.5 w/w% or less, 14.3 w/w% or less, 14.0 w/w% or less, 13.5 w/w% or less, 13.3 w/w% or less, 13.0 w/w% or less, 12.5 w/w% or less, 12.0 w/w% or less, 11.5 w/w% or less, 11.0 w/w% or less, 10.5 w/w% or less, 10.3 w/w% or less, 10.0 w/w% or less, 9.8 w/w% or less, 9.6 w/w% or less, 9.4 w/w% or less, 9.2 w/w% or less, 9.0 w/w% or less, 8.5 w/w% or less, 8.2 w/w% or less, 8.0 w/w% or less, 7.5 w/w% or less, 7.0 w/w% or less, 6.7 w/w% or less, 6.4 w/w% or less, 6.2 w/w% or less, 6.0 w/w% or less, 5.55 w/w% or less, 5.30 w/w% or less, 5.25 w/w% or less, 5.15 w/w% or less, 5.10 w/w% or less, 5.05 w/w% or less, 5.00 w/w% or less, 4.80 w/w% or less, 4.60 w/w% or less, 4.40 w/w% or less, 4.20 w/w% or less, 4.00 w/w% or less, 3.80 w/w% or less, 3.60 w/w% or less, 3.40 w/w% or less, 3.20 w/w% or less, 3.00 w/w% or less, 2.80 w/w% or less, 2.60 w/w% or less, 2.40 w/w% or less, 2.20 w/w% or less, 2.00 w/w% or less, 1.80 w/w% or less, 1.60 w/w% or less, 1.40 w/w% or less, 1.20 w/w% or less, 1.00 w/w% or less, 0.80 w/w% or less, 0.60 w/w% or less, or 0.40 w/w% or less, with a range of, for example, 0.02 to 30.0 w/w%, 0.05 to 25.0 w/w%, 0.08 to 22.0 w/w%, 0.10 to 20.0 w/w%, 0.12 to 18.0 w/w%, 0.14 to 17.5 w/w%, or 0.16 to 16.5 w/w%; and
(b) the following requirements (i) and/or (ii):
   (i) the ratio of the content of isochlorogenic acid (ppm by mass) to the acidity (w/w%) is 0.5 or more, 0.7 or more, 1.0 or more, 2.0 or more, more preferably 2.5 or more, 3.0 or more, 4.0 or more, 5.0 or more, 6.0 or more, 6.5 or more, 7.0 or more, 8.0 or more, 9.0 or more, 10 or more, 20 or more, 30 or more, 40 or more, 50 or more, or more, 60 or more, 70 or more, 80 or more, 90 or more, 100 or more, 150 or more, 200 or more, 250 or more, 300 or more, 350 or more, 400 or more, 450 or more, 500 or more, 550 or more, 600 or more, 650 or more, 700 or more, 750 or more, 800 or more, 850 or more, 900 or more, 1,000 or more, 1,100 or more, 1,200 or more, 1,300 or more, 1,400 or more, or 1,500 or more, and has an upper limit of, for example, 50,000 or less, 45,000 or less, 40,000 or less, 35,000 or less, 30,000 or less, 25,000 or less, 20,000 or less, 18,000 or less, 16,000 or less, 14,000 or less, 12,000 or less, 10,000 or less, 9,000 or less, 8,000 or less, 7,000 or less, 6,000 or less, 5,000 or less, 4,000 or less, 3,000 or less, 2,000 or less, 1,500 or less, 1,300 or less, 1,000 or less, 900 or less, 800 or less, 700 or less, 600 or less, 500 or less, 400 or less, 300 or less, 200 or less, 150 or less, 130 or less, 100 or less, 90 or less, 80 or less, 70 or less, 60 or less, 50 or less, 40 or less, 30 or less, 20 or less, 10 or less, or 8 or less, with a range of, for example, 0.5 to 50,000, 2.0 to 40,000, or 5 to 3,000; and/or
   (ii) the ratio of the content of xanthohumol D (ppb by mass) to the acidity (w/w%) is 0.00001 or more, 0.00002 or more, 0.00004 or more, 0.00006 or more, 0.00008 or more, 0.0001 or more, 0.0002 or more, 0.0004 or more, 0.0006 or more, 0.0008 or more, 0.001 or more, 0.002 or more, 0.01 or more, 0.02 or more, 0.04 or more, 0.06 or more, 0.08 or more, 0.10 or more, 0.12 or more, 0.14 or more, 0.16 or more, 0.18 or more, 0.20 or more, 0.25 or more, 0.28 or more, 0.32 or more, 0.34 or more, 0.36 or more, 0.38 or more, 0.40 or more, 0.50 or more, 0.60 or more, 0.70 or more, 0.80 or more, 0.90 or more, 1.0 or more, 1.2 or more, 1.4 or more, 1.6 or more, 1.8 or more, 2.0 or more, 2.2 or more, 2.4 or more, 2.6 or more, 2.8 or more, 3.0 or more, 4.0 or more, 6.0 or more, 8.0 or more, 10 or more, 12 or more, 14 or more, 16 or more, 18 or more, 20 or more, 22 or more, 24 or more, 26 or more, 28 or more, 30 or more, 40 or more, 60 or more, 80 or more, 100 or more, 150 or more, 180 or more, 200 or more, 240 or more, 280 or more, or 400 or more, and has an upper limit of, for example, 5,000 or less, 4,000 or less, 3,000 or less, 2,000 or less, 1,000 or less, 900 or less, 800 or less, 700 or less, 600 or less, 500 or less, 450 or less, 400 or less, 350 or less, 300 or less, 250 or less, 200 or less, 180 or less, 160 or less, 140 or less, 120 or less, 100 or less, 80 or less, 70 or less, 60 or less, 50 or less, 40 or less, 30 or less, 20 or less, or 10 or less, with a range of, for example, 0.00001 to 5,000, 0.002 to 5,000, 0.01 to 2,000, or 0.4 to 500.

Item 24. A sour taste inhibitor containing isochlorogenic acid and/or xanthohumol D used so as to satisfy the following requirement (b) in a food composition in which the acidity is 0.02 w/w% or more, 0.03 w/w% or more, 0.04 w/w% or more, 0.05 w/w% or more, 0.06 w/w% or more, 0.07 w/w% or more, 0.08 w/w% or more, 0.09 w/w% or more, 0.10 w/w% or more, 0.15 w/w% or more, 0.17 w/w% or more, 0.20 w/w% or more, 0.25 w/w% or more, 0.27 w/w% or more, 0.30 w/w% or more, 0.35 w/w% or more, 0.40 w/w% or more, 0.45 w/w% or more, 0.50 w/w% or more, 0.55 w/w% or more, 0.60 w/w% or more, 0.70 w/w% or more, 0.80 w/w% or more, 0.90 w/w% or more, 1.00 w/w% or more, 1.10 w/w% or more, 1.20 w/w% or more, 1.30 w/w% or more, 1.40 w/w% or more, 1.50 w/w% or more, 1.60 w/w% or more, 1.70 w/w% or more, 1.80 w/w% or more, 1.90 w/w% or more, 2.00 w/w% or more, 2.10 w/w% or more, 2.20 w/w% or more, 2.30 w/w% or more, 2.40 w/w% or more, 2.50 w/w% or more, 2.60 w/w% or more, 2.70 w/w% or more, 2.80 w/w% or more, 2.90 w/w% or more, 3.00 w/w% or more, 4.00 w/w% or more, 5.00 w/w% or more, 6.00 w/w% or more, 7.00 w/w% or more, 8.00 w/w% or more, 9.00 w/w% or more, 10.00 w/w% or more, 11.00 w/w% or more, or 12.00 w/w% or more, and has an upper limit of, for example, 30.0 w/w% or less, 28.0 w/w% or less, 25.0 w/w% or less, 22.0 w/w% or less, 20.0 w/w% or less, 18.0 w/w% or less, 16.0 w/w% or less, 15.5 w/w% or less, 15.1 w/w% or less, 14.9 w/w% or less, 14.5 w/w% or less, 14.3 w/w% or less, 14.0 w/w% or less, 13.5 w/w% or less, 13.3 w/w% or less, 13.0 w/w% or less, 12.5 w/w% or less, 12.0 w/w% or less, 11.5 w/w% or less, 11.0 w/w% or less, 10.5 w/w% or less, 10.3 w/w% or less, 10.0 w/w% or less, 9.8 w/w% or less, 9.6 w/w% or less, 9.4 w/w% or less, 9.2 w/w% or less, 9.0 w/w% or less, 8.5 w/w% or less, 8.2 w/w% or less, 8.0 w/w% or less, 7.5 w/w% or less, 7.0 w/w% or less, 6.7 w/w% or less, 6.4 w/w% or less, 6.2 w/w% or less, 6.0 w/w% or less, 5.55 w/w% or less, 5.30 w/w% or less, 5.25 w/w% or less, 5.15 w/w% or less, 5.10 w/w% or less, 5.05 w/w% or less, 5.00 w/w% or less, 4.80 w/w% or less, 4.60 w/w% or less, 4.40 w/w% or less, 4.20 w/w% or less, 4.00 w/w% or less, 3.80 w/w% or less, 3.60 w/w% or less, 3.40 w/w% or less, 3.20 w/w% or less, 3.00 w/w% or less, 2.80 w/w% or less, 2.60 w/w% or less, 2.40 w/w% or less, 2.20 w/w% or less, 2.00 w/w% or less, 1.80 w/w% or less, 1.60 w/w% or less, 1.40 w/w% or less, 1.20 w/w% or less, 1.00 w/w% or less, 0.80 w/w% or less, 0.60 w/w% or less, or 0.40 w/w% or less, with a range of, for example, 0.02 to 30.0 w/w%, 0.05 to 25.0 w/w%, 0.08 to 22.0 w/w%, 0.10 to 20.0 w/w%, 0.12 to 18.0 w/w%, 0.14 to 17.5 w/w%, or 0.16 to 16.5 w/w%:
(b) the following requirements (i) and/or (ii):
(i) the ratio of the content of isochlorogenic acid (ppm by mass) to the acidity (w/w%) is 0.5 or more, 0.7 or more, 1.0 or more, 2.0 or more, more preferably 2.5 or more, 3.0 or more, 4.0 or more, 5.0 or more, 6.0 or more, 6.5 or more, 7.0 or more, 8.0 or more, 9.0 or more, 10 or more, 20 or more, 30 or more, 40 or more, 50 or more, or more, 60 or more, 70 or more, 80 or more, 90 or more, 100 or more, 150 or more, 200 or more, 250 or more, 300 or more, 350 or more, 400 or more, 450 or more, 500 or more, 550 or more, 600 or more, 650 or more, 700 or more, 750 or more, 800 or more, 850 or more, 900 or more, 1,000 or more, 1,100 or more, 1,200 or more, 1,300 or more, 1,400 or more, or 1,500 or more, and has an upper limit of, for example, 50,000 or less, 45,000 or less, 40,000 or less, 35,000 or less, 30,000 or less, 25,000 or less, 20,000 or less, 18,000 or less, 16,000 or less, 14,000 or less, 12,000 or less, 10,000 or less, 9,000 or less, 8,000 or less, 7,000 or less, 6,000 or less, 5,000 or less, 4,000 or less, 3,000 or less, 2,000 or less, 1,500 or less, 1,300 or less, 1,000 or less, 900 or less, 800 or less, 700 or less, 600 or less, 500 or less, 400 or less, 300 or less, 200 or less, 150 or less, 130 or less, 100 or less, 90 or less, 80 or less, 70 or less, 60 or less, 50 or less, 40 or less, 30 or less, 20 or less, 10 or less, or 8 or less, with a range of, for example, 0.5 to 50,000, 2.0 to 40,000, or 5 to 3,000; and/or
(ii) the ratio of the content of xanthohumol D (ppb by mass) to the acidity (w/w%) is 0.00001 or more, 0.00002 or more, 0.00004 or more, 0.00006 or more, 0.00008 or more, 0.0001 or more, 0.0002 or more, 0.0004 or more, 0.0006 or more, 0.0008 or more, 0.001 or more, 0.002 or more, 0.01 or more, 0.02 or more, 0.04 or more, 0.06 or more, 0.08 or more, 0.10 or more, 0.12 or more, 0.14 or more, 0.16 or more, 0.18 or more, 0.20 or more, 0.25 or more, 0.28 or more, 0.32 or more, 0.34 or more, 0.36 or more, 0.38 or more, 0.40 or more, 0.50 or more, 0.60 or more, 0.70 or more, 0.80 or more, 0.90 or more, 1.0 or more, 1.2 or more, 1.4 or more, 1.6 or more, 1.8 or more, 2.0 or more, 2.2 or more, 2.4 or more, 2.6 or more, 2.8 or more, 3.0 or more, 4.0 or more, 6.0 or more, 8.0 or more, 10 or more, 12 or more, 14 or more, 16 or more, 18 or more, 20 or more, 22 or more, 24 or more, 26 or more, 28 or more, 30 or more, 40 or more, 60 or more, 80 or more, 100 or more, 150 or more, 180 or more, 200 or more, 240 or more, 280 or more, or 400 or more, and has an upper limit of, for example, 5,000 or less, 4,000 or less, 3,000 or less, 2,000 or less, 1,000 or less, 900 or less, 800 or less, 700 or less, 600 or less, 500 or less, 450 or less, 400 or less, 350 or less, 300 or less, 250 or less, 200 or less, 180 or less, 160 or less, 140 or less, 120 or less, 100 or less, 80 or less, 70 or less, 60 or less, 50 or less, 40 or less, 30 or less, 20 or less, or 10 or less, with a range of, for example, 0.00001 to 5,000, 0.002 to 5,000, 0.01 to 2,000, or 0.4 to 500.

### Advantageous Effects of Invention

According to the present invention, it is possible to provide a food composition in which a sour taste felt on the tongue is suppressed. Further, according to one aspect of the present invention, it is possible to suppress a deterioration smell after storage in a food composition containing an acid.

### Description of Embodiments

In the present description, the terms "containing" and "including" include concepts of "containing", "including", "consisting essentially of", and "consisting only of". In a case where the terms "containing" and "including" are used, the listed processes or options need not be exhaustive.

In the present description, in a case where a plurality of upper limits and/or a plurality of lower limits are indicated for a provision of a numerical range, it is assumed that the provision of the numerical range obtained by combining at least a maximum value of the upper limit and a minimum value of the lower limit is directly described even if not particularly specified, and all the numerical ranges obtained by combining any upper limit among the upper limits and any lower limit among the lower limits are directly described. Further, in the present description, a numerical range connected by "to" means a numerical range including numerical values before and after "to" as the lower limit and upper limit, respectively. In a case where a plurality of lower limits and a plurality of upper limits are separately indicated, any lower limit and any upper limit can be selected and connected by "to".

In the present invention, values represented by descriptions of "w/w%", "w/v%", "ppm by mass", and "ppb by mass" represent values in "wet mass equivalent". The term "wet mass equivalent" refers to a content ratio of a target component in a sample, which is calculated with the wet mass of the sample including moisture as the denominator and the mass of the target component contained in the sample as the numerator. In the present invention, the term "w/w%" refers to the mass (g) of the target component contained in the sample per mass (100 g) of the sample, and can also be read as % by mass. Further, in the present invention, the term "w/v%" refers to the mass (g) of the target component contained in the sample per volume (100 ml) of the sample, and can be read as volume%. Further, ppm by mass indicates the content (mg) of the target component in 1 kg of the sample, and ppb by mass indicates the content (µg) of the target component in 1 kg of the sample.

In the present description, the expression "and (and)/or (or)" encompasses both the meanings of "and (and)" and "or (or)". For example, "A and/or B" encompasses the meaning of both A and B and A or B, and indicates three possibilities: A alone, B alone, and both A and B.

In the present description, the expression "the ratio of the content (▲▲) of component OO to the content (△△) of component ◆◆" indicates the ratio between the value of the content of component ◆◆ specified by the unit △△ in the food composition of the present invention and the value of the content of component ○○ specified by the unit AA in the food composition of the present invention. For example, in an aspect in which the content of acetic acid in the food composition of the present invention is 5 w/w% and the content of isochlorogenic acid is 10 ppm by mass, the "ratio of the content of isochlorogenic acid (ppm by mass) to the content of acetic acid (w/w%)" is calculated to be 2. Further, for example, in an aspect in which the content of acetic acid in the food composition of the present invention is 5 w/w% and the content of xanthohumol D is 0.1 ppb by mass, the "ratio of the content of xanthohumol D (ppb by mass) to the content of acetic acid (w/w%)" is calculated to be 0.02. Furthermore, in an aspect in which the acidity of the food composition of the present invention is 5 w/w% and the content of isochlorogenic acid is 10 ppm by mass, the "ratio of the content of isochlorogenic acid (ppm by mass) to the acidity (w/w%)" is calculated to be 2. Further, for example, in an aspect in which the acidity in the food composition of the present invention is 5 w/w% and the content of xanthohumol D is 0.1 ppb by mass, the "ratio of the content of xanthohumol D (ppb by mass) to the acidity (w/w%)" is calculated to be 0.02.

In the present invention, the sour taste felt on the tongue refers to the sour taste perceived when an acid is brought into contact with the tongue, and is distinguished from the acetic acid smell and throat irritation felt when acetic acid is ingested. Although the detailed principle by which the sour taste felt on the tongue is perceived is unknown, it is thought that the sour taste occurs when sour taste receptors in the taste buds receive protons. Note that, according to one aspect of the present invention, the description of the above-described problem does not hinder existence of other problems disclosed in the present description. In other words, as one aspect of the present invention, for example, improvement of a sour taste felt on the tongue in a food composition may be one of the problems, suppression of an acetic acid smell in a food composition containing acetic acid may be one of the problems, improvement of extraction efficiency of isochlorogenic acid and/or xanthohumol in production of an extract of herbs may be one of the problems, or suppression of an astringent taste in an extract of herbs may be one of the problems. Furthermore, problems other than these may be extracted from the description and claims.

### First Embodiment

The first embodiment relates to a food composition satisfying the following requirements (a) and (b):
(a) the acidity is 0.02 w/w% or more; and
(b) the following requirements (i) and/or (ii):
   (i) the ratio of the content of isochlorogenic acid (ppm by mass) to the acidity (w/w%) is 0.5 or more; and/or
   (ii) the ratio of the content of xanthohumol D (ppb by mass) to the acidity (w/w%) is 0.00001 or more.

Hereinafter, the first embodiment will be described.

### Acidity

In the present invention, the "acidity" of a food composition refers to "acetic acid equivalent acidity". The acidity is measured according to the method for measuring "acidity" specified in the Japanese Agricultural Standard for brewed vinegar (Ministry of Agriculture, Forestry and Fisheries Notification No. 1626 of December 13, 2019). Specifically, the "acidity" is determined by measuring a hydrogen ion concentration in a sample by a neutralization titration method, and multiplying the value by a molecular weight (60.05 g/mol) of acetic acid, which is a monovalent carboxylic acid.

It is preferable that the food composition of the present invention has an acidity of a predetermined amount from a viewpoint of occurrence and solution of the problem of the present invention. It is preferable that the acidity in the food composition of the present invention is a predetermined value or more from a viewpoint of suppressing a bitter taste derived from xanthohumol D and/or isochlorogenic acid. Specifically, the lower limit of the acidity in the food composition of the present invention may be, for example, 0.02 w/w% or more, 0.03 w/w% or more, 0.04 w/w% or more, 0.05 w/w% or more, 0.06 w/w% or more, 0.07 w/w% or more, 0.08 w/w% or more, 0.09 w/w% or more, 0.10 w/w% or more, 0.15 w/w% or more, 0.17 w/w% or more, 0.20 w/w% or more, 0.25 w/w% or more, 0.27 w/w% or more, 0.30 w/w% or more, 0.35 w/w% or more, 0.40 w/w% or more, 0.45 w/w% or more, 0.50 w/w% or more, 0.55 w/w% or more, 0.60 w/w% or more, 0.70 w/w% or more, 0.80 w/w% or more, 0.90 w/w% or more, 1.00 w/w% or more, 1.10 w/w% or more, 1.20 w/w% or more, 1.30 w/w% or more, 1.40 w/w% or more, 1.50 w/w% or more, 1.60 w/w% or more, 1.70 w/w% or more, 1.80 w/w% or more, 1.90 w/w% or more, 2.00 w/w% or more, 2.10 w/w% or more, 2.20 w/w% or more, 2.30 w/w% or more, 2.40 w/w% or more, 2.50 w/w% or more, 2.60 w/w% or more, 2.70 w/w% or more, 2.80 w/w% or more, 2.90 w/w% or more, 3.00 w/w% or more, 4.00 w/w% or more, 5.00 w/w% or more, 6.00 w/w% or more, 7.00 w/w% or more, 8.00 w/w% or more, 9.00 w/w% or more, 10.00 w/w% or more, 11.00 w/w% or more, or 12.00 w/w% or more. Further, it is preferable that the acidity in the food composition of the present invention is a predetermined value or less from a viewpoint of facilitating the solution of the problem to be solved in the present invention. Specifically, the upper limit of the acidity in the food composition of the present invention may be, for example, 30.0 w/w% or less, 28.0 w/w% or less, 25.0 w/w% or less, 22.0 w/w% or less, 20.0 w/w% or less, 18.0 w/w% or less, 16.0 w/w% or less, 15.5 w/w% or less, 15.1 w/w% or less, 14.9 w/w% or less, 14.5 w/w% or less, 14.3 w/w% or less, 14.0 w/w% or less, 13.5 w/w% or less, 13.3 w/w% or less, 13.0 w/w% or less, 12.5 w/w% or less, 12.0 w/w% or less, 11.5 w/w% or less, 11.0 w/w% or less, 10.5 w/w% or less, 10.3 w/w% or less, 10.0 w/w% or less, 9.8 w/w% or less, 9.6 w/w% or less, 9.4 w/w% or less, 9.2 w/w% or less, 9.0 w/w% or less, 8.5 w/w% or less, 8.2 w/w% or less, 8.0 w/w% or less, 7.5 w/w% or less, 7.0 w/w% or less, 6.7 w/w% or less, 6.4 w/w% or less, 6.2 w/w% or less, 6.0 w/w% or less, 5.55 w/w% or less, 5.30 w/w% or less, 5.25 w/w% or less, 5.15 w/w% or less, 5.10 w/w% or less, 5.05 w/w% or less, 5.00 w/w% or less, 4.80 w/w% or less, 4.60 w/w% or less, 4.40 w/w% or less, 4.20 w/w% or less, 4.00 w/w% or less, 3.80 w/w% or less, 3.60 w/w% or less, 3.40 w/w% or less, 3.20 w/w% or less, 3.00 w/w% or less, 2.80 w/w% or less, 2.60 w/w% or less, 2.40 w/w% or less, 2.20 w/w% or less, 2.00 w/w% or less, 1.80 w/w% or less, 1.60 w/w% or less, 1.40 w/w% or less, 1.20 w/w% or less, 1.00 w/w% or less, 0.80 w/w% or less, 0.60 w/w% or less, or 0.40 w/w% or less. Further, as described above, since it is preferable that the food composition of the present invention has an acidity of a predetermined value or more and a predetermined value or less, it is preferable that the food composition of the present invention has an acidity within a predetermined range. Specifically, the range of acidity in the food composition of the present invention may be, for example, 0.02 to 30.0 w/w%, preferably 0.05 to 25.0 w/w%, more preferably 0.08 to 22.0 w/w%, even more preferably 0.10 to 20.0 w/w%, still more preferably 0.12 to 18.0 w/w%, particularly preferably 0.14 to 17.5 w/w%, and especially preferably 0.16 to 16.5 w/w%. When the acidity of the food composition of the present invention satisfies the above provision, it is possible to suppress the sour taste felt on the tongue and to make the sour taste mild. Note that numerical ranges specified by combining the above upper limits and the lower limits are also disclosed in the present invention.

The food composition of the present invention can contain an organic acid and/or an inorganic acid, and particularly preferably contains an organic acid.

The inorganic acid contained in the food composition of the present invention is not particularly limited, and examples thereof include inorganic acids such as phosphoric acid, carbonic acid, and nitric acid. Further, the organic acid contained in the food composition of the present invention is not particularly limited, and examples thereof include carboxylic acids. More specifically, examples of the organic acid contained in the food composition of the present invention include acetic acid, citric acid, lactic acid, malic acid, gluconic acid, tartaric acid, formic acid, propionic acid, butyric acid, valeric acid, isovaleric acid, caproic acid, and fumaric acid. More specifically, the food composition of the present invention may contain at least one, or two or more, or three or more, or four or more selected from the group consisting of acetic acid, citric acid, lactic acid, malic acid, gluconic acid, tartaric acid, formic acid, propionic acid, butyric acid, valeric acid, isovaleric acid, caproic acid, and fumaric acid, and more preferably at least one, or two or more, or three selected from the group consisting of acetic acid, citric acid, and lactic acid.

Further, according to one aspect of the present invention, the organic acid in the food composition of the present invention may refer to any one of acetic acid, citric acid, or lactic acid, and the organic acid in the food composition of the present invention may refer to acetic acid. Note that, the content of these organic acids in an organic acid-containing food composition of the present invention is measured by high performance liquid chromatography or an enzymatic method in accordance with the method for measuring "organic acids" in the Standard Tables of Food Composition in Japan, 2015 (Seventh Revised Edition).

Further, as long as the above provision regarding acidity is satisfied, the content of individual organic acids (for example, the content of acetic acid, citric acid, lactic acid, malic acid, gluconic acid, tartaric acid, formic acid, propionic acid, butyric acid, valeric acid, isovaleric acid, caproic acid, or fumaric acid) is not particularly limited. Specifically, the content of individual organic acids (for example, the content of acetic acid) in the food composition of the present invention may be 0.01 w/w% or more, 0.03 w/w% or more, 0.04 w/w% or more, 0.05 w/w% or more, 0.06 w/w% or more, 0.07 w/w% or more, 0.08 w/w% or more, 0.09 w/w% or more, 0.10 w/w% or more, 0.15 w/w% or more, 0.17 w/w% or more, 0.20 w/w% or more, 0.25 w/w% or more, 0.27 w/w% or more, 0.30 w/w% or more, 0.35 w/w% or more, 0.40 w/w% or more, 0.45 w/w% or more, 0.50 w/w% or more, 0.55 w/w% or more, 0.60 w/w% or more, 0.70 w/w% or more, 0.80 w/w% or more, 0.90 w/w% or more, 1.00 w/w% or more, 1.10 w/w% or more, 1.20 w/w% or more, 1.30 w/w% or more, 1.40 w/w% or more, 1.50 w/w% or more, 1.60 w/w% or more, 1.70 w/w% or more, 1.80 w/w% or more, 1.90 w/w% or more, 2.00 w/w% or more, 2.10 w/w% or more, 2.20 w/w% or more, 2.30 w/w% or more, 2.40 w/w% or more, 2.50 w/w% or more, 2.60 w/w% or more, 2.70 w/w% or more, 2.80 w/w% or more, 2.90 w/w% or more, 3.00 w/w% or more, 4.00 w/w% or more, 5.00 w/w% or more, 6.00 w/w% or more, 7.00 w/w% or more, 8.00 w/w% or more, 9.00 w/w% or more, 10.00 w/w% or more, and may be 25.0 w/w% or less, 22.0 w/w% or less, 20.0 w/w% or less, 18.0 w/w% or less, 16.0 w/w% or less, 15.5 w/w% or less, 15.1 w/w% or less, 14.9 w/w% or less, 14.5 w/w% or less, 14.3 w/w% or less, 14.0 w/w% or less, 13.5 w/w% or less, 13.3 w/w% or less, 13.0 w/w% or less, 12.5 w/w% or less, 12.0 w/w% or less, 11.5 w/w% or less, 11.0 w/w% or less, 10.5 w/w% or less, 10.3 w/w% or less, 10.0 w/w% or less, 9.8 w/w% or less, 9.6 w/w% or less, 9.4 w/w% or less, 9.2 w/w% or less, 9.0 w/w% or less, 8.5 w/w% or less, 8.2 w/w% or less, 8.0 w/w% or less, 7.5 w/w% or less, 7.0 w/w% or less, 6.7 w/w% or less, 6.4 w/w% or less, 6.2 w/w% or less, 6.0 w/w% or less, 5.55 w/w% or less, 5.30 w/w% or less, 5.25 w/w% or less, 5.15 w/w% or less, 5.10 w/w% or less, 5.05 w/w% or less, 5.00 w/w% or less, 4.80 w/w% or less, 4.60 w/w% or less, 4.40 w/w% or less, 4.20 w/w% or less, 4.00 w/w% or less, 3.80 w/w% or less, 3.60 w/w% or less, 3.40 w/w% or less, 3.20 w/w% or less, 3.00 w/w% or less, 2.80 w/w% or less, 2.60 w/w% or less, 2.40 w/w% or less, 2.20 w/w% or less, 2.00 w/w% or less, 1.80 w/w% or less, 1.60 w/w% or less, 1.40 w/w% or less, 1.20 w/w% or less, 1.00 w/w% or less, 0.80 w/w% or less, 0.60 w/w% or less, or 0.40 w/w% or less. Further, the range may be, for example, 0.01 to 25.0 w/w%, preferably 0.05 to 22.0 w/w%, more preferably 0.08 to 20.0 w/w%, even more preferably 0.10 to 18.0, still more preferably 0.12 to 16.0 w/w%, particularly preferably 0.14 to 15.5 w/w%, and especially preferably 0.16 to 12.5 w/w%. Further, according to one aspect of the present invention, among the organic acids contained in the food composition of the present invention (for example, acetic acid, citric acid, lactic acid, malic acid, gluconic acid, tartaric acid, formic acid, propionic acid, butyric acid, valeric acid, isovaleric acid, caproic acid, fumaric acid), the organic acid with the highest content may satisfy the above provision.

Note that, in a case where the food composition of the present invention contains two or more organic acids, examples of the organic acid with the highest content include the above-described organic acids (for example, acetic acid, citric acid, lactic acid, malic acid, gluconic acid, tartaric acid, formic acid, propionic acid, butyric acid, valeric acid, isovaleric acid, caproic acid, fumaric acid), and among these, it is preferable to contain any one organic acid selected from the group consisting of acetic acid, citric acid, and lactic acid in the highest amount, and it is particularly preferable to contain acetic acid in the highest amount.

Further, the food composition of the present invention is industrially useful because it can suppress a sour taste felt on the tongue, particularly caused by at least one, or two or more, or three selected from the group consisting of acetic acid, citric acid, and lactic acid. This is because the three organic acids are widely contained in foods and beverages, and controlling the sour taste thereof is extremely important. Therefore, it is preferable that the food composition of the present invention satisfies at least one requirement selected from the group consisting of the following requirements (c) to (e).
Requirement (c): The ratio of the content of acetic acid (w/w%) to the acidity (w/w%) in the food composition is 0.1 or more.
Requirement (d): The ratio of the content of lactic acid (w/w%) to the acidity (w/w%) in the food composition is 0.1 or more.
Requirement (e): The ratio of the content of citric acid (w/w%) to the acidity (w/w%) in the food composition is 0.1 or more.

Regarding the requirement (c), the ratio of the content of acetic acid (w/w%) to the acidity (w/w%) in the food composition is preferably 0.1 to 1, and the lower limit thereof may be 0.2 or more, 0.3 or more, 0,4 or more, 0.5 or more, 0.6 or more, 0.7 or more, 0.8 or more, or 0.9 or more. Further, the upper limit thereof may be 0.99 or less, 0.95 or less, 0.8 or less, 0.7 or less, 0.6 or less, 0.5 or less, 0.4 or less, or 0.3 or less.

Further, in the requirement (d), the ratio of the content of lactic acid (w/w%) to the acidity (w/w%) in the food composition is preferably 0.1 to 1, and the lower limit thereof may be 0.2 or more, 0.3 or more, 0,4 or more, 0.5 or more, 0.6 or more, 0.7 or more, 0.8 or more, or 0.9 or more. Further, the upper limit thereof may be 0.99 or less, 0.95 or less, 0.8 or less, 0.7 or less, 0.6 or less, 0.5 or less, 0.4 or less, or 0.3 or less.

Further, in the requirement (e), the ratio of the content of citric acid (w/w%) to the acidity (w/w%) in the food composition is preferably 0.1 to 1, and the lower limit thereof may be 0.2 or more, 0.3 or more, 0,4 or more, 0.5 or more, 0.6 or more, 0.7 or more, 0.8 or more, or 0.9 or more. Further, the upper limit thereof may be 0.99 or less, 0.95 or less, 0.8 or less, 0.7 or less, 0.6 or less, 0.5 or less, 0.4 or less, or 0.3 or less.

Further, the food composition of the present invention may satisfy at least two requirements selected from the group consisting of the requirements (c) to (e) (requirement (c) and requirement (d), or requirement (c) and requirement (e), or requirement (d) and requirement (e), or may satisfy all of the requirements (c) to (e).

### Acetic Acid

The food composition of the present invention preferably contains acetic acid among the organic acids described above. Acetic acid refers to an acetic acid molecule (CH₃COOH) and an acetic acid ion (CH₃COO-), and the content of acetic acid refers to a total concentration of these. The origin of acetic acid in the food composition of the present invention is not particularly limited as long as the origin is suitable for the food composition, and for example, acetic acid can be derived from a food additive (for example, commercially available acetic acid), or acetic acid may be contained a result of a known method for producing vinegar.

However, in a case where the food composition of the present invention contains acetic acid, the food composition preferably contains acetic acid produced by acetic acid fermentation of alcohol, and may contain acetic acid produced by further subjecting a product obtained by alcohol fermentation of raw materials such as fruits or grains with yeast to acetic acid fermentation with acetic acid bacteria. This is because these food compositions tend to develop a deterioration smell during storage due to the presence of sugars, proteins, amino acids, minerals, and the like derived from fruits, grains, and the like as raw materials for fermentation, but the food composition of the present invention can exhibit an effect of suppressing the deterioration smell by containing isochlorogenic acid and/or xanthohumol D. Specifically, the food composition of the present invention preferably contains brewed vinegar specified based on the Japanese Agricultural Standards for brewed vinegar (Ministry of Agriculture, Forestry and Fisheries Notification No. 1626 of December 13, 2019), and more specifically, preferably contains grain vinegar or fruit vinegar. Further, in one aspect of the present invention, the food composition of the present invention may contain, for example, at least one, two, three, four, or five or more kinds selected from the group consisting of rice vinegar, rice black vinegar, apple cider vinegar, grape vinegar, lemon vinegar, tomato vinegar, and pomegranate vinegar. In other words, in one aspect of the present invention, the ratio of acetic acid obtained by acetic acid fermentation to 100% by mass of acetic acid in the food composition of the present invention can be, for example, 70% by mass or more, preferably 80% by mass or more, more preferably 90% by mass or more, even more preferably 95% by mass or more, still more preferably 97% by mass or more, particularly preferably 99% by mass or more, and especially preferably 100% by mass. Note that, the content of acetic acid in the food composition of the present invention is measured by high performance liquid chromatography in accordance with the method for measuring "organic acids" in the Standard Tables of Food Composition in Japan, 2015 (Seventh Revised Edition).

Further, in a case where the food composition of the present invention contains brewed vinegar, examples of the raw material of the brewed vinegar include polished rice, brown rice, barley, wheat, oat, rye, oat, adlay, corn, apple, peach, grape, acerola, blueberry, pear, apricot, citrus fruits (orange, lemon, yuzu, kabosu, sudachi, lime, mandarin orange, grapefruit, pink grapefruit, citrus hassaku, calamansi, etc.), strawberry, pineapple, banana, melon, kiwi fruit, black currant, apricot, guava, plum, mango, papaya, lychee, Japanese apricot, pomegranate, açai, raspberry, white grape, bergamot, and passion fruit. Therefore, the food composition of the present invention may contain brewed vinegar made from at least one, two, three, four, or five or more plants selected from the group consisting of polished rice, brown rice, barley, wheat, oat, rye, oat, adlay, corn, apple, peach, grape, acerola, blueberry, pear, apricot, citrus fruits (orange, lemon, yuzu, kabosu, sudachi, lime, mandarin orange, grapefruit, pink grapefruit, citrus hassaku, calamansi, etc.), strawberry, pineapple, banana, melon, kiwi fruit, black currant, apricot, guava, plum, mango, papaya, lychee, Japanese apricot, pomegranate, açai, raspberry, white grape, bergamot, and passion fruit, and may contain at least one, two, three, four, or five or more kinds of the brewed vinegar, and may further contain brewed vinegar produced through a process of adding alcohol for brewing and performing acetic acid fermentation.

Further, the food composition of the present invention can suppress a deterioration smell generated in a case where the food composition containing an acid is stored. Although the principle is unknown, there is a possibility that isochlorogenic acid and/or xanthohumol D suppress a deterioration smell caused by deterioration or denaturation of components such as sugars, proteins, and lipids contained together with the acid.

### Isochlorogenic Acid

One preferred aspect of the food composition of the present invention is that it contains isochlorogenic acid from a viewpoint of being able to suppress a sour taste felt on the tongue. Isochlorogenic acid is also called dicaffeoylquinic acid. There are three kinds of isochlorogenic acid: isochlorogenic acid A (CAS: 2450-53-5), isochlorogenic acid B (CAS: 14534-61-3), and isochlorogenic acid C (CAS: 32451-88-0), and the isochlorogenic acid contained in the food composition of the present invention may be any isochlorogenic acid. Therefore, the "content of isochlorogenic acid" in the provision regarding isochlorogenic acid in the present description refers to a total content of isochlorogenic acid A, isochlorogenic acid B, and isochlorogenic acid C (in the present description, it is appropriately denoted as the total content of isochlorogenic acid). In other words, the isochlorogenic acid in the food composition of the present invention may be an aspect consisting of isochlorogenic acid A, an aspect consisting of isochlorogenic acid B, an aspect consisting of isochlorogenic acid C, an aspect containing isochlorogenic acid A and isochlorogenic acid B, an aspect containing isochlorogenic acid A and isochlorogenic acid C, an aspect containing isochlorogenic acid B and isochlorogenic acid C, or an aspect containing isochlorogenic acid A, isochlorogenic acid B, and isochlorogenic acid C. Further, in the food composition of the present invention, the ratio of the content of isochlorogenic acid A (ppm by mass) to the total content of isochlorogenic acid (ppm by mass) may be, for example, 0.1 or more, 0.15 or more, 0.2 or more, 0.25 or more, 0.3 or more, 0.35 or more, 0.4 or more, 0.45 or more, 0.5 or more, 0.55 or more, 0.6 or more, 0.65 or more, 0.7 or more, 0.75 or more, 0.8 or more, 0.9 or more, 0.95 or more, or 1.

In the food composition of the present invention, the content of isochlorogenic acid is measured by the following analysis method Y based on high performance liquid chromatography (HPLC method). Note that, in the analysis method Y, each sample may be appropriately diluted with methanol. Further, in calculating the content of isochlorogenic acid, an isochlorogenic acid reagent having a known concentration serially diluted with methanol is similarly analyzed as a standard sample, and the content of isochlorogenic acid of each sample is calculated by an external standard method. Further, in the analysis method Y, for example, "LC-30AD (manufactured by Shimadzu Corporation)" can be used as a device for separating components, for example, "SIL-30AC (manufactured by Shimadzu Corporation)" can be used as an autosampler, for example, "CIO-20AC (manufactured by Shimadzu Corporation)" can be used as an oven, and for example, "Photodiode Array Detector SPD-M30A (manufactured by Shimadzu Corporation)" can be used as a detector.

### Analysis method Y: high performance liquid chromatography

### Separation conditions

· Column: Cadenza CD-C18 150 × 4.6 mm 3 µm Column manufactured by Imtakt Corporation
· Column temperature: 35°C
· Injection volume: 20 µL applied
· Flow rate: 0.4 mL/min
· Analysis time: 60 minutes
· Mobile phase: a mixture containing acetonitrile, water, and phosphoric acid in a volume ratio of 3 : 96.8 : 0.2

### Detection conditions

· Irradiation with ultraviolet light at a wavelength of 325 nm

The food composition of the present invention is preferable because, when the content of isochlorogenic acid relative to the acidity is a predetermined value or more, the sour taste felt on the tongue when the food composition is ingested can be suppressed, and as a result, the sour taste can be made mild. Although the detailed principle is unknown, there is a possibility that isochlorogenic acid inhibits perception of the sour taste by acting on the taste buds. In the food composition of the present invention, the ratio of the content of isochlorogenic acid (ppm by mass) to the acidity (w/w%) is preferably 0.5 or more, 0.7 or more, 1.0 or more, 2.0 or more, more preferably 2.5 or more, 3.0 or more, 4.0 or more, particularly preferably 5.0 or more, and may be 6.0 or more, 6.5 or more, 7.0 or more, 8.0 or more, 9.0 or more, 10 or more, 20 or more, 30 or more, 40 or more, 50 or more, or more, 60 or more, 70 or more, 80 or more, 90 or more, 100 or more, 150 or more, 200 or more, 250 or more, 300 or more, 350 or more, 400 or more, 450 or more, 500 or more, 550 or more, 600 or more, 650 or more, 700 or more, 750 or more, 800 or more, 850 or more, 900 or more, 1,000 or more, 1,100 or more, 1,200 or more, 1,300 or more, 1,400 or more, or 1,500 or more. Further, in the food composition of the present invention, when the ratio of the content of isochlorogenic acid to the acidity is a predetermined value or less, the bitter taste of the food composition containing isochlorogenic acid can be suppressed. Although the principle is unknown, it may have some effect on the taste buds. The ratio of the content of isochlorogenic acid (ppm by mass) to the acidity (w/w%) in the food composition of the present invention is preferably 50,000 or less, 45,000 or less, 40,000 or less, 35,000 or less, 30,000 or less, 25,000 or less, 20,000 or less, 18,000 or less, 16,000 or less, 14,000 or less, 12,000 or less, 10,000 or less, 9,000 or less, 8,000 or less, 7,000 or less, 6,000 or less, 5,000 or less, 4,000 or less, particularly preferably 3,000 or less, and may be 2,000 or less, 1,500 or less, 1,300 or less, 1,000 or less, 900 or less, 800 or less, 700 or less, 600 or less, 500 or less, 400 or less, 300 or less, 200 or less, 150 or less, 130 or less, 100 or less, 90 or less, 80 or less, 70 or less, 60 or less, 50 or less, 40 or less, 30 or less, 20 or less, 10 or less, or 8 or less. Further, as described above, in the food composition of the present invention, it is preferable that the content of isochlorogenic acid relative to the acidity is a predetermined value or more and a predetermined value or less, and therefore it is preferable that the content of isochlorogenic acid relative to the acidity is within a predetermined range. Specifically, the ratio of the content of isochlorogenic acid (ppm by mass) to the acidity (w/w%) in the food composition of the present invention may be, for example, 0.5 to 50,000, preferably 2.0 to 40,000, and particularly preferably 5 to 3,000. Numerical ranges specified by combining the above upper limits and lower limits are also disclosed in the present invention. Note that, according to one aspect of the present invention, the ratio of the content of isochlorogenic acid (ppm by mass) to the content of acetic acid, lactic acid, or citric acid (w/w%) may satisfy the above numerical range (the numerical range disclosed for the ratio of the content of isochlorogenic acid (ppm by mass) to the acidity (w/w%)).

Further, in the food composition of the present invention, it is preferable that the content of isochlorogenic acid is within a predetermined range from a viewpoint of being able to suppress the sour taste felt on the tongue when the food composition is ingested. Specifically, the content of isochlorogenic acid in the food composition of the present invention may be, for example, 3 to 70,000 ppm by mass, preferably 5 to 50,000 ppm by mass, and particularly preferably 10 to 30,000 ppm by mass. Further, the upper limit thereof is not particularly limited, but may be, for example, 50,000 ppm by mass or less, 40,000 ppm by mass or less, 30,000 ppm by mass or less, 25,000 ppm by mass or less, 20,000 ppm by mass or less, 15,000 ppm by mass or less, 10,000 ppm by mass or less, 8,000 ppm by mass or less, 6,000 ppm by mass or less, 4,000 ppm by mass or less, 2,000 ppm by mass or less, 1,000 ppm by mass or less, 900 ppm by mass or less, 800 ppm by mass or less, 750 ppm by mass or less, 700 ppm by mass or less, 650 ppm by mass or less, 600 ppm by mass or less, 550 ppm by mass or less, 500 ppm by mass or less, 450 ppm by mass or less, 400 ppm by mass or less, 350 ppm by mass or less, 300 ppm by mass or less, 250 ppm by mass or less, 200 ppm by mass or less, 180 ppm by mass or less, 160 ppm by mass or less, 140 ppm by mass or less, 120 ppm by mass or less, 100 ppm by mass or less, 80 ppm by mass or less, 60 ppm by mass or less, 50 ppm by mass or less, 40 ppm by mass or less, 30 ppm by mass or less, 20 ppm by mass or less, or 10 ppm by mass or less. Further, the lower limit thereof is not particularly limited, but may be, for example, 5 ppm by mass or more, 6 ppm by mass or more, 7 ppm by mass or more, 8 ppm by mass or more, 9 ppm by mass or more, 10 ppm by mass or more, 12 ppm by mass or more, 14 ppm by mass or more, 16 ppm by mass or more, 18 ppm by mass or more, 20 ppm by mass or more, 25 ppm by mass or more, 30 ppm by mass or more, 35 ppm by mass or more, 40 ppm by mass or more, 45 ppm by mass or more, 50 ppm by mass or more, 55 ppm by mass or more, 60 ppm by mass or more, 65 ppm by mass or more, 70 ppm by mass or more, 75 ppm by mass or more, 80 ppm by mass or more, 85 ppm by mass or more, 90 ppm by mass or more, 95 ppm by mass or more, 100 ppm by mass or more, 120 ppm by mass or more, 140 ppm by mass or more, 160 ppm by mass or more, 180 ppm by mass or more, 200 ppm by mass or more, 220 ppm by mass or more, 240 ppm by mass or more, 260 ppm by mass or more, 280 ppm by mass or more, 300 ppm by mass or more, 320 ppm by mass or more, 340 ppm by mass or more, 360 ppm by mass or more, 380 ppm by mass or more, 400 ppm by mass or more, 420 ppm by mass or more, 440 ppm by mass or more, 460 ppm by mass or more, 480 ppm by mass or more, 500 ppm by mass or more, 520 ppm by mass or more, 530 ppm by mass or more, 540 ppm by mass or more, 560 ppm by mass or more, 580 ppm by mass or more, 600 ppm by mass or more, 800 ppm by mass or more, 1,000 ppm by mass or more, 1,200 ppm by mass or more, 1,400 ppm by mass or more, 1,600 ppm by mass or more, 1,800 ppm by mass or more, 2,000 ppm by mass or more, 2,500 ppm by mass or more, 3,000 ppm by mass or more, 3,500 ppm by mass or more, 4,000 ppm by mass or more, 4,500 ppm by mass or more, 5,000 ppm by mass or more, 6,000 ppm by mass or more, 7,000 ppm by mass or more, 8,000 ppm by mass or more, 9,000 ppm by mass or more, 10,000 ppm by mass or more, 15,000 ppm by mass or more, 20,000 ppm by mass or more, 25,000 ppm by mass or more, 30,000 ppm by mass or more, 35,000 ppm by mass or more, 40,000 ppm by mass or more, 45,000 ppm by mass or more, or 50,000 ppm by mass or more. Numerical ranges specified by combining the above upper limits and lower limits are also disclosed in the present invention.

### Xanthohumol D

One preferred aspect of the food composition of the present invention is that it contains xanthohumol D. Xanthohumol D is a substance identified by CAS number 274675-25-1.

In the food composition of the present invention, the content of xanthohumol D is measured based on liquid chromatography mass spectrometry (also referred to as an LC-MS method), and specifically measured by the following analytical method X. Note that liquid chromatography mass spectrometry is an analysis method classified as a type of high performance liquid chromatography (HPLC), and is a method in which components in a liquid are separated using a difference in interaction between a stationary phase and a mobile phase and detected by a mass detector. Liquid chromatography mass spectrometry makes it possible to detect even a component having an extremely small content in a food composition, such as xanthohumol D in the food composition of the present invention. Note that, in the analysis method X, each sample may be appropriately diluted with methanol. Further, for the calculation, a xanthohumol D reagent having a known concentration serially diluted with methanol is similarly analyzed as a standard sample, and the content of xanthohumol D of each sample is calculated by an external standard method. Further, in the analysis method X, for example, "Nexera XS manufactured by SHIMADZU" can be used for separation of components. Further, for the detection of components, for example, "impactII (ESI QTOF mass spectrometer) manufactured by Bruker" can be used.

### Analysis method X: liquid chromatography mass spectrometry

### Separation conditions

· Column: ACQUITY UPLC BEH C18 2.1 × 50 mm 1.7 µm Column manufactured by Waters Corporation
· Column temperature: 40°C
· Injection volume: 5 µL applied
· Flow rate: 0.4 mL/min
· Mobile phase: Solution A (containing formic acid in water at 0.1 v/v%) and Solution B (containing formic acid in acetonitrile at 0.1 v/v%)
· Mobile phase gradient (ratio of mobile phase A to mobile phase B)
   0 - 0.5 min 75%A : 25%B
   1.5 min 70%A : 30%B
   3.0 min 60%A : 40%B
   5.5 min 50%A : 50%B
   5.6 min 30%A : 70%B
   5.6 - 7.5 min 100%B
   MS conditions: ion source temperature 200°C
   Ionization method: ESI (ionization voltage 5.0 eV)
   MS scan: m/z 50 to 1,500

For each sample, H+ elimination ions are analyzed in negative mode, component peaks in each sample are identified based on quantitative ions (xanthohumol D quantitative ions m/z 369.1345 ± 0.02), and the peak area is determined. From the obtained peak area of xanthohumol D, the concentration of xanthohumol D contained in each sample is calculated, taking into account a dilution rate in the solvent.

The food composition of the present invention is preferable because, when the content of xanthohumol D relative to the acidity is a predetermined value or more, the sour taste felt on the tongue when the food composition of the present invention is ingested can be suppressed, and as a result, the sour taste can be made mild. Although the principle is unknown, there is a possibility that xanthohumol D inhibits the perception of the sour taste by acting on the taste buds. The ratio of the content of xanthohumol D (ppb by mass) to the acidity (w/w%) in the food composition of the present invention may be, for example, 0.00001 or more, 0.00002 or more, 0.00004 or more, 0.00006 or more, 0.00008 or more, 0.0001 or more, 0.0002 or more, 0.0004 or more, 0.0006 or more, 0.0008 or more, 0.001 or more, 0.002 or more, preferably 0.01 or more, 0.02 or more, 0.04 or more, 0.06 or more, 0.08 or more, 0.10 or more, 0.12 or more, 0.14 or more, 0.16 or more, 0.18 or more, 0.20 or more, more preferably 0.25 or more, 0.28 or more, 0.32 or more, 0.34 or more, 0.36 or more, 0.38 or more, particularly preferably 0.40 or more, 0.50 or more, 0.60 or more, 0.70 or more, 0.80 or more, 0.90 or more, 1.0 or more, 1.2 or more, 1.4 or more, 1.6 or more, 1.8 or more, 2.0 or more, 2.2 or more, 2.4 or more, 2.6 or more, 2.8 or more, 3.0 or more, 4.0 or more, 6.0 or more, 8.0 or more, 10 or more, 12 or more, 14 or more, 16 or more, 18 or more, 20 or more, 22 or more, 24 or more, 26 or more, 28 or more, 30 or more, 40 or more, 60 or more, 80 or more, 100 or more, 150 or more, 180 or more, 200 or more, 240 or more, 280 or more, or 400 or more. Further, in the food composition of the present invention, when the content of xanthohumol D relative to the acidity is a predetermined value or less, the bitter taste of the food composition containing xanthohumol D can be suppressed. Although the principle is unknown, it may have some effect on the taste buds. The ratio of the content of xanthohumol D (ppb by mass) to the acidity (w/w%) in the food composition of the present invention may be preferably 5,000 or less, 4,000 or less, 3,000 or less, 2,000 or less, 1,000 or less, 900 or less, 800 or less, 700 or less, 600 or less, particularly preferably 500 or less, 450 or less, 400 or less, 350 or less, 300 or less, 250 or less, 200 or less, 180 or less, 160 or less, 140 or less, 120 or less, 100 or less, 80 or less, 70 or less, 60 or less, 50 or less, 40 or less, 30 or less, 20 or less, or 10 or less. Further, as described above, in the food composition of the present invention, it is preferable that the content of xanthohumol D relative to the acidity is a predetermined value or more and a predetermined value or less, and therefore it is preferable that the ratio of the content of xanthohumol D to the acidity is within a predetermined range. Specifically, the ratio of the content of xanthohumol D (ppb by mass) to the acidity (w/w%) in the food composition of the present invention may be preferably 0.00001 to 5,000, or 0.002 to 5,000, more preferably 0.01 to 2,000, and particularly preferably 0.4 to 500. Numerical ranges specified by combining the above upper limits and lower limits are also disclosed in the present invention. Further, according to one aspect of the present invention, the ratio of the content of xanthohumol D (ppb by mass) to the content of acetic acid, lactic acid, or citric acid (w/w%) may satisfy the above numerical range (the numerical range disclosed for the ratio of the content of xanthohumol D (ppb by mass) to the acidity (w/w%)). In particular, when the ratio of the content of xanthohumol D (ppb by mass) to the content of acetic acid (w/w%) satisfies the above numerical range (the numerical range disclosed for the ratio of the content of xanthohumol D (ppb by mass) to the acidity (w/w%)), the acetic acid smell can be suppressed. Note that the acetic acid smell refers to an irritating smell characteristic of acetic acid, such as a choking smell (irritating on the nose).

Further, in the food composition of the present invention, it is preferable that the content of xanthohumol D is within a predetermined range, from a viewpoint of being able to suppress the sour taste felt on the tongue during ingestion, or from a viewpoint of being able to suppress the acetic acid smell in a case where the food composition of the present invention contains acetic acid. Specifically, the content of xanthohumol D in the food composition of the present invention may be preferably 0.0001 to 10,000 ppb by mass, more preferably 0.001 to 5,000 ppb by mass, and particularly preferably 1 to 2,000 ppb by mass. Further, the upper limit thereof is not particularly limited, but may be, for example, 10,000 ppb by mass or less, 9,000 ppb by mass or less, 8,000 ppb by mass or less, 7,000 ppb by mass or less, 6,000 ppb by mass or less, 5,000 ppb by mass or less, 4,800 ppb by mass or less, 4,600 ppb by mass or less, 4,400 ppb by mass or less, 4,200 ppb by mass or less, 4,000 ppb by mass or less, 3,800 ppb by mass or less, 3,600 ppb by mass or less, 3,400 ppb by mass or less, 3,200 ppb by mass or less, 3,000 ppb by mass or less, 2,800 ppb by mass or less, 2,600 ppb by mass or less, 2,400 ppb by mass or less, 2,200 ppb by mass or less, 2,000 ppb by mass or less, 1,800 ppb by mass or less, 1,600 ppb by mass or less, 1,500 ppb by mass or less, 1,400 ppb by mass or less, 1,300 ppb by mass or less, 1,200 ppb by mass or less, 1,100 ppb by mass or less, 1,000 ppb by mass or less, 900 ppb by mass or less, 800 ppb by mass or less, 700 ppb by mass or less, 600 ppb by mass or less, 500 ppb by mass or less, 400 ppb by mass or less, 300 ppb by mass or less, 200 ppb by mass or less, 100 ppb by mass or less, 90 ppb by mass or less, 80 ppb by mass or less, 70 ppb by mass or less, 60 ppb by mass or less, 50 ppb by mass or less, 40 ppb by mass or less, 35 ppb by mass or less, 30 ppb by mass or less, or 20 ppb by mass or less. Further, the lower limit thereof is not particularly limited, and may be, for example, 0.0003 ppb by mass or more, 0.0006 ppb by mass or more, 0.001 ppb by mass or more, 0.003 ppb by mass or more, 0.006 ppb by mass or more, 0.0001 ppb by mass or more, 0.01 ppb by mass or more, 0.03 ppb by mass or more, 0.06 ppb by mass or more, 0.09 ppb by mass or more, 0.12 ppb by mass or more, 0.15 ppb by mass or more, 0.18 ppb by mass or more, 0.21 ppb by mass or more, 0.24 ppb by mass or more, 0.27 ppb by mass or more, 0.3 ppb by mass or more, 0.4 ppb by mass or more, 0.5 ppb by mass or more, 0.6 ppb by mass or more, 0.7 ppb by mass or more, 0.8 ppb by mass or more, 0.9 ppb by mass or more, 1.0 ppb by mass or more, 1.2 ppb by mass or more, 1.4 ppb by mass or more, 1.6 ppb by mass or more, 1.8 ppb by mass or more, 2.0 ppb by mass or more, 2.4 ppb by mass or more, 2.8 ppb by mass or more, 3.2 ppb by mass or more, 3.6 ppb by mass or more, 4.0 ppb by mass or more, 4.5 ppb by mass or more, 5.0 ppb by mass or more, 5.5 ppb by mass or more, 6.0 ppb by mass or more, 6.5 ppb by mass or more, 7.0 ppb by mass or more, 7.5 ppb by mass or more, 8.0 ppb by mass or more, 8.5 ppb by mass or more, 9.0 ppb by mass or more, 9.5 ppb by mass or more, 10 ppb by mass or more, 11 ppb by mass or more, 12 ppb by mass or more, 13 ppb by mass or more, 14 ppb by mass or more, 15 ppb by mass or more, 16 ppb by mass or more, 18 ppb by mass or more, 20 ppb by mass or more, 24 ppb by mass or more, 28 ppb by mass or more, 32 ppb by mass or more, 36 ppb by mass or more, 40 ppb by mass or more, 45 ppb by mass or more, 50 ppb by mass or more, 60 ppb by mass or more, 70 ppb by mass or more, 80 ppb by mass or more, 90 ppb by mass or more, 100 ppb by mass or more, 120 ppb by mass or more, 140 ppb by mass or more, 160 ppb by mass or more, 180 ppb by mass or more, 200 ppb by mass or more, 250 ppb by mass or more, 300 ppb by mass or more, 350 ppb by mass or more, 400 ppb by mass or more, 450 ppb by mass or more, 500 ppb by mass or more, 600 ppb by mass or more, 700 ppb by mass or more, 800 ppb by mass or more, or 900 ppb by mass or more. Numerical ranges specified by combining the above upper limits and lower limits are also disclosed in the present invention.

Furthermore, the food composition of the present invention may contain isochlorogenic acid and xanthohumol D. In this aspect, as preferable upper limits, lower limits, or numerical ranges for the ratio of the content of the isochlorogenic acid to the acidity, the ratio of the content of xanthohumol D to the acidity of the food composition of the present invention, the content of isochlorogenic acid of the food composition, and the content of xanthohumol D of the food composition, the numerical values relating to the above-described provision can be adopted.

The food composition of the present invention is preferable because, when the pH is a predetermined value or less, the effects of the present invention are more exhibited. When the pH is a predetermined value or less, the problem to be solved by the present invention becomes more significant, and although the principle is unknown, the bitter taste of a food composition containing isochlorogenic acid and/or xanthohumol D can be suppressed. Note that, in the present invention, the value of "pH" refers to a value measured at 1 atm and 20°C. Specifically, the upper limit of the pH of the food composition of the present invention is not limited, but can be, for example, 4.6 or less, 4.4 or less, 4.2 or less, 4.0 or less, 3.8 or less, 3.6 or less, 3.4 or less, 3.2 or less, 3.1 or less, or 2.9 or less. On the other hand, the lower limit thereof is not limited, but can be, for example, 1.6 or more, 1.7 or more, 1.8 or more, 1.9 or more, 2.0 or more, 2.05 or more, 2.10 or more, 2.15 or more, 2.2 or more, 2.3 or more, or 2.4 or more. More specifically, the pH of the food composition of the present invention may be usually 1.6 to 4.6, preferably 1.7 to 3.8, more preferably 1.8 to 3.5, even more preferably 1.9 to 3.4, still more preferably 1.95 to 3.35, particularly preferably 2.00 to 3.30, especially preferably 2.05 to 3.30, or 2.10 to 3.10. Numerical ranges specified by combining the above upper limits and lower limits are also disclosed in the present invention.

In the food composition of the present invention, the origin of isochlorogenic acid and/or xanthohumol D is not particularly limited, and may be derived from purified isochlorogenic acid and/or xanthohumol D, may be derived from a product obtained by extracting isochlorogenic acid and/or xanthohumol D from a plant or the like containing isochlorogenic acid and/or xanthohumol D, or may be derived from a product obtained by adding a solvent containing an organic acid and/or ethanol to a plant or the like containing isochlorogenic acid and/or xanthohumol D to extract isochlorogenic acid and/or xanthohumol D. However, the food composition of the present invention is preferably derived from a product obtained by extracting isochlorogenic acid and/or xanthohumol D from a plant containing isochlorogenic acid and/or xanthohumol D, and it is particularly preferable that the "product obtained by extracting isochlorogenic acid and/or xanthohumol D from a plant" is a product obtained by extracting isochlorogenic acid and/or xanthohumol D from a plant with a solvent having an acidity of 0.2 w/w% or more. In other words, the food composition of the present invention is particularly preferably a food composition obtained by extracting isochlorogenic acid and/or xanthohumol D from a plant with a solvent having an acidity of 0.2 w/w% or more, or a food composition obtained by using the food composition.

The acidity of the solvent is not particularly limited, but is preferably 0.2 w/w% or more or 0.2 to 30 w/w%, and the lower limit thereof may be, for example, 0.3 w/w% or more, 0.5 w/w% or more, 1.0 w/w% or more, 1.5 w/w% or more, 2.0 w/w% or more, 3.0 w/w% or more, 4.0 w/w% or more, 4.3 w/w% or more, 5.0 w/w% or more, 6.0 w/w% or more, 7.0 w/w% or more, 8.0 w/w% or more, 10.0 w/w% or more, 11.0 w/w% or more, 12.0 w/w% or more, 13.0 w/w% or more, 14.0 w/w% or more, 15.0 w/w% or more, or 17.0 w/w% or more. Further, the upper limit thereof may be, for example, 25.0 w/w% or less, 22.0 w/w% or less, 21.0 w/w% or less, 20.0 w/w% or less, 18.0 w/w% or less, 16.0 w/w% or less, 14.0 w/w% or less, 12.0 w/w% or less, 10.0 w/w% or less, 9.0 w/w% or less, 8.0 w/w% or less, 6.0 w/w% or less, or 4.0 w/w% or less. Further, the solvent may contain ethanol, and may contain ethanol in an amount of 0.00001 w/w% or more, 0.0001 w/w% or more, 0.001 w/w% or more, 0.01 w/w% or more, 0.05 w/w% or more, 0.1 w/w% or more, 0.3 w/w% or more, 0.5 w/w% or more, 0.7 w/w% or more, or 1.0 w/w% or more, 1.5 w/w% or more. Further, the upper limit thereof is not particularly limited, but may be, for example, 97 w/w% or less, 95 w/w% or less, 90 w/w% or less, 80 w/w% or less, 70 w/w% or less, 65 w/w% or less, 60 w/w% or less, 50 w/w% or less, 40 w/w% or less, 30 w/w% or less, 20 w/w% or less, 15 w/w% or less, 10 w/w% or less, 9.0 w/w% or less, 8.0 w/w% or less, and the range thereof may be, for example,.00001 w/w% or more to 97 w/w% or less. In particular, when the solvent has an acidity of 0.2 w/w% or more and contains ethanol at the above concentration, the astringent taste derived from herbs is suppressed and the extraction efficiency of xanthohumol D and the like is improved, and thus the solvent can be adopted as a preferred aspect of the present invention.

Furthermore, the solvent preferably contains acetic acid, and more preferably may contain brewed vinegar. Further, the ratio of the content of acetic acid derived from brewed vinegar (w/w%) to the content of acetic acid (w/w%) in the solvent having the acidity of 0.2 w/w% or more may be, for example, 0.5 or more, 0.6 or more, 0.7 or more, 0.8 or more, 0.9 or more, or 1, and the solvent may be brewed vinegar. Further, in a case where the food composition of the present invention is a food composition obtained by using a product obtained by extracting isochlorogenic acid and/or xanthohumol D from a plant with a solvent containing acetic acid, the content of acetic acid in the solvent is preferably 0.1 to 20.0 w/w%, and the lower limit thereof may be, for example, 2.0 w/w% or more, 3.0 w/w% or more, 4.0 w/w% or more, 5.0 w/w% or more, 7.0 w/w% or more, 9.0 w/w% or more, 10.0 w/w% or more, 11.0 w/w% or more, or 12.0 w/w% or more. Further, the upper limit thereof may be, for example, 22.0 w/w% or less, 20 w/w% or less, 18.0 w/w% or less, 16.0 w/w% or less, 14.0 w/w% or less, 12.0 w/w% or less, 10.0 w/w% or less, 8.0 w/w% or less, 7.0 w/w% or less, 6.0 w/w% or less, 5.0 w/w% or less, 4.0 w/w% or less, or 3.0 w/w% or less. Furthermore, in a case where the food composition of the present invention is a food composition obtained by using a product obtained by extracting isochlorogenic acid and/or xanthohumol D from a plant with a solvent containing acetic acid, the food composition preferably contains grain vinegar or fruit vinegar specified based on the JAS Act that came into effect on October 1, 2022, and may contain at least one, two, three, four, or five selected from the group consisting of rice vinegar, rice black vinegar, apple cider vinegar, grape vinegar, and pomegranate vinegar.

Further, examples of the plant containing the isochlorogenic acid and/or xanthohumol D include herbs. Herbs refer to parts of a plant body (plant fruits, peels, flowers, buds, bark, stems, leaves, seeds, roots, rhizomes, etc.) that have a unique aroma, pungent taste, and color tone and are incorporated into foods and beverages for purposes such as flavoring, deodorizing, seasoning, and coloring. More specifically, examples of herbs include roselle, watercress, arugula, artichoke, calendula, tarragon, chicory, stevia, dandelion, Perilla frutescens, perilla, savory, sage, thyme, basil, mint, lemon balm, parsley, anise, angelica, cumin, coriander, Oenanthe javanica, chervil, hawthorn, allspice, lemon myrtle, nasturtium, rooibos, safflower, elderflower, cinnamon, plantain, jasmine, tea, rosemary, oregano, chamomile, hop, chrysanthemum, wormwood, laurel, and cardamom.

According to one aspect of the present invention, the food composition of the present invention may contain an extract of herbs. Specifically, the food composition of the present invention preferably contains an extract of at least one herb selected from the group consisting of roselle, watercress, arugula, artichoke, calendula, tarragon, chicory, stevia, dandelion, Perilla frutescens, perilla, savory, sage, thyme, basil, mint, lemon balm, parsley, anise, angelica, cumin, coriander, Oenanthe javanica, chervil, hawthorn, allspice, lemon myrtle, nasturtium, rooibos, safflower, elderflower, cinnamon, plantain, jasmine, tea, rosemary, oregano, chamomile, hop, chrysanthemum, wormwood, laurel, and cardamom, and may contain an extract of at least two, three, four, five, six, or seven or more kinds of herbs selected from the group consisting of roselle, watercress, arugula, artichoke, calendula, tarragon, chicory, stevia, dandelion, Perilla frutescens, perilla, savory, sage, thyme, basil, mint, lemon balm, parsley, anise, angelica, cumin, coriander, Oenanthe javanica, chervil, hawthorn, allspice, lemon myrtle, nasturtium, rooibos, safflower, elderflower, cinnamon, plantain, jasmine, tea, rosemary, oregano, chamomile, hop, chrysanthemum, wormwood, laurel, and cardamom. Further, the food composition of the present invention particularly preferably contains an extract of hops as a herb containing xanthohumol D, and preferably contains an extract of at least one, two, three, or four or more kinds of herbs selected from the group consisting of rosemary, chamomile, chrysanthemum, wormwood, and laurel as herbs containing isochlorogenic acid. Further, the food composition may be a food composition obtained by using an extract of herbs obtained by extracting at least one, two, three, or four or more kinds of herbs selected from the group consisting of hop, rosemary, chamomile, chrysanthemum, wormwood, and laurel with the solvent having the acidity (for example, the solvent disclosed in the present description, such as a solvent containing an organic acid, a solvent having an acidity of 0.2 w/w% or more, and a solvent containing ethanol), or the herb extract itself may be used as the food composition of the present invention. According to this aspect, the effects of the present invention can be achieved while suppressing the astringent taste derived from herbs, resulting in a food composition with excellent versatility.

Furthermore, it is preferable that the food composition of the present invention contains acetic acid so as to satisfy the above-described provision for the content of organic acid, and contains an extract of at least one, two or more, or three or more kinds of herbs selected from the group consisting of chamomile, hop, rosemary, and laurel, thereby satisfying the provision regarding isochlorogenic acid and/or xanthohumol D. In this aspect, it becomes possible to suppress the throat irritation caused by acetic acid. Further, in a case where a hop extract is contained as the herb extract, the acetic acid smell can be suppressed. From these viewpoints, it is particularly preferable to satisfy the provision regarding the isochlorogenic acid and/or xanthohumol D by containing a Laurel extract or a hop extract. Furthermore, the herb extract (in particular the Laurel extract or hop extract) is preferably one that is extracted with the solvent having the acidity of 0.2 w/w% or more.

In the food composition of the present invention, it is preferable that the ratio of the peak area of cohumulone to the peak area of xanthohumol D as measured by the analysis method X is a predetermined value or less. Cohumulone is a compound identified by CAS number 511-25-1. Note that the cohumulone can be specified as a peak with a quantitative ion of m/z 347.1868 ± 0.02 eluted at around a retention time of 6.3 min when measured according to the analysis method X. For the food composition of the present invention, although the principle is unknown, when the ratio of the peak area of cohumulone to the peak area of xanthohumol D is a predetermined value or less, the astringent taste in the food composition of the present invention can be suppressed. Note that, for example, in an aspect in which xanthohumol D in the food composition of the present invention is supplied by an extract of herbs, the present provision can be implemented by extracting xanthohumol D from herbs with the solvent having the acidity of 0.2 w/w% or more. Note that, in this aspect, it is preferable to use hops as the herb. Specifically, reference can be made to the description of the invention related to the method for producing the food composition of the present invention. The ratio of the peak area of cohumulone to the peak area of xanthohumol D in a case where the food composition of the present invention is measured by the analysis method X may be preferably 17 or less, 16 or less, 14 or less, 13 or less, 12 or less, 11 or less, 10 or less, 9 or less, 8 or less, 7 or less, 6 or less, 5 or less, 4 or less, 3 or less, 2 or less, or 1 or less. Further, the lower limit thereof may be, for example, 0 or more, 0.02 or more, 0.04 or more, 0.06 or more, 0.08 or more, or 0.1 or more. Furthermore, the range thereof may be, for example, 0 to 17, preferably 0 to 16, more preferably 0 to 14, still more preferably 0 to 8, and particularly preferably 0 to 5. Numerical ranges specified by combining the above upper limits and lower limits are also disclosed in the present invention.

In the food composition of the present invention, it is preferable that the ratio of the peak area of gallic acid to the peak area of xanthohumol D in a case where the food composition of the present invention is measured by the analysis method X is a predetermined value or less. Gallic acid is a compound identified by CAS number 149-91-7. Note that, gallic acid can be specified as a peak with a quantitative ion of m/z 169.0145 ± 0.02 eluted at around a retention time of 0.7 min when measured according to the analysis method X. For the food composition of the present invention, although the principle is unknown, when the ratio of the peak area of gallic acid to the peak area of xanthohumol D is a predetermined value or less, the astringent taste in the food composition of the present invention can be suppressed. Note that, for example, in an aspect in which xanthohumol D in the food composition of the present invention is supplied by an extract of herbs, the present provision can be implemented by extracting xanthohumol D from herbs with the solvent having the acidity of 0.2 w/w% or more. Note that, in this aspect, it is preferable to use hops as the herb. Specifically, reference can be made to the description of the invention related to the method for producing the food composition of the present invention. The ratio of the peak area of gallic acid to the peak area of xanthohumol D in a case where the food composition of the present invention is measured by the analysis method X may be preferably 24 or less, 23 or less, 22 or less, 21 or less, 20 or less, 18 or less, 16 or less, 14 or less, 13 or less, 12 or less, 11 or less, 10 or less, 9 or less, 8 or less, 7 or less, 6 or less, 5 or less, 4 or less, 3 or less, 2 or less, or 1 or less. Further, the lower limit thereof may be, for example, 0 or more, 0.02 or more, 0.04 or more, 0.06 or more, 0.08 or more, or 0.1 or more. Furthermore, the range thereof may be, for example, 0 to 24, preferably 0 to 22, more preferably 0 to 20, still more preferably 0 to 10, and particularly preferably 0 to 5. Numerical ranges specified by combining the above upper limits and lower limits are also disclosed in the present invention.

Similarly, in the food composition of the present invention, the ratio of the sum of the peak area of cohumulone and the peak area of gallic acid to the peak area of xanthohumol D in a case where the food composition of the present invention is measured by the analysis method X is preferably a predetermined value or less. Note that, for example, in an aspect in which xanthohumol D in the food composition of the present invention is supplied by an extract of herbs, the present provision can be achieved by extracting xanthohumol D from herbs by the solvent having the acidity of 0.2 w/w% or more. Note that, in this aspect, it is preferable to use hops as the herb. Specifically, reference can be made to the description of the invention related to the method for producing the food composition of the present invention. The ratio of the sum of the peak area of cohumulone and the peak area of gallic acid to the peak area of xanthohumol D in a case where the food composition of the present invention is measured by the analysis method X may be preferably 42 or less, 40 or less, 38 or less, 36 or less, 34 or less, 32 or less, 30 or less, 28 or less, 26 or less, 24 or less, 22 or less, 20 or less, 18 or less, 16 or less, 14 or less, 12 or less, 10 or less, 9 or less, 8 or less, 7 or less, 6 or less, 5 or less, 4 or less, 3 or less, 2 or less, or 1 or less. Further, the lower limit thereof may be, for example, 0 or more, 0.02 or more, 0.04 or more, 0.06 or more, 0.08 or more, or 0.1 or more, 0.2 or more, 0.3 or more, 0.4 or more, 0.5 or more, 0.6 or more, 0.7 or more, 0.8 or more, 0.9 or more, or 1.0 or more. Furthermore, the range may be, for example, 0 to 42, preferably 0 to 40, more preferably 0 to 30, even more preferably 0 to 15, still more preferably 0 to 10, particularly preferably 0 to 8, and especially preferably 0 to 5. Numerical ranges specified by combining the above upper limits and lower limits are also disclosed in the present invention.

Similarly, in the food composition of the present invention, the ratio of the peak area of cohumulone, in a case where the food composition of the present invention is measured by the analysis method X, to the peak area of isochlorogenic acid in a case where the food composition of the present invention is measured by the analysis method Y, may be a predetermined value or less.. Specifically, the ratio of the peak area of cohumulone, in a case where the food composition of the present invention is measured by the analysis method X, to the peak area of isochlorogenic acid in a case where the food composition of the present invention is measured by the analysis method Y may be, for example, 17 or less, 16 or less, 14 or less, 13 or less, 12 or less, 11 or less, 10 or less, 9 or less, 8 or less, 7 or less, 6 or less, 5 or less, 4 or less, 3 or less, 2 or less, or 1 or less. Further, the lower limit thereof may be, for example, for example, 0 or more, 0.02 or more, 0.04 or more, 0.06 or more, 0.08 or more, or 0.1 or more. Furthermore, the range thereof may be, for example, 0 to 20. Numerical ranges specified by combining the above upper limits and lower limits are also disclosed in the present invention.

Similarly, in the food composition of the present invention, the ratio of the peak area of gallic acid, in a case where the food composition of the present invention is measured by the analysis method X, to the peak area of isochlorogenic acid in a case where the food composition of the present invention is measured by the analysis method Y, may be a predetermined value or less. Specifically, the ratio of the peak area of gallic acid, in a case where the food composition of the present invention is measured by the analysis method X, to the peak area of isochlorogenic acid in a case where the food composition of the present invention is measured by the analysis method Y may be, for example, 24 or less, 23 or less, 22 or less, 21 or less, 20 or less, 18 or less, 16 or less, 14 or less, 13 or less, 12 or less, 11 or less, 10 or less, 9 or less, 8 or less, 7 or less, 6 or less, 5 or less, 4 or less, 3 or less, 2 or less, or 1 or less. Further, the lower limit thereof may be, for example, 0 or more, 0.02 or more, 0.04 or more, 0.06 or more, 0.08 or more, or 0.1 or more. Furthermore, the range thereof may be, for example, 0 to 29. Numerical ranges specified by combining the above upper limits and lower limits are also disclosed in the present invention.

Similarly, in the food composition of the present invention, the ratio of the sum of the peak area of cohumulone and the peak area of gallic acid, in a case where the food composition of the present invention is measured by the analysis method X, to the peak area of isochlorogenic acid in a case where the food composition of the present invention is measured by the analysis method Y, may be a predetermined value or less. Specifically, the ratio of the sum of the peak area of cohumulone and the peak area of gallic acid, in a case where the food composition of the present invention is measured by the analysis method X, to the peak area of isochlorogenic acid in a case where the food composition of the present invention is measured by the analysis method Y, may be, for example, 42 or less, 40 or less, 38 or less, 36 or less, 34 or less, 32 or less, 30 or less, 28 or less, 26 or less, 24 or less, 22 or less, 20 or less, 18 or less, 16 or less, 14 or less, 12 or less, 10 or less, 9 or less, 8 or less, 7 or less, 6 or less, 5 or less, 4 or less, 3 or less, 2 or less, or 1 or less. Further, the lower limit thereof may be, for example, 0 or more, 0.02 or more, 0.04 or more, 0.06 or more, 0.08 or more, or 0.1 or more, 0.2 or more, 0.3 or more, 0.4 or more, 0.5 or more, 0.6 or more, 0.7 or more, 0.8 or more, 0.9 or more, or 1.0 or more. Furthermore, the range thereof may be, for example, 0 to 42. Numerical ranges specified by combining the above upper limits and lower limits are also disclosed in the present invention.

Further, in the food composition of the present invention, it is preferable that the ratio of the peak area of a component Z having a peak at m/z 603.17097 ± 0.02 eluted at around a retention time of 3.2 min to the peak area of isochlorogenic acid as measured by liquid chromatography mass spectrometry X' is a predetermined value or less.

Further, for example, in an aspect in which isochlorogenic acid in the food composition of the present invention is supplied by an extract of herbs, the present provision can be implemented by extracting isochlorogenic acid from herbs with the solvent having the acidity of 0.2 w/w% or more. Note that, in this aspect, it is preferable to use at least one, two, three, or four or more kinds of herbs selected from the group consisting of rosemary, chamomile, hop, chrysanthemum, wormwood, and laurel as the herb. Specifically, reference can be made to the description of the invention related to the method for producing the food composition of the present invention. The ratio of the peak area of the component Z having a peak at m/z 603.17097 ± 0.02 eluted at around a retention time of 3.2 min, in a case where the food composition of the present invention is measured by the following analysis method X', to the peak area of isochlorogenic acid in a case where the food composition of the present invention is measured by the above analysis method X', may be preferably 10 or less, 9 or less, 8 or less, 7 or less, 6 or less, 5 or less, 4 or less, 3 or less, 2 or less, 1 or less, or 0.1 or less. Further, the lower limit thereof may be 0.0001 or more, 0.001 or more, or 0.01 or more. Further, the range thereof may be 0.0001 to 10. Numerical ranges specified by combining the above upper limits and lower limits are also disclosed in the present invention.

### Analysis method X': liquid chromatography mass spectrometry

### Separation conditions

. Column: ACQUITY UPLC BEH C18 2.1 × 50 mm 1.7 µm Column manufactured by Waters Corporation
· Column temperature: 40°C
· Injection volume: 5 µL applied
· Flow rate: 0.4 mL/min
· Mobile phase: Solution A (containing formic acid in water at 0.1 v/v%) and Solution B (containing formic acid in acetonitrile at 0.1 v/v%)
· Mobile phase gradient conditions (ratio of mobile phase A to mobile phase B)
   0 - 1.0 min 95%A : 5%B
   1.5 min 90%A : 10%B
   4.5 min 70%A : 30%B
   5.5 min 60%A : 40%B
   7.0 min 50%A : 50%B
   9.5 min 30%A : 70%B
   9.5 - 12.5 min 100%B
   MS conditions: ion source temperature 200°C
   Ionization method: ESI (ionization voltage 5.0 eV)
   MS scan: m/z 50 to 1,500

For each sample, H+ adduct ions are analyzed in positive mode, the component peak in each sample is identified based on quantitative ions (isochlorogenic acid quantitative ions m/z 517.9001 ± 0.02), and the peak area is determined. From the obtained peak area of isochlorogenic acid, the concentration of isochlorogenic acid contained in each sample is calculated, taking into account the dilution rate in the solvent.

### Protein

The content of protein in the food composition of the present invention is measured by a macro-modified Kjeldahl method in accordance with the method for measuring "protein" in the Standard Tables of Food Composition in Japan, 2015 (Seventh Revised Edition). In the food composition of the present invention, the ratio of the content of isochlorogenic acid (ppm by mass) to the content of protein (ppm by mass) may be within a predetermined range. This is because when the food composition of the present invention contains protein, a deterioration smell is generated when the food composition is stored, but the deterioration smell can be suppressed by containing a predetermined amount of isochlorogenic acid.

The ratio of the content of isochlorogenic acid (ppm by mass) to the content of protein (ppm by mass) in the food composition of the present invention may be preferably 0.001 to 1,000,000, and particularly preferably 0.01 to 1,000,000. Further, the lower limit thereof may be preferably 0.002 or more, 0.003 or more, 0.005 or more, 0.007 or more, 0.01 or more, 0.015 or more, 0.017 or more, 0.018 or more, 0.02 or more, particularly preferably 0.01 or more, and may be 0.03 or more, 0.05 or more, 0.1 or more, 0.15 or more, 0.2 or more, 0.25 or more, 0.3 or more, 0.35 or more, 0.4 or more, 0.45 or more, 0.5 or more, 0.6 or more, 0.7 or more, 0.8 or more, 0.9 or more, 1.0 or more, 2.0 or more, 3.0 or more, 4.0 or more, 5.0 or more, 6.0 or more, 7.0 or more, 8.0 or more, 9.0 or more, 10 or more, 12 or more, 16 or more, 18 or more, 20 or more, 30 or more, 40 or more, 50 or more, 60 or more, 70 or more, 80 or more, 90 or more, 100 or more, 500 or more, 600 or more, 700 or more, 800 or more, 900 or more, 1,000 or more, 1,500 or more, 2,000 or more, 2,500 or more, 3,000 or more, 4,000 or more, 5,000 or more, 6,000 or more, 7,000 or more, 8,000 or more, 9,000 or more, 10,000 or more, 20,000 or more, 30,000 or more, 40,000 or more, 50,000 or more, 60,000 or more, 70,000 or more, or 80,000 or more. Further, the upper limit thereof may be, for example, 500,000 or less, 300,000 or less, 100,000 or less, 90,000 or less, 85,000 or less, 75,000 or less, 65,000 or less, 55,000 or less, 45,000 or less, 35,000 or less, 25,000 or less, 20,000 or less, 15,000 or less, 10,000 or less, 9,000 or less, 8,000 or less, 7,000 or less, 6,000 or less, 5,000 or less, 4,000 or less, 3,000 or less, 2,000 or less, 1,800 or less, 1,600 or less, 1,400 or less, 1,200 or less, 1,000 or less, 900 or less, 800 or less, 700 or less, 600 or less, 500 or less, 400 or less, 300 or less, 200 or less, 100 or less, 90 or less, 80 or less, 70 or less, 60 or less, 50 or less, 40 or less, 30 or less, 20 or less, 10 or less, 9 or less, 8 or less, 7 or less, 6 or less, 5 or less, 4 or less, 3 or less, 2 or less, 1 or less, 0.5 or less, 0.4 or less, 0.3 or less, or 0.2 or less. Numerical ranges specified by combining the above upper limits and lower limits are also disclosed in the present invention.

Further, in the food composition of the present invention, the ratio of the content of xanthohumol D (ppb by mass) to the content of protein (ppm by mass) may be within a predetermined range. This is because when the food composition of the present invention contains protein, a deterioration smell is generated when the food composition is stored, but the deterioration smell can be suppressed by containing a predetermined amount of xanthohumol D. The ratio of the content of xanthohumol D (ppb by mass) to the content of protein (ppm by mass) in the food composition of the present invention may be preferably 0.00001 to 10,000 or 0.002 to 100,000. Further, the lower limit thereof may be preferably 0.00001 or more, 0.00002 or more, 0.00004 or more, 0.00006 or more, 0.00008 or more, 0.0001 or more, 0.0002 or more, 0.0004 or more, 0.0006 or more, 0.0008 or more, 0.001 or more, 0.002 or more, 0.005 or more, 0.008 or more, particularly preferably 0.01 or more, and may be 0.02 or more, 0.04 or more, 0.06 or more, 0.08 or more, 0.1 or more, 0.2 or more, 0.3 or more, 0.4 or more, 0.5 or more, 0.6 or more, 0.7 or more, 0.8 or more, 0.9 or more, 1.0 or more, 1.2 or more, 1.4 or more, 1.6 or more, 1.8 or more, 2.0 or more, 3.0 or more, 4.0 or more, 5.0 or more, 6.0 or more, 7.0 or more, 8.0 or more, 9.0 or more, 10 or more, 20 or more, 30 or more, 40 or more, 50 or more, 60 or more, 70 or more, 80 or more, 90 or more, 100 or more, 120 or more, 140 or more, 160 or more, 180 or more, 200 or more, 300 or more, 400 or more, 500 or more, 600 or more, 700 or more, 800 or more, 900 or more, 1,000 or more, 2,000 or more, 3,000 or more, 4,000 or more, 5,000 or more, 6,000 or more, 7,000 or more, 8,000 or more, 9,000 or more, 10,000 or more, 20,000 or more, 30,000 or more, 40,000 or more, or 50,000 or more. Further, the upper limit thereof may be, for example, 55,000 or less, 45,000 or less, 35,000 or less, 25,000 or less, 15,000 or less, 10,000 or less, 9,500 or less, 8,500 or less, 7,500 or less, 6,500 or less, 5,500 or less, 4,500 or less, 3,500 or less, 2,500 or less, 1,500 or less, 1,000 or less, 950 or less, 850 or less, 750 or less, 650 or less, 550 or less, 450 or less, 350 or less, 250 or less, 150 or less, 100 or less, 90 or less, 80 or less, 70 or less, 60 or less, 50 or less, 40 or less, 30 or less, 20 or less, 10 or less, 9 or less, 8 or less, 7 or less, 6 or less, 5 or less, 4 or less, 3 or less, 2 or less, 1 or less, 0.9 or less, or less, 0.8 or less, 0.7 or less, 0.6 or less, 0.5 or less, 0.4 or less, 0.3 or less, 0.2 or less, or 0.1 or less. Numerical ranges specified by combining the above upper limits and lower limits are also disclosed in the present invention.

In the food composition of the present invention, it is preferable that the content of protein is within a predetermined range from a viewpoint of achieving the effect of suppressing the deterioration smell during storage of the food composition by isochlorogenic acid and/or xanthohumol D. Specifically, the content of protein (ppm by mass) of the food composition of the present invention may be, for example, 0 to 200,000 ppm by mass, preferably 0.5 to 150,000 ppm by mass, and particularly preferably 1 to 100,000 ppm by mass. Further, the lower limit thereof may be, for example, 0.1 ppm by mass or more, 0.3 ppm by mass or more, 0.6 ppm by mass or more, 0.9 ppm by mass or more, 1.2 ppm by mass or more, 1.5 ppm by mass or more, 1.8 ppm by mass or more, 2.1 ppm by mass or more, 2.4 ppm by mass or more, 2.7 ppm by mass or more, 3.0 ppm by mass or more, 4.0 ppm by mass or more, 5.0 ppm by mass or more, 6.0 ppm by mass or more, 7.0 ppm by mass or more, 8.0 ppm by mass or more, 9.0 ppm by mass or more, 10 ppm by mass or more, 15 ppm by mass or more, 20 ppm by mass or more, 30 ppm by mass or more, 40 ppm by mass or more, 50 ppm by mass or more, 60 ppm by mass or more, 70 ppm by mass or more, 80 ppm by mass or more, 90 ppm by mass or more, 100 ppm by mass or more, 150 ppm by mass or more, 200 ppm by mass or more, 300 ppm by mass or more, 400 ppm by mass or more, 500 ppm by mass or more, 600 ppm by mass or more, 700 ppm by mass or more, 800 ppm by mass or more, 900 ppm by mass or more, 1,000 ppm by mass or more, 1,500 ppm by mass or more, 2,000 ppm by mass or more, 2,500 ppm by mass or more, 3,500 ppm by mass or more, 4,500 ppm by mass or more, 5,500 ppm by mass or more, 6,500 ppm by mass or more, 7,500 ppm by mass or more, 8,500 ppm by mass or more, 9,500 ppm by mass or more, 10,000 ppm by mass or more, 15,000 ppm by mass or more, 20,000 ppm by mass or more, 30,000 ppm by mass or more, 40,000 ppm by mass or more, or 50,000 ppm by mass or more. Further, the upper limit thereof may be, for example, 180,000 ppm by mass or less, 160,000 ppm by mass or less, 140,000 ppm by mass or less, 120,000 ppm by mass or less, 100,000 ppm by mass or less, 90,000 ppm by mass or less, 80,000 ppm by mass or less, 70,000 ppm by mass or less, 60,000 ppm by mass or less, 50,000 ppm by mass or less, 40,000 ppm by mass or less, 30,000 ppm by mass or less, 20,000 ppm by mass or less, 15,000 ppm by mass or less, 10,000 ppm by mass or less, 9,000 ppm by mass or less, 8,000 ppm by mass or less, 7,000 ppm by mass or less, 6,000 ppm by mass or less, 5,000 ppm by mass or less, 4,000 ppm by mass or less, 3,000 ppm by mass or less, 2,000 ppm by mass or less, 1,000 ppm by mass or less, 900 ppm by mass or less, 800 ppm by mass or less, 700 ppm by mass or less, 600 ppm by mass or less, 500 ppm by mass or less, 400 ppm by mass or less, 300 ppm by mass or less, 200 ppm by mass or less, 100 ppm by mass or less, 90 ppm by mass or less, 80 ppm by mass or less, 70 ppm by mass or less, 60 ppm by mass or less, 50 ppm by mass or less, or 30 ppm by mass or less. Numerical ranges specified by combining the above upper limits and lower limits are also disclosed in the present invention.

### Soluble Saccharide

When the food composition of the present invention contains a "soluble saccharide", the above-described effect of suppressing the deterioration smell by isochlorogenic acid and/or xanthohumol D is remarkably achieved. The "soluble saccharide" refers to a saccharide soluble in water, and is a general term for monosaccharides and oligosaccharides (saccharides to which 2 to 10 monosaccharides are bonded). Therefore, starch to which a much larger number of sugars are bonded is not included. The content of soluble saccharide in the food composition of the present invention is determined by measuring using a high performance liquid chromatography in accordance with the method for measuring "available carbohydrates (glucose, fructose, galactose, sucrose, maltose, lactose, and trehalose)" in the Standard Tables of Food Composition in Japan, 2015 (Seventh Revised Edition), and summing up the numerical values obtained by comparing each measured value with the content of standard monosaccharides or oligosaccharides (2 to 10 sugars) of a known concentration.

The content of soluble saccharide (w/w%) in the food composition of the present invention can be, for example, in the range of 0.01 to 25 w/w%, and may be preferably 0.02 to 24 w/w%, more preferably 0.05 to 23 w/w%, even more preferably 0.08 to 22 w/w%, still more preferably 0.1 to 21.5 w/w%, particularly preferably 0.15 to 20.5 w/w%, and especially preferably 0.20 to 16.0 w/w%. Further, the upper limit thereof can be preferably 25 w/w% or less, 20 w/w% or less, 18 w/w% or less, 17 w/w% or less, or 15 w/w% or less, or 14 w/w% or less, or 13 w/w% or less, or 12 w/w% or less, or 11 w/w% or less, or 10 w/w% or less, or 9 w/w% or less, or 8 w/w% or less, or 7 w/w% or less, or 6 w/w% or less. On the other hand, the lower limit thereof is not limited, but may be 0.01 w/w% or more, 0.05 w/w% or more, 0.1 w/w% or more, 0.2 w/w% or more, 0.3 w/w% or more, 0.5 w/w% or more, 0.8 w/w% or more, 1.0 w/w% or more, 1.5 w/w% or more, 2.0 w/w% or more. Numerical ranges specified by combining the above upper limits and lower limits are also disclosed in the present invention. By satisfying the present provision, the sour taste of the food composition can be made milder, and the effect of suppressing the deterioration smell by isochlorogenic acid and/or xanthohumol D is remarkably achieved.

Further, the food composition of the present invention may have a predetermined content of lipid, and the range thereof may be, for example, 0 to 30 w/w%. Further, the lower limit thereof may be, for example, 0 w/w% or more, 0.1 w/w% or more, 0.3 w/w% or more, 0.5 w/w% or more, 1.0 w/w% or more, 1.5 w/w% or more, 2.0 w/w% or more, 3.0 w/w% or more, 5.0 w/w% or more, 8.0 w/w% or more, 10.0 w/w% or more, 15.0 w/w% or more, 20.0 w/w% or more. Further, the upper limit thereof may be, for example, 25.0 w/w% or less, 22.0 w/w% or less, 20.0 w/w% or less, 18.0 w/w% or less, 16.0 w/w% or less, 14.0 w/w% or less, 12.0 w/w% or less, 10.0 w/w% or less, 8.0 w/w% or less, 6.0 w/w% or less, 5.0 w/w% or less, 4.0 w/w% or less, 3.0 w/w% or less, 2.0 w/w% or less, 1.0 w/w% or less, 0.8 w/w% or less, 0.6 w/w% or less, 0.5 w/w% or less, 0.4 w/w% or less, or 0.2 w/w% or less. Note that, in a case where the food composition of the present invention contains xanthohumol D, when the food composition of the present invention contains a lipid so as to satisfy the above provision, the effect of suppressing the deterioration smell by xanthohumol D is remarkably achieved. Further, the content of lipid of the food composition of the present invention is measured by a Soxhlet extraction method in accordance with the method for measuring "lipid" in the Standard Tables of Food Composition in Japan, 2015 (Seventh Revised Edition).

### Food Composition

The "food composition" is not particularly limited to its commonly used meaning, and examples thereof include a food composition to be consumed as it is and a composition for preparing a food composition to be consumed as it is (a concentrate for preparing a beverage, a seasoning, and the like). Further, in one aspect of the present invention, the food composition of the present invention can be a liquid food composition. Further, the food composition of the present invention may be preferably a beverage, a concentrate for preparing a beverage, or a seasoning. Further, examples of the composition for preparing a beverage include a concentrated type of beverage. This is diluted with a suitable beverage (for example, water or the beverage exemplified above) before consumption. A recommended dilution ratio is, for example, 1.1 to 50 times, preferably 2 to 20 times, more preferably 3 to 12 times, and still more preferably 4 to 8 times. Further, the food composition of the present invention is preferably a packaged food composition from a viewpoint of remarkably achieving the above-described deterioration smell suppressing effect.

Note that, according to one aspect of the present invention, the present invention may be a sour taste inhibitor containing isochlorogenic acid and/or xanthohumol D, used so as to satisfy the following requirement (b) in a food composition having an acidity of 0.02 w/w% or more:
(b) the following requirements (i) and/or (ii):
(i) the ratio of the content of isochlorogenic acid (ppm by mass) to the acidity (w/w%) is 0.5 or more; and/or
(ii) the ratio of the content of xanthohumol D (ppb by mass) to the acidity (w/w%) is 0.00001 or more. In other words, according to one aspect of the present invention, a sour taste inhibitor for preparing the food composition disclosed in the first embodiment is disclosed. Further, according to one aspect of the present invention, the content of isochlorogenic acid in the sour taste inhibitor of the present invention may satisfy the upper limit, lower limit, or numerical range disclosed in the first embodiment, the content of xanthohumol D may satisfy the upper limit, lower limit, or numerical range disclosed in the first embodiment, the ratio of the content of isochlorogenic acid (ppm by mass) to the acidity (w/w%) may satisfy the upper limit, lower limit, or numerical range disclosed in the first embodiment, and the ratio of the content of xanthohumol D to the acidity (w/w%) may satisfy the upper limit, lower limit, or numerical range disclosed in the first embodiment, the pH may satisfy the upper limit, lower limit, or numerical range disclosed in the first embodiment, the sour taste inhibitor may contain isochlorogenic acid and xanthohumol D in the upper limit, lower limit, or numerical range of the numerical values disclosed in the first embodiment, the sour taste inhibitor may be obtained by extracting isochlorogenic acid and/or xanthohumol D from a plant or the like containing isochlorogenic acid and/or xanthohumol D, or may be obtained by adding the solvent disclosed in the first embodiment to a plant or the like containing isochlorogenic acid and/or xanthohumol D and extracting isochlorogenic acid and/or xanthohumol D, the ratio of the content of acetic acid derived from brewed vinegar to the total content of acetic acid of the food composition may satisfy the upper limit, lower limit, or numerical range disclosed in the first embodiment, the sour taste inhibitor may contain the herb extract disclosed in the first embodiment, may satisfy the provision regarding cohumulone disclosed in the first embodiment, may satisfy the provision regarding gallic acid disclosed in the first embodiment, or may satisfy the provision regarding the component Z disclosed in the first embodiment.

The food composition to be consumed as it is is not particularly limited, and examples thereof include beverages, dairy products (for example, milk such as cow's milk, and processed products thereof such as skim milk powder, whole fat milk powder, concentrated milk, fermented milk, yoghurt, fresh cream, condensed milk, skim milk, cream powder, sweetened milk powder, modified milk powder, whey powder, and buttermilk powder), confectioneries, soup and cooked rice. Among these, beverages, seasonings, or cooked rice are preferred.

Examples of the beverage include fruit juice-containing beverages (for example, fruit juices such as citrus fruits (mandarin orange, orange, lemon, lime, grapefruit, yuzu, kabosu, sudachi, bergamot, pink grapefruit, citrus hassaku, calamansi, shekwasha, etc.), tropical fruits (pineapple, banana, guava, mango, acerola, papaya, passion fruit, etc.), lychee, strawberry, apple, peach, grape (white grape, red grape, etc.), black currant, raspberry, pomegranate, Japanese apricot, pear, apricot, plum, kiwi fruit, melon, blueberry, and acai, ades, near water, beauty drinks, smoothies, and the like), dairy product-containing beverages (for example, beverages containing milk components such as milk such as cow's milk, and processed products thereof such as skim milk powder, whole fat milk powder, concentrated milk, fermented milk, yoghurt, fresh cream, condensed milk, butter, skim milk, cream powder, sweetened milk powder, modified milk powder, whey powder, and buttermilk powder), vegetable beverages (for example, juices of tomato, carrots, pumpkin, and the like, smoothies, green juice, and the like), soft drinks (for example, sports drinks, ades such as lemonade, and fruit-flavored drinks), carbonated drinks, jelly drinks, grain drinks (for example, grain drinks mainly made from rice, soy milk, and almond, and the like), tea-based beverages (for example, in addition to black tea, oolong tea, green tea, dark tea, powdered green tea, jasmine tea, rosehip tea, chamomile tea, and roasted green tea, blended tea (grains such as adlay, barley, brown rice, soybean, and corn, persimmon leaf, loquat leaf, leaves of bear bamboo grass, Gynostemma, Angelica keiskei, Houttuynia and the like, kelp, safflower, shiitake mushroom, and Litchi chinensis, and the like)), coffee beverages, powdered beverages (for example, cocoa, green juice, etc.), and alcoholic beverages (for example, beer-taste beverages such as beer and low-malt beer, fruit wines, brewed liquors such as sake, distilled liquors such as shochu, whiskey, brandy, and spirits, mixed liquors such as liqueur made by mixing distilled liquors with auxiliary ingredients such as sugars, and cocktails, fizzes, shochu highball, and the like made by adding fruit juices, flavors, emulsified flavors (flavor preparations emulsified so as to stably disperse oil-soluble flavor in water), carbon dioxide, and the like to these alcoholic beverages). Among these, fruit juice-containing beverages are preferred. Further, in one aspect of the present invention, the food composition of the present invention may contain a flavor. Note that, examples of the flavor include a flavor having a flavor of fruit juice to be described later (lemon flavor, apple flavor, pomegranate flavor, blueberry flavor), but other flavors such as yoghurt flavor, Japanese pepper flavor, and ginger flavor can also be appropriately used, and the type thereof is not limited. Note that, as described above, the food composition of the present invention may contain isochlorogenic acid and/or xanthohumol derived from an extract of the herbs, and a solvent containing ethanol may be used as the solvent in the extract. Therefore, the food composition of the present invention may be an alcoholic beverage, in particular may be an alcoholic beverage containing an extract of the herbs obtained by a solvent containing ethanol, thereby containing isochlorogenic acid and/or xanthohumol. Further, in a case where the food composition of the present invention is an alcoholic beverage, the content of ethanol in the alcoholic beverage may be, for example, 0.1 w/w% to 10 w/w% or less. Further, the lower limit thereof may be, for example, 0.1 w/w% or more, 0.2 w/w% or more, 0.3 w/w% or more, 0.4 w/w% or more, 0.5 w/w% or more, and the upper limit thereof may be, for example, 10 w/w% or less, 9.0 w/w% or less, 8.0 w/w% or less, 7.0 w/w% or less, 6.0 w/w% or less, 5.0 w/w% or less, 4.0 w/w% or less, 3.0 w/w% or less, 2.5 w/w% or less, 2.0 w/w% or less, 1.5 w/w% or less, 1.0 w/w% or less, 0.9 w/w% or less, 0.8 w/w% or less.

In an aspect in which the food composition of the present invention contains fruit juice, it is possible to achieve the effect of suppressing the deterioration smell after storage of the food composition. Therefore, in one aspect of the present invention, the food composition of the present invention may contain fruit juice. In the present invention, the term "fruit juice" refers to a liquid part of a fruit obtained by squeezing or extracting the fruit, and in a case of using a puree or grated fruit obtained by straining or grating the fruit, it refers to the liquid part therein. Examples of the fruit juice used in a liquid seasoning of the present invention include fruit juices derived from citrus fruit (for example, lemon, Valencia orange, navel orange, grapefruits, lime, shekwasha, bitter orange, yuzu, kabosu, sudachi, citron, Buddha's hand citron, citrus natsudaidai, citrus hassaku, hyuganatsu, sweetie, dekopon mandarin, iyokan, tankan orange, Seminole, citrus grandis, mandarin orange, citrus unshiu, ponkan orange, citrus kinokuni, kumquat, yukou, pomelo, citrus maxima, and the like), apple, pineapple, peach, grape, strawberry, pear, banana, kiwi, black currant, acerola, blueberry, raspberry, persimmon, apricot, guava, plum, mango, papaya, lychee, and the like. These fruit juices can be used singly or in combination of two or more kinds thereof. Further, the fruit juice may be processed by freezing, concentration, reconstitution, or the like.

The content of fruit juice (in straight fruit juice equivalent) of the food composition of the present invention can be a predetermined amount. The value can be, for example, in the range of 0.05 to 300 w/w% or less in wet mass equivalent. Specifically, the lower limit thereof can be 0.05 w/w% or more, 0.1 w/w% or more, or 0.15 w/w% or more, or 0.2 w/w% or more, 0.5 w/w% or more, 1.0 w/w% or more, 1.5 w/w% or more, 2.0 w/w% or more, 2.5 w/w% or more, 3.0 w/w% or more, 4.0 w/w% or more, 5.0 w/w% or more, 7.0 w/w% or more, 10.0 w/w% or more, 15.0 w/w% or more, 18.0 w/w% or more, 20.0 w/w% or more, 23.0 w/w% or more, 25.0 w/w% or more, 30.0 w/w% or more, 35.0 w/w% or more, 40.0 w/w% or more, 50.0 w/w% or more, 60.0 w/w% or more, or 70.0 w/w% or more. On the other hand, the upper limit thereof can be 250 w/w% or less, 220 w/w% or less, 200 w/w% or less, 180 w/w% or less, 150 w/w% or less, 130 w/w% or less, 120 w/w% or less, 100 w/w% or less, 90 w/w% or less, 80 w/w% or less, 70 w/w% or less, 60 w/w% or less, 50 w/w% or less, 40 w/w% or less, 30 w/w% or less, 25 w/w% or less, 23 w/w% or less, 21 w/w% or less, 20 w/w% or less, 19 w/w% or less, 18 w/w% or less, 16 w/w% or less, 14 w/w% or less, 12 w/w% or less, 11 w/w% or less, or 10 w/w% or less, 9.0 w/w% or less, 8.0 w/w% or less, 6.0 w/w% or less, 5.0 w/w% or less, 4.0 w/w% or less, 3.5 w/w% or less, 3.0 w/w% or less, 2.7 w/w% or less, 2.4 w/w% or less, 2.2 w/w% or less, 2.0 w/w% or less, 1.8 w/w% or less, 1.6 w/w% or less, 1.4 w/w% or less, 1.0 w/w% or less, or 0.8 w/w% or less. Note that, the content of fruit juice (in straight fruit juice equivalent) of the food composition refers to the content of fruit juice in straight equivalent to the fruit juice in a case where only one kind of fruit juice is contained in the food composition, and refers to the total value of the content of fruit juice in straight equivalent to each fruit juice in a case where two or more kinds of fruit juices are contained. Furthermore, the food composition of the present invention may be adopted as a preferred aspect of the present invention because the deterioration smell after storage is significantly suppressed by satisfying both the provision regarding the content of fruit juice and the provision regarding the ratio of the content of isochlorogenic acid (ppm by mass) to the content of protein (ppm by mass), or satisfying both the provision regarding the content of fruit juice and the provision regarding the ratio of the content of xanthohumol D (ppb by mass) to the content of protein (ppm by mass).

Note that, in one aspect of the present invention, even when two or more kinds of fruit juices are contained, a content rate of each individual fruit juice may satisfy the provision regarding the "content of fruit juice of food composition (in straight fruit juice equivalent)". However, in this case, the content of fruit juice of the food composition (in straight fruit juice equivalent; the total content of fruit juice) is preferably 300 w/w% or less.

Further, the fruit juice may be a fruit juice having the content of citric acid of 0.1 w/w% or more, or 0.25 w/w% or more, or 0.5 w/w% or more, or 0.75 w/w% or more, or 1.0 w/w% or more, or 1.5 w/w% or more in wet mass equivalent, may be a fruit juice that is specified as a citric acid standard in the JAS standard for fruit juices (Japanese Agricultural Standard for Fruit juices and nectars, Ministry of Agriculture, Forestry and Fisheries Notification No. 3118 of December 24, 2013), and among these, may be lemon juice, lime juice, or kabosu fruit juice. Further, the fruit juice may have a sugar content of 1.0 w/w% or more, or 1.5 w/w% or more, or 2.0 w/w% or more, or 2.5 w/w% or more, and may be a fruit juice that is specified as a sugar content standard in the JAS standard for fruit juices (Japanese Agricultural Standard for Fruit juices and nectars, Ministry of Agriculture, Forestry and Fisheries Notification No. 3118 of December 24, 2013), and among these, may be citrus fruit juice (excluding fruit juices without a sugar content standard) or apple juice.

In the present invention, the "content of fruit juice (in straight fruit juice equivalent)" refers to the concentration in w/w% (% by mass) when the straight fruit juice obtained by squeezing fruit is taken as 100%, and can be calculated by multiplying the content rate of the fruit juice (w/w%) contained in the food composition by a concentration rate of the fruit juice. For example, in a case where apple juice with a concentration rate of 5 is blended so that its content in the food composition is 10 w/w%, the content of fruit juice (in straight equivalent) becomes 50 w/w%. Further, the concentration rate of each fruit juice can be converted, for example, based on the minimum values of the standard of sugar refractometer index or acidity standard for straight fruit juice of various fruits shown in the JAS standard (Japanese Agricultural Standard for Fruit juices and nectars, Ministry of Agriculture, Forestry and Fisheries Notification No. 3118 of December 24, 2013).

The confectioneries are foods produced and cooked as favorite items that emphasize taste sensation such as sweet taste and salty taste or devise tactile sensation such as texture, and stimulate taste sensation such as olfaction with various odors. More specifically, examples thereof include jelly, pudding, chocolate, bar (snack bar), and frozen desserts (ice cream, sherbet, etc.), and among these, jelly and frozen desserts (ice cream, sherbet, etc.) are preferred, and among these, jelly is particularly preferred.

The soup is a food containing a large amount of water, which is obtained by cooking ingredients such as meats, fishes and shellfishes, eggs, milk, vegetables, fruits, herbs, and seaweed by an appropriate method. Specific examples of the soup include minestrone, hot and sour soup, white broth soup, and jjigae soup.

The composition for preparing a food composition to be consumed is not particularly limited, and examples thereof include a composition for preparing a beverage, a dessert sauce/cream, a seasoning, and a retort food. Among these, a composition for preparing a beverage, a dessert sauce/cream, a seasoning and the like are preferred, and a seasoning or a composition for preparing a beverage is more preferred.

Examples of the composition for preparing a beverage include a concentrated type of beverage. This is diluted with a suitable beverage (for example, water or the beverage exemplified above) before consumption. A recommended dilution ratio is, for example, 1.1 to 50 times, preferably 2 to 20 times, more preferably 3 to 12 times, and still more preferably 4 to 8 times.

The dessert sauce/cream is a liquid, powdery, or semi-solid sauce or cream that is poured over, placed on, or mixed with a beverage or confectioneries (jelly, cake, ice cream, etc.) to add flavor, texture, and color to a dessert, and specific examples thereof include caramel sauce, custard sauce, chocolate sauce, and fruit sauces such as raspberry sauce, strawberry sauce, blueberry sauce, apple sauce, or pomegranate sauce.

The seasoning is not particularly limited, and examples thereof include sauces (sesame-containing seasonings such as sesame sauce, grilled meat sauce, etc.), dressings (a non-oil dressing, a separation type dressing, an emulsified dressing, etc.), seasoning vinegars (for example, a general-purpose seasoning vinegar, a seasoning vinegar for vinegared dishes, a seasoning vinegar for sushi rice, a seasoning liquid for pickling in vinegar (for example, pickles, etc.), sweet vinegar, etc.), a seasoning for cooked rice, a seasoning for ponzu vinegar, a seasoning containing stock (for example, noodle soup base, hot pot soup base, etc.), a seasoning for natto, a seasoning for pickled vegetables, a seasoning for meat, vinegar, worcester sauce, ketchup, oyster sauce, salsa, sambal sauce, chili sauce, a seasoning containing pungent spices, chutney, mustard, and mayonnaise. Further, the seasoning of the present invention may contain an amino acid or nucleic acid.

### Amino Acid

In the present invention, the term "amino acid" refers to an amino acid and a salt thereof, and the type of amino acid is not particularly limited. The amino acid contained in the food composition of the present invention may be contained in a raw ingredient, or may be added from an external source separately from the ingredient. Further, in a case where an amino acid is added from an external source, a purified and extracted high-purity preparation may be added, or the amino acid may be added in the form of some material (for example, fruit juice) or a processed material (for example, an extract, concentrated fruit juice) containing an amino acid. However, it is preferable that the majority (more preferably all) of the amino acids contained in the food composition are derived from some ingredient. Examples of substances containing an amino acid include amino acid-based seasonings, and examples of amino acid-based seasonings include sodium L-glutamate, DL-alanine, glycine, L- or DL-tryptophan, L-phenylalanine, L- or DL-methionine, L-lysine, L-aspartic acid, sodium L-aspartate, and L-arginine. These amino acids may be used singly, or two or more kinds of them may be contained in any combination or in any ratio.

The total content of amino acid of the food composition of the present invention is not particularly limited, and is, for example, 0.3 to 1,500 mg/100 ml, 0.5 to 1,200 mg/100 ml, 0.8 to 1,000 mg/100 ml, 1.0 to 800 mg/100 ml, 2.0 to 500 mg/100 ml, or 3.0 to 250 mg/100 ml. Further, the upper limit thereof is, for example, 1,600 mg/100 ml or less, 1,400 mg/100 ml or less, 1,100 mg/100 ml or less, 900 mg/100 ml or less, 750 mg/100 ml or less, 650 mg/100 ml or less, 600 mg/100 ml or less, 550 mg/100 ml or less, 450 mg/100 ml or less, 400 mg/100 ml or less, 350 mg/100 ml or less, 300 mg/100 ml or less, 240 mg/100 ml or less, 200 mg/100 ml or less, 180 mg/100 ml or less, 160 mg/100 ml or less, 140 mg/100 ml or less, 120 mg/100 ml or less, 110 mg/100 ml or less, 100 mg/100 ml or less, 90 mg/100 ml or less, 80 mg/100 ml or less, 70 mg/100 ml or less, 60 mg/100 ml or less, 50 mg/100 ml or less, 40 mg/100 ml or less, or 30 mg/100 ml or less. Further, the lower limit thereof may be, for example, 0.01 mg/100 ml or more, 0.02 mg/100 ml or more, 0.05 mg/100 ml or more, 0.1 mg/100 ml or more, 0.2 mg/100 ml or more, 0.4 mg/100 ml or more, 0.6 mg/100 ml or more, 0.8 mg/100 ml or more, 1.1 mg/100 ml or more, 1.5 mg/100 ml or more, 2.0 mg/100 ml or more, 2.4 mg/100 ml or more, 3.5 mg/100 ml or more, 4.0 mg/100 ml or more, 4.5 mg/100 ml or more, 5.5 mg/100 ml or more, 6.5 mg/100 ml or more, 7.5 mg/100 ml or more, 8.5 mg/100 ml or more, or 10 mg/100 ml or more. Note that, amino acid analysis is performed in accordance with the method for measuring "amino acid" in the Standard Tables of Food Composition in Japan, 2015 (Seventh Revised Edition), with tryptophan measured by high performance liquid chromatography and other amino acids measured by column chromatography.

### Nucleic Acid

In the present invention, the term "nucleic acid" refers to nucleic acid and a salt thereof. The nucleic acid contained in the food composition of the present invention may be contained in a raw ingredient, or may be added from an external source separately from the ingredient. In a case where the nucleic acid is added from an external source during production of the food composition of the present invention, a purified and extracted high-purity preparation may be added, or the nucleic acid may be added in the form of some processed material (for example, an extract) containing nucleic acid. However, it is preferable that the majority (more preferably all) of the nucleic acid contained in the food composition is derived from some ingredient. Examples of substances containing nucleic acid include amino acid-based seasonings, and examples of nucleic acid-based seasonings include disodium 5'-inosinate, disodium 5'-guanylate, disodium 5'-uridylate, disodium 5'-cytidylate, calcium 5'-ribonucleotide, and disodium 5'-ribonucleotide. These nucleic acids may be contained singly, or two or more kinds of them may be contained in any combination or in any ratio.

The retort food is not particularly limited as long as it is cooked or semi-cooked food packed in a retort pouch or a can. Examples of food to be packed include the above-described food itself, or food from which the above-described foods can be obtained by simple cooking (for example, adding the ingredient and heating and cooking).

### Moisture Content in Wet Mass Equivalent

In the present invention, the moisture content in wet mass equivalent means the content ratio of the target component in the sample, which is calculated with the wet mass of the food composition including moisture as the denominator and the mass of the target component contained in the sample as the numerator. The numerical value is measured by heating to 90°C by a vacuum heating drying method in accordance with the Standard Tables of Food Composition in Japan, 2015 (Seventh Revised Edition). Specifically, an appropriate amount of sample is collected in a weighing container that has been brought to a constant weight in advance (W0) and weighed (W1). The weighing container is placed in a reduced-pressure electric constant-temperature dryer adjusted to a predetermined temperature (more specifically, 90°C) under normal pressure in a state where a lid of the weighing container is removed or an opening is opened. A door is closed, a vacuum pump is operated, and the sample is dried for a certain period of time at a predetermined reduced pressure. The vacuum pump is stopped, the pressure is returned to normal pressure by sending dry air, the weighing container is taken out, the lid is closed, and the sample is cooled in a desiccator, and then the mass is measured. In this way, drying, cooling, and weighing (W2) are repeated until a constant weight is reached, and the moisture content (moisture content in wet mass equivalent) (% by mass) is determined by (W1 - W2)/(W1 - WO). Further, a dry weight of the sample can also be measured by determining (W2 - WO).

The food composition of the present invention preferably has a moisture content in wet mass equivalent of a predetermined value or more. This makes it easier for the food composition to penetrate into the entire mouth when the food composition is orally ingested, increasing an opportunity for the food composition to come into contact with the tongue. Therefore, the effect of suppressing the sour taste felt on the tongue is enhanced. Further, although the principle thereof is unknown, the food composition of the present invention can make the sour taste feel mild more easily when the moisture content in wet mass equivalent is a predetermined value or more. The moisture content in wet mass equivalent in the food composition of the present invention may be, for example, 20 w/w% or more, preferably 40 w/w% or more, more preferably 45 w/w% or more, still more preferably 50 w/w% or more, and particularly preferably 60 w/w% or more. Further, the upper limit thereof is not particularly limited, but may be, for example, 99 w/w% or less, 98 w/w% or less, 95 w/w% or less, or 93 w/w% or less. Furthermore, the moisture content in wet mass equivalent of the food composition of the present invention is preferably within a predetermined range. The range may be preferably 40 to 99 w/w%, and particularly preferably 60 to 99 w/w%. Numerical ranges specified by combining the above upper limits or lower limits are also disclosed in the present invention.

### Second Embodiment

The second embodiment relates to a method for producing a food composition, including adding isochlorogenic acid and/or xanthohumol D in a food composition having an acidity of 0.02 w/w% or more, so as to satisfy the following requirement (b):
(b) the following requirements (i) and/or (ii):
(i) the ratio of the content of isochlorogenic acid (ppm by mass) to the acidity (w/w%) is 0.5 or more; and/or
(ii) the ratio of the content of xanthohumol D (ppb by mass) to the acidity (w/w%) is 0.00001 or more.

Hereinafter, the second embodiment will be described.

The food composition obtained according to the second embodiment can be the food composition disclosed in the first embodiment. Therefore, in the second embodiment, the value disclosed in the first embodiment can be adopted as the preferred upper limit, lower limit, or numerical range of the numerical value for the provision regarding the requirement (b), and the aspect disclosed in the first embodiment can be adopted even for matters not specified in the requirement (b). For example, in the method for producing the food composition of the present invention, the provision regarding an organic acid may satisfy the aspect disclosed in the first embodiment, the content of isochlorogenic acid of the food composition may be adjusted so as to satisfy the upper limit, lower limit, or numerical range disclosed in the first embodiment, the content of xanthohumol D may be adjusted so as to satisfy the upper limit, lower limit, or numerical range disclosed in the first embodiment, and the ratio of the content of isochlorogenic acid (ppm by mass) to the acidity (w/w%) may be adjusted so as to satisfy the upper limit, lower limit, or numerical range disclosed in the first embodiment, the ratio of the content of xanthohumol D to the acidity (w/w%) may be adjusted so as to satisfy the upper limit, lower limit, or numerical range disclosed in the first embodiment, the pH may be adjusted so as to satisfy the upper limit, lower limit, or numerical range disclosed in the first embodiment, the isochlorogenic acid and xanthohumol D may be adjusted so as to be contained within the upper limit, lower limit, or the numerical range of the numerical value disclosed in the first embodiment, the content of protein may be adjusted so as to satisfy the upper limit, lower limit, or numerical range disclosed in the first embodiment, and the ratio of the content of isochlorogenic acid (ppm by mass) to the content of protein (ppm by mass) may be adjusted so as to satisfy the upper limit, lower limit, or numerical range disclosed in the first embodiment, the ratio of the content of xanthohumol D (ppb by mass) to the content of protein (ppm by mass) may be adjusted to satisfy the upper limit, lower limit, or numerical range disclosed in the first embodiment, the content of soluble saccharides may be adjusted to satisfy the upper limit, lower limit, or numerical range disclosed in the first embodiment, the provision regarding lipid may be satisfied in the aspect disclosed in the first embodiment, and the provision regarding an amino acid may be satisfied in the aspect disclosed in the first embodiment. Further, the second embodiment may be a method for producing a food composition including a process of adding purified isochlorogenic acid, may be a method for producing a food composition including a process of adding a product obtained by extracting isochlorogenic acid and/or xanthohumol D from a plant or the like containing isochlorogenic acid and/or xanthohumol D, may be a method for producing a food composition including a process of adding the solvent disclosed in the first embodiment to a plant or the like containing isochlorogenic acid and/or xanthohumol D and extracting isochlorogenic acid and/or xanthohumol D, may be adjusted so that the ratio of the content of acetic acid derived from brewed vinegar to the total content of acetic acid of the food composition satisfies the upper limit, lower limit, or numerical range disclosed in the first embodiment, may include a process of incorporating the herb disclosed in the first embodiment, may include a process of incorporating the herb extract disclosed in the first embodiment, may include a process of incorporating the fruit juice disclosed in the first embodiment, may be adjusted so as to satisfy the provision regarding cohumulone disclosed in the first embodiment, may be adjusted so as to satisfy the provision regarding gallic acid disclosed in the first embodiment, may be adjusted so as to satisfy the provision regarding component Z disclosed in the first embodiment, may be a method for producing a food composition of the type disclosed in the first embodiment, may be adjusted so as to satisfy the provision regarding fruit juice disclosed in the first embodiment, may be adjusted so as to satisfy the provision regarding amino acid disclosed in the first embodiment, may be adjusted so as to satisfy the provision regarding nucleic acid disclosed in the first embodiment, or may be adjusted so as to satisfy the provision regarding moisture content in wet mass equivalent disclosed in the first embodiment.

The second embodiment may also be a method for producing a food composition, including the following steps (A) to (C):
(A) a step of preparing a solvent having an acidity of 0.2 w/w% or more;
(B) a step of adding at least one herb containing isochlorogenic acid and/or xanthohumol D to the solvent obtained in the step (A); and
(C) a step of extracting a component derived from the herb, including a process of keeping the mixture of the solvent and the plant at a temperature of higher than 0°C and 70°C or lower for 0.5 to 72 hours starting from a point of time when the step (B) was performed, and then removing the herb.

Furthermore, the second embodiment may also be a method for producing a food composition, including the following steps (E), (B) and (C):
(E) a step of preparing a solvent having an ethanol content of 0.00001 w/w% or more;
(B) a step of adding at least one herb containing isochlorogenic acid and/or xanthohumol D to the solvent obtained in the step (E); and
(C) a step of extracting a component derived from the herb, including a process of keeping the mixture of the solvent and the plant at a temperature of higher than 0°C and 70°C or lower for 0.5 to 72 hours starting from a point of time when the step (B) was performed, and then removing the herb.

By including the steps (A) to (C) or (E), (B), and (C), the isochlorogenic acid and/or xanthohumol D in the herb can be efficiently extracted, and the astringent taste derived from the herb can be suppressed. Although the principle thereof is unknown, it is presumed that the organic acid and/or inorganic acid contained in the solvent has some effect on component extraction from the herb. Note that, for the acidity (w/w%) of the solvent specified in (A) or the content of ethanol (w/w%) specified in (E), the upper limit, lower limit, or numerical range of the numerical value disclosed in the first embodiment can be adopted. Further, according to one aspect of the present invention, both the steps (A) and (E) may be satisfied. In other words, the step (A) or the step (E) is a concept encompassing the step of preparing a solvent having, for example, an acidity of 0.2 w/w% or more and an ethanol content of 0.00001 w/w% or more.

Further, the solvent having an acidity of 0.2 w/w% or more preferably contains acetic acid from a viewpoint of improving the extraction efficiency of components in the herb (particularly, isochlorogenic acid and/or xanthohumol). Specifically, the ratio of the content of acetic acid (w/w%) to the acidity (w/w%) of the solvent may be 0.1 or more, 0.2 or more, 0.2 or more, 0.3 or more, 0.4 or more, 0.5 or more, 0.6 or more, 0.7 or more, 0.8 or more, or 0.9 or more. Further, the upper limit thereof may be 1 or less or 0.95 or less, and the range thereof may be 0.1 to 1. Further, according to one aspect of the present invention, the solvent having an acidity of 0.2 w/w% or more may be a solvent having a content of acetic acid of 0.2 w/w% or more. The content of acetic acid of the solvent in this aspect is not particularly limited, but is preferably a predetermined value or more from a viewpoint of more effectively solving the problem to be solved by the present invention. Specifically, the lower limit of the content of acetic acid in the solvent having a content of acetic acid of 0.2 w/w% or more may be, for example, 0.20 w/w% or more, 0.25 w/w% or more, 0.27 w/w% or more, 0.30 w/w% or more, 0.35 w/w% or more, 0.40 w/w% or more, 0.45 w/w% or more, 0.50 w/w% or more, 0.55 w/w% or more, 0.60 w/w% or more, 0.70 w/w% or more, 0.80 w/w% or more, 0.90 w/w% or more, 1.00 w/w% or more, 1.10 w/w% or more, 1.20 w/w% or more, 1.30 w/w% or more, 1.40 w/w% or more, 1.50 w/w% or more, 1.60 w/w% or more, 1.70 w/w% or more, 1.80 w/w% or more, 1.90 w/w% or more, 2.00 w/w% or more, 2.10 w/w% or more, 2.20 w/w% or more, 2.30 w/w% or more, 2.40 w/w% or more, 2.50 w/w% or more, 2.60 w/w% or more, 2.70 w/w% or more, 2.80 w/w% or more, 2.90 w/w% or more, and preferably may be 3.00 w/w% or more, 4.00 w/w% or more, 5.00 w/w% or more, 6.00 w/w% or more, 7.00 w/w% or more, 8.00 w/w% or more, 9.00 w/w% or more, 10.00 w/w% or more, 11.00 w/w% or more, or 12.00 w/w% or more. Further, the upper limit thereof may be, for example, 30.0 w/w% or less, 28.0 w/w% or less, 25.0 w/w% or less, 22.0 w/w% or less, 20.0 w/w% or less, 18.0 w/w% or less, 16.0 w/w% or less, 15.5 w/w% or less, 15.1 w/w% or less, 14.9 w/w% or less, 14.5 w/w% or less, 14.3 w/w% or less, 14.0 w/w% or less, 13.5 w/w% or less, 13.3 w/w% or less, 13.0 w/w% or less, 12.5 w/w% or less, 12.0 w/w% or less, 11.5 w/w% or less, 11.0 w/w% or less, 10.5 w/w% or less, 10.3 w/w% or less, or 10.0 w/w% or less. Further, the range thereof may be 0.2 to 30 w/w%, preferably 1.0 to 25 w/w%, or 3.0 to 22 w/w%, and particularly preferably 5.0 to 18 w/w%. Numerical ranges specified by combining the above upper limits and lower limits are also disclosed in the present invention.

Further, the pH of the solvent having an acidity of 0.2 w/w% or more is preferably a predetermined value or less. Although the principle is unknown, there is a possibility that isochlorogenic acid and/or xanthohumol D can be efficiently extracted by adjusting the pH of the solvent.

Further, when the pH is a predetermined value or less, the problem to be solved by the present invention becomes more significant, and although the principle thereof is unknown, the bitter taste of a food composition containing isochlorogenic acid and/or xanthohumol D can be suppressed. Specifically, the upper limit of the pH of the solvent is not limited, but can be, for example, 4.6 or less, 4.4 or less, 4.2 or less, 4.0 or less, 3.8 or less, 3.6 or less, 3.4 or less, 3.2 or less, 3.1 or less, or 2.9 or less. On the other hand, the lower limit thereof is not limited, but can be, for example, 1.6 or more, 1.7 or more, 1.8 or more, 1.9 or more, 2.0 or more, 2.05 or more, 2.10 or more, 2.15 or more, 2.2 or more, 2.3 or more, or 2.4 or more. Further, the range thereof may be usually 1.6 to 4.6, preferably 1.7 to 3.8, more preferably 1.8 to 3.5, even more preferably 1.9 to 3.4, still more preferably 1.95 to 3.35, particularly preferably 2.00 to 3.30, especially preferably 2.05 to 3.30, or 2.10 to 3.10. Numerical ranges specified by combining the above upper limits and lower limits are also disclosed in the present invention.

Further, the moisture content in wet mass equivalent of the solvent having an acidity of 0.2 w/w% or more may be, for example, 70 to 99.8 w/w%. Further, the upper limit thereof is not particularly limited, but may be, for example, 99.5 w/w% or less, 99 w/w% or less, 98 w/w% or less, 95 w/w% or less, 90 w/w% or less, 88 w/w% or less, 85 w/w% or less, 83 w/w% or less, 80 w/w% or less, 78 w/w% or less, 75 w/w% or less, or 73 w/w% or less. Further, the lower limit thereof is not particularly limited, but may be, for example, 71 w/w% or more, 73 w/w% or more, 75 w/w% or more, 78 w/w% or more, 80 w/w% or more, 83 w/w% or more, 85 w/w% or more, 88 w/w% or more, 90 w/w% or more, 92 w/w% or more, 95 w/w% or more, or 96 w/w% or more. Numerical ranges specified by combining the above upper limits and lower limits are also disclosed in the present invention.

Further, the solvent having the acidity of 0.2 w/w% or more is not particularly limited, but preferably contains brewed vinegar, and the ratio of the content of acetic acid derived from the brewed vinegar (w/w%) to the content of acetic acid (w/w%) in the solvent having the acidity of 0.2 w/w% or more may be, for example, 0.5 or more, 0.6 or more, 0.7 or more, 0.8 or more, 0.9 or more, or 1, and the solvent may be brewed vinegar.

The type of at least one herb containing isochlorogenic acid and/or xanthohumol D is not particularly limited, but for example, the herb disclosed in the first embodiment can be adopted. Further, the at least one herb containing isochlorogenic acid and/or xanthohumol D may be preferably at least one, two, three, four, or five or more kinds selected from the group consisting of rosemary, chamomile, hop, chrysanthemum, wormwood, laurel, and hop.

Further, in the second embodiment, it is preferable to have a step of extracting a component derived from the herb, including a process of adding at least one herb containing isochlorogenic acid and/or xanthohumol D to a solvent having an acidity of 0.2 w/w% or more, then keeping the mixture at a temperature of higher than 0°C and 70°C or lower for 0.5 to 80 hours, and then removing the herb. As a result, by preparing a food composition containing isochlorogenic acid and/or xanthohumol D and using the food composition, it is possible to suppress the astringent taste due to herbs while suppressing the sour taste felt on the tongue due to the acid. Note that, in the step of extracting a component derived from the herb, from a viewpoint of solving the problem of the present invention, it is preferable to extract the component so that the content of isochlorogenic acid and/or xanthohumol in the obtained herb extract becomes the content disclosed in the first embodiment. As a method of adopting this aspect, for example, in the method for producing the food composition of the present invention, at least one herb containing isochlorogenic acid and/or xanthohumol D is added to a solvent having an acidity of 0.2 w/w% or more, and then the mixture may be kept for 0.5 hours or more, 1 hour or more, 2 hours or more, 3 hours or more, 4 hours or more, 6 hours or more, 8 hours or more, 10 hours or more, 12 hours or more, 14 hours or more, 16 hours or more, 18 hours or more, 20 hours or more, 22 hours or more, 24 hours or more, 26 hours or more, 28 hours or more, 32 hours or more, 40 hours or more, 48 hours or more, 54 hours or more, 60 hours or more, 64 hours or more, 72 hours or more, or 80 hours or more, may be kept under a predetermined temperature condition for 70 hours or less, 64 hours or less, 60 hours or less, 54 hours or less, 48 hours or less, 40 hours or less, 36 hours or less, 32 hours or less, 28 hours or less, 24 hours or less, 18 hours or less, 14 hours or less, 12 hours or less, or 10 hours or less, and may be kept under a predetermined temperature condition for 0.5 hours or more and 70 hours or less (0.5 to 70 hours). Further, the predetermined temperature may be higher than 0°C, 4°C or higher, 8°C or higher, 12°C or higher, 16°C or higher, 20°C or higher, 24°C or higher, 30°C or higher, 36°C or higher, 40°C or higher, 46°C or higher, 48°C or higher, 50°C or higher, 52°C or higher, 54°C or higher, 56°C or higher, or 60°C or higher, and/or 80°C or lower, 75°C or lower, 70°C or lower, 66°C or lower, 62°C or lower, 60°C or lower, 54°C or lower, 50°C or lower, 48°C or lower, 44°C or lower, 40°C or lower, 36°C or lower, 34°C or lower, 30°C or lower, 24°C or lower, 20°C or lower, 16°C or lower, 14°C or lower, 10°C or lower, 8°C or lower, 7°C or lower, or 6°C or lower, and may be 4°C or higher and 80°C or lower (4 to 80°C). Further, in the extraction step, extraction may be performed while stirring from a viewpoint of promoting extraction. Stirring can be performed, for example, by using a commercially available stirrer, and can be performed at a stirring speed of, for example, 10 to 10,000 rpm, 30 to 5,000 rpm, or 50 to 300 rpm.

The compositions obtained in the above paragraphs (A) to (C), or (E), (B), and (C) can be directly used as the food composition of the present invention. However, the second embodiment may also be a method for producing a food composition including the following step (D):
(D) a step of preparing a food composition by adding and incorporating the composition obtained in the step (C)

The food composition in the step (D) can be a food composition of the type disclosed in the first embodiment, but preferably contains brewed vinegar, preferably contains grain vinegar or fruit vinegar specified based on the JAS Act that came into effect on October 1, 2022, and particularly preferably contains at least one, two, three, four, or five selected from the group consisting of rice vinegar, rice black vinegar, apple cider vinegar, grape vinegar, and pomegranate vinegar. This is because not only the sour taste felt on the tongue can be suppressed, but also the deterioration smell of the brewed vinegar can be suppressed. Further, the amount of the composition obtained in the step (C) to be added may be adjusted so that the finally obtained food composition contains isochlorogenic acid and/or xanthohumol in the aspect disclosed in the first embodiment.

### Third Embodiment

The food composition of the present invention can suppress the sour taste felt on the tongue, and as a result, the sour taste of the food composition can be made a moderate sour taste and/or a mild sour taste. Therefore, the invention relates to a method for making a sour taste of a food composition a moderate sour taste and/or a mild sour taste by preparing the food composition so as to satisfy the following requirements (a) and (b):
(a) the acidity is 0.02 w/w% or more; and
(b) the following requirements (i) and/or (ii):
   (i) the ratio of the content of isochlorogenic acid (ppm by mass) to the acidity (w/w%) is 0.5 or more; and/or
   (ii) the ratio of the content of xanthohumol D (ppb by mass) to the acidity (w/w%) is 0.00001 or more.

Hereinafter, the third embodiment will be described.

In the food composition of the present invention, the sour taste felt on the tongue is suppressed, and as a result, the sour taste of the food composition becomes a moderate sour taste and/or a mild sour taste. Although the principle thereof is unknown, it is presumed that isochlorogenic acid and/or xanthohumol D act on the taste buds, thereby inhibiting the perception of the sour taste, resulting in a moderate sour taste and/or a mild sour taste.

In the third embodiment, the values disclosed in the first embodiment can be adopted as the upper limit, lower limit, or numerical range of preferred numerical values in the provisions regarding the requirements (a) and (b). Further, the aspects disclosed in the first embodiment can be adopted even for matters not specified in the requirements (a) and (b). For example, in the method for making the sour taste of the food composition of the present invention a moderate sour taste and/or a mild sour taste, the provision regarding organic acid may satisfy the aspect disclosed in the first embodiment, the content of isochlorogenic acid of the food composition may be adjusted so as to satisfy the upper limit, lower limit, or numerical range disclosed in the first embodiment, the content of xanthohumol D may be adjusted so as to satisfy the upper limit, lower limit, or numerical range disclosed in the first embodiment, the ratio of the content of isochlorogenic acid (ppm by mass) to the acidity (w/w%) may be adjusted so as to satisfy the upper limit, lower limit, or numerical range disclosed in the first embodiment, the ratio of the content of xanthohumol D to the acidity (w/w%) may be adjusted to satisfy the upper limit, lower limit, or numerical range disclosed in the first embodiment, the content of protein may be adjusted to satisfy the upper limit, lower limit, or numerical range disclosed in the first embodiment, the ratio of the content of isochlorogenic acid (ppm by mass) to the content of protein (ppm by mass) may be adjusted to satisfy the upper limit, lower limit, or numerical range disclosed in the first embodiment, the ratio of the content of xanthohumol D (ppb by mass) to the content of protein (ppm by mass) may be adjusted to satisfy the upper limit, lower limit, or numerical range disclosed in the first embodiment, the content of soluble saccharides may be adjusted so as to satisfy the upper limit, lower limit, or numerical range disclosed in the first embodiment, the pH may be adjusted so as to satisfy the upper limit, lower limit, or numerical range disclosed in the first embodiment, and the isochlorogenic acid and xanthohumol D may be adjusted so as to be contained in the upper limit, lower limit, or numerical range of the numerical value disclosed in the first embodiment. Further, the method for making the sour taste of the food composition a moderate sour taste and/or a mild sour taste in the third embodiment may be a method for making the sour taste of the food composition a moderate sour taste and/or a mild sour taste by adding purified isochlorogenic acid, may be a method for making the sour taste of the food composition a moderate sour taste and/or a mild sour taste by adding a product obtained by extracting isochlorogenic acid from a plant or the like containing isochlorogenic acid, may be a method for making the sour taste of the food composition a moderate sour taste and/or a mild sour taste by using a product obtained by extracting isochlorogenic acid by adding the solvent disclosed in the second embodiment to a plant or the like containing isochlorogenic acid, may be a method for making the sour taste of the food composition a moderate sour taste and/or a mild sour taste by adding purified xanthohumol D, may be a method for making the sour taste of the food composition a moderate sour taste and/or a mild sour taste by adding a product obtained by extracting xanthohumol D from a plant or the like containing xanthohumol D, or may be a method for making the sour taste of the food composition a moderate sour taste and/or a mild sour taste by using a product obtained by extracting xanthohumol D by adding the solvent disclosed in the second embodiment to a plant or the like containing xanthohumol D, and the food composition may contain brewed vinegar, may contain grain vinegar or fruit vinegar, or may contain at least one, two, three, four, or five selected from the group consisting of rice vinegar, rice black vinegar, apple cider vinegar, grape vinegar, and pomegranate vinegar, and the ratio of the content of acetic acid derived from brewed vinegar to the total content of acetic acid of the food composition may be adjusted so as to satisfy the upper limit, lower limit, or numerical range disclosed in the first embodiment, and the food composition may contain the herb disclosed in the first embodiment, may contain the herb extract disclosed in the first embodiment, may contain the fruit juice disclosed in the first embodiment, may be adjusted so as to satisfy the provision regarding cohumulone disclosed in the first embodiment, may be adjusted so as to satisfy the provision regarding gallic acid disclosed in the first embodiment, or may be adjusted so as to satisfy the provision regarding component Z disclosed in the first embodiment, and the food composition may be a food composition of the type disclosed in the first embodiment, may be adjusted so as to satisfy the provision regarding fruit juice disclosed in the first embodiment, may be adjusted so as to satisfy the provision regarding lipid disclosed in the first embodiment, may be adjusted so as to satisfy the provision regarding amino acid disclosed in the first embodiment, may be adjusted so as to satisfy the provision regarding nucleic acid disclosed in the first embodiment, or may be adjusted so as to satisfy the provision regarding moisture content in wet mass equivalent disclosed in the first embodiment. Note that, in the aspect in which the food composition of the present invention contains acetic acid, it may be a method for suppressing throat irritation caused by the food composition containing acetic acid by adopting the aspect effective for suppressing throat irritation disclosed in the present description, or it may be a method for suppressing the acetic acid smell of the food composition containing acetic acid by adopting the aspects effective for suppressing the acetic acid smell disclosed in the present description.

### Examples

Hereinafter, the present invention will be described in more detail with reference to examples, but these examples are merely examples shown for convenience of description, and the present invention is not limited to these examples in any sense.

### Test 1: Confirmation of Effect of Suppressing Sour Taste, Acetic Acid Smell, or Deterioration Smell

First, water or brewed vinegar (content of acetic acid: 15 w/w%) was added to the herbs described in Table 1 in an amount of 25 to 100 ml per 1 g of herb, the mixture was kept at a temperature of higher than 0°C and 70°C or lower for 3 to 80 hours, and then the herbs were removed to obtain Samples 1 to 12.

**Table 1**

| Sample name | Herbs used | Extraction solvent |
|---|---|---|
| Sample 1 | Laurel | Brewed vinegar (content of acetic acid: 15w/w%) |
| Sample 2 | Chamomile | Brewed vinegar (content of acetic acid: 15w/w%) |
| Sample 3 | Rosemary | Brewed vinegar (content of acetic acid: 15w/w%) |
| Sample 4 | Chrysanthemum | Brewed vinegar (content of acetic acid: 15w/w%) |
| Sample 5 | Wormwood | Brewed vinegar (content of acetic acid: 15 w/w%) |
| Sample 6 | Laurel | Water |
| Sample 7 | Chamomile | Water |
| Sample 8 | Rosemary | Water |
| Sample 9 | Chrysanthemum | Water |
| Sample 10 | Wormwood | Water |
| Sample 11 | Hop | Brewed vinegar (content of acetic acid: 15w/w%) |
| Sample 12 | Hop | Water |

For Samples 1 to 10, the content of isochlorogenic acid was calculated by determining the ratio of the peak area of isochlorogenic acid in a sample with a known isochlorogenic acid content and the peak area of isochlorogenic acid in Samples 1 to 10 by the following analytical method Y based on high performance liquid chromatography (HPLC method) .

### Equipment Used

· Component separation: LC-30AD (manufactured by Shimadzu Corporation)
· Autosampler: SIL-30AC (manufactured by Shimadzu Corporation)
· Oven: CTO-20AC (manufactured by Shimadzu Corporation)
· Detector: Photodiode Array Detector SPD-M30A (manufactured by Shimadzu Corporation)

### Analysis Method (High Performance Liquid Chromatography); Analysis Method Y

### Separation conditions

· Column: Cadenza CD-C18 150 × 4.6 mm 3 µm Column manufactured by Imtakt Corporation
· Column temperature: 35°C
· Injection volume: 20 µL applied
· Flow rate: 0.4 mL/min
· Analysis time: 60 minutes
· Mobile phase: a mixture containing acetonitrile, water, and phosphoric acid in a volume ratio of 3 : 96.8 : 0.2

### Detection conditions

· Irradiation with ultraviolet light at a wavelength of 325 nm

For Samples 11 and 12, the content of xanthohumol D was calculated by determining the ratio of the peak area of xanthohumol D in a sample with a known xanthohumol D content and the peak area of xanthohumol D in Samples 9 to 12 by the following analysis method X based on liquid chromatography mass spectrometry (also referred to as LC-MS method) .

### Equipment Used

Component separation: Nexera XS manufactured by SHIMADZU
Component detection: impact II manufactured by Bruker (ESI QTOF mass spectrometer)

### Analytical Method: Liquid Chromatography Mass Spectrometry; Analysis Method X

### Separation conditions

· Column: ACQUITY UPLC BEH C18 2.1 × 50 mm 1.7 µm Column manufactured by Waters Corporation
· Column temperature: 40°C
· Injection volume: 5 µL applied
· Flow rate: 0.4 mL/min
· Mobile phase: Solution A (containing formic acid in water at 0.1 v/v%) and Solution B (containing formic acid in acetonitrile at 0.1 v/v%)
· Mobile phase gradient (ratio of mobile phase A to mobile phase B)
   0 - 0.5 min 75%A : 25%B
   1.5 min 70%A : 30%B
   3.0 min 60%A : 40%B
   5.5 min 50%A : 50%B
   5.6 min 30%A : 70%B
   5.6 - 7.5 min 100%B
   MS conditions: ion source temperature 200°C
   Ionization method: ESI (ionization voltage 5.0 eV)
   MS scan: m/z 50 to 1,500

For each sample, H+ elimination ions were analyzed in negative mode, the component peak in each sample was identified based on quantitative ions (xanthohumol D quantitative ions m/z 369.1345 ± 0.02), and the peak area was determined.

Further, Samples 1 to 10 or appropriate mixtures thereof were added to a diluted acetic acid solution (acetic acid diluted with water), black vinegar, apple cider vinegar, brewed vinegar, or yoghurt (content of lactic acid: 0.7 w/w%, content of lipid: 3.0 w/w%) so as to have the composition described in Tables 2 to 3, thereby preparing test products (Test Examples 1 to 17, Reference Examples 1 to 4). Further, control test products were prepared so as to have the same composition except that isochlorogenic acid was not added (that is, the reference examples have the same composition as that of the control test products). Note that, it was confirmed in advance that the control test products did not contain isochlorogenic acid. Further, xanthohumol D (CAS No. 274675-25-1, purity of 99% or more, manufactured by MedChemExpress) was added so as to have the composition described in Table 4, thereby preparing test products (Test Examples 18 to 29 and 69, Reference Examples 5 to 6). Furthermore, Samples 11 to 12 or appropriate mixtures thereof were added so as to have the composition described in Table 5, thereby preparing test products (Test Examples 30 to 34, Reference Examples 7 to 8). Further, control test products were prepared so as to have the same composition except that xanthohumol D was not added (that is, the reference examples have the same composition as that of the control test products). Note that, it was confirmed in advance that the control test products did not contain xanthohumol D.

For each test product, a sour taste suppressing effect, an acetic acid smell suppressing effect, or a deterioration smell suppressing effect was evaluated using the control test product as a control group. The evaluation was conducted by 10 expert panelists according to the following criteria. Note that, as sensory inspectors who conduct each sensory test, inspectors were selected who had undergone identification training of taste, smell, texture, appearance, and the like of food in advance, had particularly excellent results, had product development experience, was rich in knowledge about quality such as taste, smell, texture, appearance, and the like of food, and were capable of performing absolute evaluation on each sensory test item. Further, for all evaluation items described above, each score for the evaluation criteria was standardized by all inspectors in advance, and then objective sensory tests were conducted. Then, an average value of the scores of the 10 sensory inspectors was calculated, and the result was rounded to the nearest whole number to obtain the final score. Note that, in the test examples in which the deterioration smell suppressing effect was evaluated, for a test section using yoghurt (having a lactic acid content of 0.7 w/w% and a lipid content of 3.0 w/w%), the deterioration smell after storage at 5°C for 1 week under irradiation with light of 1350 lux was evaluated using a low temperature incubator CR-14C manufactured by Hitachi, Ltd. Further, for the other test sections, the deterioration smell suppressing effect was evaluated by comparing the smell of the control test product and the test product after storage at 60°C for 5 days. Furthermore, any observations other than the evaluation items were recorded as notes. The results are shown in Tables 2 to 5.

### Evaluation of Sour Taste Suppressing Effect

1: There is a sour taste felt on the tongue as in the control group
2: The sour taste felt on the tongue is slightly suppressed compared to the control group, and the sour taste is felt to be somewhat mild
3: The sour taste felt on the tongue is suppressed compared to the control group, and the sour taste is felt to be mild
4: The sour taste felt on the tongue is significantly suppressed compared to the control group, and the sour taste is felt to be very mild

### Evaluation of Acetic Acid Smell Suppressing Effect

1: There is an acetic acid smell as in the control group, which is undesirable
2: The acetic acid smell is slightly suppressed as compared to the control group, which is somewhat desirable
3: The acetic acid smell is suppressed as compared to the control group, which is desirable
4: The acetic acid smell is significantly suppressed as compared to the control group, which is very desirable

### Evaluation of Deterioration Smell Suppressing Effect

1: There is a deterioration smell as in the control group, which is undesirable
2: The deterioration smell is slightly suppressed as compared to the control group, which is somewhat desirable
3: The deterioration smell is suppressed as compared to the control group, which is desirable
4: The deterioration smell is significantly suppressed as compared to the control group, which is very desirable

**Table 2**

| | Acid source | Acidity | Content of isochlorogenic acid | Ratio of content of isochlorogenic acid (ppm by mass) to acidity (w/w%) | Evaluation of sour taste suppressing effect | Notes |
|---|---|---|---|---|---|---|
| Unit | | w/w% | ppm by mass | | | |
| Reference Example 1 | Diluted acetic acid solution | 10 | 0 | 0 | 1 | |
| Reference Example 2 | Brewed vinegar | 15 | 0 | 0 | 1 | |
| Test Example 1 | Diluted acetic acid solution | 10 | 5 | 0.5 | 2 | |
| Test Example 2 | Diluted acetic acid solution | 20 | 50 | 2.5 | 3 | |
| Test Example 3 | Diluted acetic acid solution | 5 | 25 | 5 | 4 | |
| Test Example 4 | Diluted acetic acid solution | 2.5 | 100 | 40 | 4 | |
| Test Example 5 | Diluted acetic acid solution | 10 | 1000 | 100 | 4 | |
| Test Example 6 | Diluted acetic acid solution | 0.02 | 10 | 500 | 4 | |
| Test Example 7 | Brewed vinegar | 15 | 700 | 47 | 4 | |
| Test Example 8 | Brewed vinegar diluted with water | 8 | 1500 | 188 | 4 | |
| Test Example 9 | Brewed vinegar diluted with water | 0.2 | 60 | 300 | 4 | |
| Test Example 10 | Brewed vinegar diluted with water | 0.5 | 600 | 1200 | 4 | |
| Test Example 11 | Brewed vinegar diluted with water | 6 | 9000 | 1500 | 4 | |
| Test Example 12 | Brewed vinegar diluted with water | 6 | 20000 | 3333 | 4 | Bitter taste was strongly felt |

**Table 3**

| | Acid source | Acidity | Content of isochlorogenic acid | Ratio of content of isochlorogenic acid (ppm by mass) to acidity (w/w%) | Ratio of content of isochlorogenic acid (ppm by mass) to content of protein (ppm by mass) | Evaluation of sour taste suppressing effect | Evaluation of deterioration smell suppressing effect |
|---|---|---|---|---|---|---|---|
| Unit | | w/w% | ppm by mass | | | | |
| Reference Example 3 | Black vinegar | 4.5 | 0 | 0 | 0 | 1 | 1 |
| Reference Example 4 | Apple cider vinegar diluted with water | 0.2 | 0 | 0 | 0 | 1 | 1 |
| Test Example 13 | Black vinegar | 4.5 | 25 | 5.6 | 0.002 | 4 | 2 |
| Test Example 14 | Apple cider vinegar | 5 | 10000 | 2000 | 20 | 4 | 3 |
| Test Example 15 | Black vinegar diluted with water | 0.2 | 130 | 650 | 0.26 | 4 | 3 |
| Test Example 16 | Apple cider vinegar diluted with water | 0.2 | 1000 | 5000 | 50 | 4 | 3 |
| Test Example 17 | Yoghurt (content of lactic acid: 0.7 w/w%, content of lipid: 3.0 w/w%) | 0.9 | 400 | 444 | 0.013 | 4 | 3 |

**Table 4**

| | Acid source | Acidity | Content of xanthohumol D | Ratio of content of xanthohumol D (ppb by mass) to acidity (w/w%) | Evaluation of acetic acid smell suppressing effect |
|---|---|---|---|---|---|
| Unit | | w/w% | ppb by mass | | |
| Reference Example 5 | Diluted acetic acid solution | 8 | 0 | 0 | 1 |
| Reference Example 6 | Brewed vinegar diluted with water | 7 | 0 | 0 | 1 |
| Test Example 69 | Brewed vinegar diluted with water | 15 | 0.0001 | 0.00001 | 2 |
| Test Example 18 | Diluted acetic acid solution | 15 | 0.03 | 0.002 | 2 |
| Test Example 19 | Diluted acetic acid solution | 2 | 0.5 | 0.25 | 3 |
| Test Example 20 | Diluted acetic acid solution | 4.5 | 2 | 0.44 | 4 |
| Test Example 21 | Diluted acetic acid solution | 1.9 | 8 | 4.2 | 4 |
| Test Example 22 | Diluted acetic acid solution | 12 | 600 | 50 | 4 |
| Test Example 23 | Diluted acetic acid solution | 0.08 | 2000 | 25000 | 4 |
| Test Example 24 | Diluted acetic acid solution | 6.5 | 1200 | 185 | 4 |
| Test Example 25 | Brewed vinegar diluted with water | 4.3 | 300 | 70 | 4 |
| Test Example 26 | Brewed vinegar diluted with water | 0.3 | 4 | 13 | 4 |
| Test Example 27 | Brewed vinegar diluted with water | 0.14 | 12 | 86 | 4 |
| Test Example 28 | Brewed vinegar diluted with water | 6 | 8 | 1.3 | 4 |
| Test Example 29 | Brewed vinegar diluted with water | 14 | 27000 | 1929 | 4 |

**Table 5**

| | Acid source | Acidity | Content of xanthohumol D | Ratio of content of xanthohumol D (ppb by mass) to acidity (w/w%) | Ratio of content of xanthohumol D (ppb by mass) to content of protein (ppm by mass) | Evaluation of sour taste suppressing effect | Evaluation of deterioration smell suppressing effect | Notes |
|---|---|---|---|---|---|---|---|---|
| Unit | | w/w% | ppb by mass | | | | | |
| Reference Example 7 | Black vinegar diluted with water | 0.2 | 0 | 0 | 0 | 1 | 1 | |
| Reference Example 8 | Apple cider vinegar | 5.0 | 0 | 0 | 0 | 1 | 1 | |
| Test Example 30 | Black vinegar | 4.5 | 200 | 44 | 0.018 | 4 | 3 | Acetic acid smell suppressing effect was confirmed. |
| Test Example 31 | Apple cider vinegar | 5 | 4 | 1 | 0.008 | 4 | 2 | Acetic acid smell suppressing effect was confirmed. |
| Test Example 32 | Black vinegar diluted with water | 0.1 | 10 | 100 | 0.04 | 4 | 3 | Acetic acid smell suppressing effect was confirmed. |
| Test Example 33 | Apple cider vinegar diluted with water | 0.25 | 5 | 20 | 0.2 | 4 | 3 | Acetic acid smell suppressing effect was confirmed. |
| Test Example 34 | Yoghurt (content of lactic acid: 0.7 w/w%, content of lipid: 3.0 w/w%) | 0.9 | 50 | 56 | 0.0016 | 4 | 4 | |

From Tables 2 to 5, it has been found that the sour taste felt on the tongue is suppressed by isochlorogenic acid and xanthohumol D, and the sour taste becomes mild. Further, it has been found that the deterioration smell of the food composition can be suppressed. Note that, for Test Examples 13 to 17, when the deterioration smell was evaluated in the same manner on products that were prepared by adding isochlorogenic acid (isochlorogenic acid A (CAS No. 2450-53-5), purity of 98% or more, manufactured by ChemFaces) instead of Samples 1 to 10, similar results were obtained (note that, since a reagent used in the experiment was not for a food additive, the sour taste was not evaluated). Further, it has been found that the acetic acid smell is suppressed by xanthohumol D. Note that, for Test Examples 20 and 21, similar results were obtained even when Sample 11 was used instead of xanthohumol D (CAS No. 274675-25-1, purity of 99% or more, manufactured by MedChemExpress). Furthermore, it has been found that the deterioration smell of the food composition can be suppressed by adjusting the ratio of the contents of protein and isochlorogenic acid or the ratio of the contents of protein and xanthohumol D. Further, it has also been found that, for a food composition rich in lipids such as yoghurt, incorporating xanthohumol D can significantly suppress the deterioration smell.

### Test 2: Study on Various Food Compositions

In Test 1, the sour taste suppressing effect, deterioration smell suppressing effect, or acetic acid smell suppressing effect by isochlorogenic acid or xanthohumol D were confirmed. Among these, depending on the sample to be used, an astringent taste was felt, and the effect of suppressing throat irritation was confirmed. Therefore, next, a food composition such as a beverage, a seasoning, or a yoghurt was prepared by selectively using Samples 1 to 12, and characteristics felt for each sample were examined while evaluating the sour taste and deterioration smell by the same method as in Test 1.

Specifically, test products were prepared by appropriately blending Samples 1 to 12, apple cider vinegar (content of acetic acid: 6.7 w/w%), black vinegar (content of acetic acid: 6.1 w/w%), rice vinegar (content of acetic acid: 4.5 w/w%), apple juice (5-fold concentrated), blueberry juice (6.5-fold concentrated), lemon juice (6-fold concentrated), pomegranate juice (5-fold concentrated), red grape juice (5-fold concentrated), yuzu juice (6-fold concentrated), sugar, sucralose, citric acid, malic acid, fermented milk, lemon flavor, yoghurt flavor, salt, soy sauce, kelp stock, ground sesame, soy milk, salad oil, yoghurt (content of lactic acid: 0.7 w/w%, content of lipid: 3.0 w/w%), brewed vinegar (content of acetic acid: 15 w/w%), and water so as to have the composition shown in Tables 6 to 9 (Reference Examples 9 to 12, Test Examples 35 to 68). Further, control test products were prepared by adding brewed vinegar (content of acetic acid: 15 w/w%) or water instead of Samples 1 to 12 so as to have the same composition as each test product except that Samples 1 to 12 were not used (that is, the reference examples have the same composition as that of the control test products). Note that, it was confirmed in advance that the control test products did not contain isochlorogenic acid and/or xanthohumol D.

For each test product, the sour taste suppressing effect and deterioration smell suppressing effect were evaluated in the same manner as in Test 1. The results are shown in Tables 6 to 9.

**Table 6**

| | Unit | Reference Example 9 | Test Example 35 | Test Example 36 | Test Example 37 | Test Example 38 | Test Example 39 | Test Example 40 | Test Example 41 | Test Example 42 | Test Example 43 | Test Example 44 | Test Example 45 | Test Example 46 |
|---|---|---|---|---|---|---|---|---|---|---|---|---|---|---|
| Sample used | | | Sample 1 | Sample 2 | Sample 3 | Sample 1 | Sample 4 | Sample 3 | Sample 5 | Sample 9 | Sample 10 | Sample 1 | Sample 2 | Sample 1 |
| Apple cider vinegar (content of acetic acid: 6.7 w/w%) | w/w% | 2 | | | 1.4 | 2.1 | | | 4 | | 4 | | | |
| Black vinegar (content of acetic acid: 6.1 w/w%) | w/w% | | 2 | 4 | | | 4 | 12 | | 2 | | | | 1 |
| Apple juice (5-fold concentrated) | w/w% | | 0.2 | | | | | 1.9 | 1.9 | 0.2 | 1.9 | | 16 | |
| Blueberry juice (6.5-fold concentrated) | w/w% | | | 0.2 | | | | | | | | | | |
| Lemon juice (6-fold concentrated) | w/w% | 1 | | | | 1 | | | | | | 15 | | |
| Pomegranate juice (5-fold concentrated) | w/w% | | | | 0.4 | | | | | | | | | |
| Red grape juice (5-fold concentrated) | w/w% | | | 0.2 | 0.2 | | | | | | | | | |
| Sugar | w/w% | 0.5 | 0.4 | 1 | 2 | 0.5 | | 1.2 | 1.2 | 0.4 | 1.2 | | | |
| Sucralose | w/w% | 0.01 | 0.01 | | 0.005 | 0.01 | 0.014 | 0.01 | 0.01 | 0.01 | 0.01 | | | |
| Citric acid | ww% | | 0.05 | 0.03 | 0.06 | | 0.15 | | 0.1 | 0.05 | 0.1 | | | |
| Malic acid | w/w% | | 0.07 | | | | | | | 0.07 | | | | |
| Fermented milk | w/w% | | | | | | 0.3 | | | | | | | |
| Lemon flavor | w/w% | 0.05 | | | | 0.05 | | | | | | | | |
| Yoghurt flavor | w/w% | | | | | | 0.09 | | | | | | | |
| Brewed vinegar (content of acetic acid: 15 w/w%) | | Acidity adjustment Acidity adjustment | Acidity adjustment | Acidity adjustment | Acidity adjustment | Acidity adjustment | Acidity adjustment | Acidity adjustment | Acidity adjustment | Acidity adjustment | Acidity adjustment | Acidity adjustment | Acidity adjustment | Acidity adjustment |
| Water | | Remaining amount | Remaining amount | Remaining amount | Remaining amount | Remaining amount | Remaining amount | Remaining amount | Remaining amount | Remaining amount | Remaining amount | Remaining amount | Remaining amount | Remaining amount |
| Total | w/w% | 100 | 100 | 100 | 100 | 100 | 100 | 100 | 100 | 100 | 100 | 100 | 100 | 100 |
| Content of isochlorogenic acid | ppm by mass | 0 | 127 | 178 | 185 | 201 | 165 | 47 | 113 | 1321 | 1.2 | 321 | 423 | 23012 |
| Acidity | w/w% | 0.65 | 0.38 | 0.42 | 0.41 | 0.69 | 0.41 | 0.93 | 0.91 | 0.38 | 0.91 | 6.5 | 0.37 | 13 |
| Ratio of content of isochlorogenic acid (ppm by mass) to acidity (w/w%) | | 0 | 334 | 424 | 451 | 291 | 402 | 50.5 | 124 | 3476 | 1.32 | 49.4 | 1143 | 1770 |
| Content of fruit juice (in straight equivalent) | w/w% | 6 | 1 | 2.3 | 3 | 6 | 0 | 9.5 | 9.5 | 1 | 9.5 | 90 | 80 | 0 |
| Sour taste suppressing effect | | 1 | 4 | 4 | 4 | 4 | 4 | 4 | 4 | 4 | 3 | 4 | 4 | 4 |
| Deterioration smell suppressing effect | | 1 | 4 | 4 | 4 | 4 | 3 | 4 | 4 | 4 | 3 | 4 | 4 | 3 |
| Notes | | | Throat "irritation was strongly suppressed compared to control group | Throat "irritation was slightly suppressed compared to control group | Throat "irritation was slightly suppressed compared to control group | Throat irritation was strongly suppressed compared to control group | | Throat "irritation compared control Throat "irritation was slightly suppressed compared to control group | | Slight bitter taste and astringent taste were felt as compared to control group | Slight astringent taste was felt compared to control group | Throat "irritation was strongly suppressed compared to control group | Throat "irritation was slightly suppressed compared to control group | Throat "irritation was strongly suppressed compared to control group |

**Table 7**

| | Unit | Reference Example 10 | Test Example 47 | Test Example 48 | Test Example 19 | Test Example 50 | Test Example 51 | Test Example 52 | Test Example 53 | Test Example 54 | Test Example 55 |
|---|---|---|---|---|---|---|---|---|---|---|---|
| Sample used | | | Sample 11 | Sample 11 | Sample 11 | Sample 11 | Sample 11 | Sample 11 | Sample 12 | Sample 12 | Sample 11 |
| Apple cider vinegar (content of acetic acid: 6.7 w/w%) | w/w% | | 1.7 | | 1.4 | | | 4 | | 4 | |
| Black vinegar (content of acetic acid: 6.1 w/w%) | w/w% | 14 | | 4 | | 4 | 12 | | 2 | | |
| Apple juice (5-fold concentrated) | w/w% | 1.9 | | | | | 1.9 | 1.9 | | 1.9 | |
| Blueberry juice (6.5-fold concentrated) | w/w% | | | 0.2 | | | | | 0.2 | | |
| Lemon juice (6-fold concentrated) | w/w% | | 1.5 | | | | | | | | 15 |
| Pomegranate juice (5-fold concentrated) | w/w% | | | | 0.4 | | | | | | |
| Red grape juice (5-fold concentrated) | w/w% | | | 0.2 | 0.2 | | | | 0.2 | | |
| Sugar | w/w% | 1.2 | 0.5 | 1 | 2 | | 1.2 | 1.2 | 1 | 1.2 | |
| Sucralose | w/w% | 0.01 | 0.01 | | 0.005 | 0.014 | 0.01 | 0.01 | | 0.01 | |
| Citric acid | w/w% | | | 0.03 | 0.06 | 0.15 | | 0.1 | 0.03 | 0.1 | |
| Malic acid | w/w% | | | | | | | | | | |
| Fermented milk | w/w% | | | | | 0.3 | | | | | |
| Lemon flavor | w/w% | | 0.05 | | | | | | | | |
| Yoghurt flavor | w/w% | | | | | 0.09 | | | | | |
| Brewed vinegar (content of acetic acid: 15 w/w%) | | Acidity adjustment | Acidity adjustment | Acidity adjustment | Acidity adjustment | Acidity adjustment | Acidity adjustment | Acidity adjustment | Acidity adjustment | Acidity adjustment | Acidity adjustment |
| Water | | Remaining amount | Remaining amount | Remaining amount | Remaining amount | Remaining amount | Remaining amount | Remaining amount | Remaining amount | Remaining amount | Remaining amount |
| Total | w/w% | 100 | 100 | 100 | 100 | 100 | 100 | 100 | 100 | 100 | 100 |
| Content of xanthohumol D | ppb by mass | 0 | 10.3 | 13.1 | 8.9 | 9.4 | 32 | 135 | 103 | 2 | 30 |
| Acidity | w/w% | 0.92 | 0.71 | 0.42 | 0.41 | 0.39 | 0.93 | 0.91 | 0.18 | 0.91 | 6.5 |
| Ratio of content of xanthohumol D (ppb by mass) to acidity (w/w%) (ppb | | 0 | 14.5 | 31.2 | 21.7 | 24.1 | 34.4 | 14.8 | 572 | 2.20 | 4.62 |
| Content of fruit juice (in straight equivalent) | w/w% | 9.5 | 9 | 2.3 | 3 | 0 | 9.5 | 9.5 | 2.3 | 9.5 | 90 |
| Sour taste suppressing effect | | 1 | 4 | 4 | 4 | 4 | 4 | 4 | 4 | 4 | 4 |
| Deterioration smell suppressing effect | | 1 | 4 | 4 | 4 | 4 | 4 | 4 | 4 | 4 | 4 |
| Notes | | | Acetic compared control Acetic acid smell was suppressed compared to control group. | Acetic acid smell was suppressed compared to control group. | Acetic acid smell was suppressed compared to control group. | Acetic acid smell was suppressed compared to control group. | Acetic acid smell was suppressed compared to control group. | Acetic acid smell was suppressed compared to control group. | Slight bitter taste and astringent taste were felt compared to control group. Acetic acid smell was suppressed; compared to control group. | Slight astringent taste was felt compared to control group. Acetic acid smell was suppressed compared to control group. | Acetic acid smell was suppressed compared to control group. |

**Table 8**

| | Unit | Reference Example 11 | Test Example 56 | Test Example 57 | Test Example 58 | Test Example 59 | Test Example 60 | Test Example 61 | Test Example 62 | Test Example 63 |
|---|---|---|---|---|---|---|---|---|---|---|
| Sample used | | | Sample 8 | Sample 3 | Sample 1 | Sample 3 | Sample 2 | Sample 7 | Sample 2 | Sample 1 |
| Black vinegar (content of acetic acid: 6.1 w/w%) | w/w% | 15 | 15 | 15 | | | | | | |
| Rice vinegar (content of acetic acid: 4.5 w/w%) | w/w% | | | | | 20 | | | | |
| Sugar | w/w% | 20 | 20 | 20 | 4 | 15 | 2 | | | |
| Salt | w/w% | 4 | 4 | 4 | 2.6 | 3 | | | | |
| Soy sauce | w/w% | 1.5 | 1.5 | 1.5 | 25 | | 2 | | | |
| Kelp stock | w/w% | | | | | 0.6 | | | | |
| Yuzu juice (6-fold concentrated) | w/w% | | | | 1 | | | | | |
| Ground sesame | w/w% | | | | | | 4 | | | |
| Soy milk | | | | | | | 1 | | | |
| Salad oil | | | | | | | 30 | | | |
| Yoghurt (content of lactic acid: 0.7 w/w%, content of lipid: 3.0 w/w%) | w/w% | | | | | | | 95 | 95 | 95 |
| Brewed vinegar (content of acetic acid: 15 w/w%) | | Acidity adjustment | Acidity adjustment | Acidity adjustment | Acidity adjustment | Acidity adjustment | Acidity adjustment | Acidity adjustment | Acidity adjustment | Acidity adjustment |
| Water | | Remaining amount | Remaining amount | Remaining amount | Remaining amount | Remaining amount | Remaining amount | Remaining amount | Remaining amount | Remaining amount |
| Total | w/w% | 100 | 100 | 100 | 100 | 100 | 100 | 100 | 100 | 100 |
| Content of isochlorogenic acid | ppm by mass | 0 | 45 | 45 | 1512 | 1436 | 989 | 110 | 113 | 254 |
| Acidity | w/w% | 4.5 | 4.5 | 4.5 | 1.9 | 3.3 | 0.6 | 1.2 | 1.2 | 1.2 |
| Ratio of content of isochlorogenic acid (ppm by mass) to acidity (w/w%) | | 0 | 10 | 10 | 796 | 435 | 1648 | 92 | 94 | 212 |
| Content of fruit juice (in straight equivalent) | w/w% | 0 | 0 | 0 | 6 | 0 | 0 | 0 | 0 | 0.3 |
| Sour taste suppressing effect | | 1 | 4 | 4 | 4 | 4 | 4 | 4 | 4 | 4 |
| Deterioration smell suppressing effect | | 1 | 4 | 4 | 4 | 4 | 4 | 2 | 2 | 2 |
| Notes | | | Slight astringent taste was felt compared to control group | Throat irritation was slightly suppressed compared to control group | Throat irritation was strongly suppressed compared to control group | Throat irritation was slightly suppressed compared to control group | Throat irritation was slightly suppressed compared to control group | Slight astringent taste was felt compared to control group | Throat irritation was slightly suppressed compared to control group | Throat irritation was strongly suppressed compared to control group |

**Table 9**

| | Unit | Reference Example 12 | Test Example 64 | Test Example 65 | Test Example 66 | Test Example 67 | Test Example 68 |
|---|---|---|---|---|---|---|---|
| Sample used | | | Sample 11 | Sample 11 | Sample 11 | Sample 11 | Sample 11 |
| Black vinegar (content of acetic acid: 6.1 w/w%) | w/w% | 15 | 15 | | | | |
| Rice vinegar (content of acetic acid: 4.5 w/w%) | w/w% | | | | 20 | | |
| Sugar | w/w% | 20 | 20 | 4 | 15 | 2 | |
| Salt | w/w% | 4 | 4 | 2.6 | 3 | | |
| Soy sauce | w/w% | 1.5 | 1.5 | 25 | | 2 | |
| Kelp stock | w/w% | | | | 0.6 | | |
| Yuzu juice (6-fold concentrated) | w/w% | | | 1 | | | |
| Ground sesame | w/w% | | | | | 4 | |
| Soy milk | w/w% | | | | | 1 | |
| Salad oil | w/w% | | | | | 30 | |
| Yoghurt (content of lactic acid: 0.7 w/w%, content of lipid: 3.0 w/w%) | w/w% | | | | | | 95 |
| Brewed vinegar (content of acetic acid: 15 w/w%) | | Acidity adjustment | Acidity adjustment | Acidity adjustment | Acidity adjustment | Acidity adjustment | Acidity adjustment |
| Water | | Remaining amount | Remaining amount | Remaining amount | Remaining amount | Remaining amount | Remaining amount |
| Total | w/w% | 100 | 100 | 100 | 100 | 100 | 100 |
| Content of xanthohumol D | ppb by mass | 0 | 35 | 89 | 14 | 5 | 51 |
| Acidity | w/w% | 4.5 | 4.5 | 1.9 | 3.3 | 0.6 | 1.2 |
| Ratio of content of xanthohumol D (ppb by mass) to acidity (w/w%) | | 0 | 7.78 | 46.84 | 4.24 | 8.33 | 42.5 |
| Content of fruit juice (in straight equivalent) | w/w% | 0 | 0 | 6 | 0 | 0 | 0 |
| Sour taste suppressing effect | | 1 | 4 | 4 | 4 | 4 | 4 |
| Deterioration smell suppressing effect | | 1 | 4 | 4 | 4 | 4 | 4 |
| Notes | | | Acetic acid smell was suppressed compared to control group. | Acetic acid smell was suppressed compared to control group. | Acetic acid smell was suppressed compared to control group. | Acetic acid smell was suppressed compared to control group. | Acetic acid smell was suppressed compared to control group. |

From Tables 6 to 9, it has been found that the sour taste felt on the tongue is suppressed by isochlorogenic acid and xanthohumol D even in various food compositions, and the sour taste can be made mild. Further, it has been found that the deterioration smell can be suppressed by isochlorogenic acid and xanthohumol D. Further, in the test section to which sugar or fruit juice was added, the deterioration smell was significantly suppressed (Note that, the test section in which the score of the deterioration smell suppressing effect was 4 was a test section in which the ratio of the content of isochlorogenic acid (ppm by mass) to the content of protein (ppm by mass) was 0.01 or more, or a test section in which the ratio of the content of xanthohumol D (ppb by mass) to the content of protein (ppm by mass) was 0.01 or more, or a test section containing xanthohumol D and added with a lipidcontaining raw material such as a dairy product or sesame). Further, in Test Examples 47 to 55 and 64 to 68, the acetic acid smell was suppressed similarly to the sour taste. Further, it has been found that in a case where the herb is extracted with a solvent containing acetic acid, the astringent taste is suppressed. Furthermore, it has been found that in a case where chamomile, rosemary, and laurel (in particular, laurel) are extracted with a solvent containing acetic acid, the effect of suppressing throat irritation is achieved. Note that, even when the acidity was adjusted using citric acid instead of brewed vinegar (content of acetic acid: 15 w/w%) and the same test was conducted, similar results were obtained. Further, when Test Example 66 was blended with cooked rice (obtained by cooking white rice at a water addition ratio of 1.4 times) so that the blending amount was 1.0 w/w% (so that the acidity of the cooked rice was 0.033 w/w%), cooked rice with suppressed acetic acid smell was obtained. From the above, it has been shown that the food composition of the present invention can be suitably used as a beverage, a seasoning (in particular, a seasoning vinegar for cooked rice), yoghurt, or cooked rice, and can also be suitably used as a sour taste inhibitor containing isochlorogenic acid and/or xanthohumol D.

### Test 3: Comparison of Peak Area Ratios

From Test 2, it has been shown that the astringent taste is more suppressed when the herb is extracted with a solvent containing acetic acid (solvent having an acidity of 0.2 w/w% or more) than when the herb is extracted with water. Therefore, by measuring Sample 1 and Sample 6 by the following analysis method X' and by measuring Sample 11 and Sample 12 by the above analysis method X, components contributing to the suppression of astringent taste were investigated.

### Analysis method X': liquid chromatography mass spectrometry

### Separation conditions

· Column: ACQUITY UPLC BEH C18 2.1 × 50 mm 1.7 µm Column manufactured by Waters Corporation
· Column temperature: 40°C
· Injection volume: 5 µL
· Flow rate: 0.4 mL/min
· Mobile phase: Solution A (containing formic acid in water at 0.1 v/v%) and Solution B (containing formic acid in acetonitrile at 0.1 v/v%)
· Mobile phase gradient conditions (ratio of mobile phase A to mobile phase B)
   0 - 1.0 min 95%A : 5%B
   1.5 min 90%A : 10%B
   4.5 min 70%A : 30%B
   5.5 min 60%A : 40%B
   7.0 min 50%A : 50%B
   9.5 min 30%A : 70%B
   9.5 - 12.5 min 100%B
   MS conditions: ion source temperature 200°C
   Ionization method: ESI (ionization voltage 5.0 eV)
   MS scan: m/z 50 to 1,500

For each sample, H+ adduct ions were analyzed in positive mode, the component peak in each sample was identified based on quantitative ions (isochlorogenic acid quantitative ions m/z 517.9001 ± 0.02), and the peak area was determined. The results are shown in Tables 10 and 11.

**Table 10**

| | Ratio of peak area of cohumulone to peak area of xanthohumol D | Ratio of peak area of gallic acid to peak area of xanthohumol D | Ratio of sum of peak area of cohumulone and peak area of gallic acid to peak area of xanthohumol D |
|---|---|---|---|
| Sample 12 | 17.9 | 24.5 | 42.5 |
| Sample 11 | 0.23 | 0.01 | 0.23 |

**Table 11**

| | Ratio of peak area of component Z to peak area of isochlorogenic acid |
|---|---|
| Sample 6 | 10.96 |
| Sample 1 | 0.06 |

From Tables 10 and 11, it has been shown that when the ratio of the peak area of cohumulone and/or gallic acid to the peak area of xanthohumol D as measured by the analysis method X is a predetermined value or less, the astringent taste may be suppressed. Further, it has been shown that when the ratio of the peak area of component Z to the peak area of isochlorogenic acid as measured by the analysis method X' is a predetermined value or less, the astringent taste may be suppressed. Note that, the component Z was a component having a peak at m/z 603.17097 ± 0.02 eluted at around a retention time of 3.2 min when measured by the analysis method X'.

### Test 4: Extraction Efficiency of Component Depending on Differences in Solvent

Test 3 suggested that the characteristics of the obtained herb extract differ depending on the extraction solvent. Therefore, in this test, an extract of hop was prepared using a plurality of solvents, and the characteristics depending on differences in solvents were examined. Specifically, solvents were prepared by appropriately mixing brewed vinegar (acidity: 15 w/w%), citric acid, ethanol, glacial acetic acid, and water so as to have the composition shown in Table 12, commercially available hops were added to these solvents (using 20 g of solvent per 1 g of hop), the mixture was kept at 30°C for 0.5 hours (30 minutes), and then the hops were removed to obtain Samples 13 to 16 as a hop extract. Note that the extraction of xanthohumol D was performed with stirring using a tabletop stirrer (Stirrer ZZ-1010 type; manufactured by TOKYO RIKAKIKAI CO., LTD.) at a rotation speed of 150 rpm. For the obtained sample, the extraction efficiency depending on differences in solvent was examined by measuring the content of xanthohumol D. Further, one of Samples 13 to 16, brewed vinegar (acidity: 15 w/w%), glacial acetic acid, and water were appropriately blended so as to have the composition shown in Table 13, thereby preparing food compositions of Test Examples 70 to 73. Further, samples, having the same composition as that of Samples 13 to 16 except that no hop was extracted, were prepared, and these samples were appropriately blended to prepare control test products corresponding to Test Examples 70 to 73, and the sour taste and acetic acid smell were evaluated in the same manner as in Test 1. The results are shown in Table 13.

**Table 12**

| | | Unit | Sample 13 | Sample 14 | Sample 15 | Sample 16 |
|---|---|---|---|---|---|---|
| Solvent composition | Content of acetic acid | w/w% | 15 | 0 | 3.6 | 0 |
| | Content of citric acid | w/w% | 0 | 15 | 0 | 0 |
| | Content of ethanol | w/w% | 0.13 | 0 | 55 | 95 |
| | Water | | Remaining amount | Remaining amount | Remaining amount | Remaining amount |
| | Total | w/w% | 100 | 100 | 100 | 100 |
| Extraction conditions | Extraction time | Time | 0.5 | 0.5 | 0.5 | 0.5 |
| | Extraction temperature | °C | 30 | 30 | 30 | 30 |
| | Stirring speed | rpm | 150 | 150 | 150 | 150 |
| Content of xanthohumol D | | ppb by mass | 128 | 57 | 699 | 1129 |

**Table 13**

| | Unit | Test Example 70 | Test Example 71 | Test Example 72 | Test Example 73 |
|---|---|---|---|---|---|
| Sample used | | Sample 13 | Sample 14 | Sample 15 | Sample 16 |
| Brewed vinegar (acidity: 15 w/w%) | w/w% | 5 | 5 | 5 | 5 |
| Glacial acetic acid | | Acidity adjustment | Acidity adjustment | Acidity adjustment | Acidity adjustment |
| Water | | Remaining amount | Remaining amount | Remaining amount | Remaining amount |
| Total | w/w% | 100 | 100 | 100 | 100 |
| Content of xanthohumol D | ppb by mass | 7.5 | 7.5 | 7.5 | 7.5 |
| Acidity | w/w% | 15 | 15 | 15 | 15 |
| Ratio of content of xanthohumol D (ppb by mass) to acidity (w/w%) | | 0.5 | 0.5 | 0.5 | 0.5 |
| Sour taste suppressing effect | | 4 | 4 | 4 | 4 |
| Acetic acid smell suppressing effect | | 4 | 4 | 4 | 4 |
| Notes | | | | | Slightly astringent taste was felt |

From Table 12, it has been shown that the extraction efficiency of xanthohumol D can be improved by using a solvent containing ethanol. Further, from Table 13, it has been shown that the astringent taste of the hops is suppressed by extracting hops with a solvent containing an organic acid.

## Claims

1. A food composition satisfying the following requirements (a) and (b) :
(a) an acidity is 0.02 w/w% or more; and
(b) the following requirements (i) and/or (ii):
(i) a ratio of a content of isochlorogenic acid (ppm by mass) to the acidity (w/w%) is 0.5 or more; and/or
(ii) a ratio of a content of xanthohumol D (ppb by mass) to the acidity (w/w%) is 0.00001 or more.

2. The food composition according to claim 1, wherein the ratio of the content of isochlorogenic acid (ppm by mass) to the acidity (w/w%) is 50,000 or less.

3. The food composition according to claim 1 or 2, wherein the ratio of the content of xanthohumol D (ppb by mass) to the acidity (w/w%) is 1,000 or less.

4. The food composition according to any one of claims 1 to 3,
wherein the content of isochlorogenic acid is 3 to 70,000 ppm by mass.

5. The food composition according to any one of claims 1 to 4,
wherein the content of xanthohumol D is 0.0001 to 10,000 ppb by mass.

6. The food composition according to any one of claims 1 to 5,
wherein the acidity is 20 w/w% or less.

7. The food composition according to any one of claims 1 to 6,
wherein the pH at 20°C and 1 atm is 4.6 or less.

8. The food composition according to any one of claims 1 to 7, comprising at least one organic acid selected from the group consisting of acetic acid, citric acid, lactic acid, malic acid, gluconic acid, tartaric acid, formic acid, propionic acid, butyric acid, valeric acid, isovaleric acid, caproic acid, and fumaric acid.

9. The food composition according to any one of claims 1 to 8, satisfying at least one requirement selected from the group consisting of the following requirements (c) to (e):
Requirement (c): the ratio of the content of acetic acid (w/w%) to the acidity (w/w%) in the food composition is 0.1 or more;
Requirement (d): the ratio of the content of lactic acid (w/w%) to the acidity (w/w%) in the food composition is 0.1 or more; and
Requirement (e): the ratio of the content of citric acid (w/w%) to the acidity (w/w%) in the food composition is 0.1 or more.

10. The food composition according to any one of claims 1 to 9, comprising an extract of herbs.

11. The food composition according to any one of claims 1 to 10,
wherein the herb is at least one selected from the group consisting of hop, rosemary, chamomile, chrysanthemum, wormwood, and laurel.

12. The food composition according to any one of claims 1 to 11,
wherein the ratio of a peak area of cohumulone to a peak area of xanthohumol D in a case where the food composition is measured by liquid chromatography mass spectrometry (an analysis method X) is 17 or less.

13. The food composition according to any one of claims 1 to 12,
wherein the ratio of the peak area of gallic acid to the peak area of xanthohumol D in a case where the food composition is measured by liquid chromatography mass spectrometry (an analysis method X) is 24 or less.

14. The food composition according to any one of claims 1 to 13,
wherein the ratio of a sum of the peak area of cohumulone and the peak area of gallic acid to the peak area of xanthohumol D in a case where the food composition is measured by liquid chromatography mass spectrometry (an analysis method X) is 42 or less.

15. The food composition according to any one of claims 1 to 14, wherein, in a case where the food composition is measured by liquid chromatography mass spectrometry (an analysis method X'), the ratio of the peak area of a component Z having a peak at m/z 603.17097 ± 0.02 eluted at around a retention time of 3.2 min, to the peak area of isochlorogenic acid in a case where the food composition is measured by liquid chromatography mass spectrometry (an analysis method X'), is 10 or less.

16. The food composition according to any one of claims 1 to 15, comprising fruit juice.

17. The food composition according to any one of claims 1 to 16, comprising brewed vinegar.

18. A method for producing a food composition, comprising adding isochlorogenic acid and/or xanthohumol D to a food composition having an acidity of 0.02 w/w% or more so as to satisfy the following requirement (b):
(b) the following requirements (i) and/or (ii):
(i) a ratio of a content of isochlorogenic acid (ppm by mass) to the acidity (w/w%) is 0.5 or more; and/or
(ii) a ratio of a content of xanthohumol D (ppb by mass) to the acidity (w/w%) is 0.00001 or more.

19. A method for producing a food composition, comprising the following steps (A) to (C):
(A) a step of preparing a solvent having an acidity of 0.2 w/w% or more;
(B) a step of adding at least one herb containing isochlorogenic acid and/or xanthohumol D to the solvent obtained in step (A); and
(C) a step of keeping a mixture of the solvent and plant at a temperature of higher than 0°C and 70°C or lower for 0.5 to 72 hours starting from a point of time when the step (B) was performed, and then removing the herb.

20. The production method according to claim 19, wherein a ratio of a content of acetic acid (w/w%) to the acidity (w/w%) in the solvent is 0.1 or more.

21. The production method according to claim 19 or 20, further comprising the following step (D):
(D) a step of preparing a food composition by adding and incorporating the composition obtained in the step (C).

22. The production method according to claim 19 or 20, being a method for producing the food composition according to any one of claims 1 to 17

23. A method for making a sour taste of a food composition a moderate sour taste and/or a mild sour taste by preparing a food composition so as to satisfy the following requirements (a) and (b):
(a) an acidity is 0.02 w/w% or more; and
(b) the following requirements (i) and/or (ii):
(i) a ratio of a content of isochlorogenic acid (ppm by mass) to the acidity (w/w%) is 0.5 or more; and/or
(ii) a ratio of a content of xanthohumol D (ppb by mass) to the acidity (w/w%) is 0.00001 or more.

24. A sour taste inhibitor comprising isochlorogenic acid and/or xanthohumol D used so as to satisfy the following requirement (b) in a food composition having an acidity of 0.02 w/w% or more:
(b) the following requirements (i) and/or (ii):
(i) a ratio of a content of isochlorogenic acid (ppm by mass) to the acidity (w/w%) is 0.5 or more; and/or
(ii) a ratio of a content of xanthohumol D (ppb by mass) to the acidity (w/w%) is 0.00001 or more.
